(19)

Europäisches Patentamt
European Patent Office
Office européen des brevets

(11)  **EP 4 083 960 A1**

(12)  **EUROPEAN PATENT APPLICATION**
published in accordance with Art. 153(4) EPC

(43) Date of publication:
**02.11.2022  Bulletin 2022/44**

(21) Application number: **20906067.2**

(22) Date of filing: **26.11.2020**

(51) International Patent Classification (IPC):
*G08G 1/09* (2006.01)    *G08G 1/16* (2006.01)
*G01C 21/36* (2006.01)

(52) Cooperative Patent Classification (CPC):
**G01C 21/36; G08G 1/09; G08G 1/16**

(86) International application number:
**PCT/JP2020/043962**

(87) International publication number:
**WO 2021/131474 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2019  JP 2019236414**

(71) Applicant: **Sony Semiconductor Solutions
Corporation
Atsugi-shi, Kanagawa 243-0014 (JP)**

(72) Inventor: **OBA, Eiji
Atugi-shi, Kanagawa 243-0014 (JP)**

(74) Representative: **Witte, Weller & Partner
Patentanwälte mbB
Postfach 10 54 62
70047 Stuttgart (DE)**

(54)  **INFORMATION PROCESSING DEVICE, MOVEMENT DEVICE, INFORMATION PROCESSING SYSTEM, METHOD, AND PROGRAM**

(57)    Display data which has information set on a traveling route of a vehicle and indicating offerability of a remote driving assistance service of a control center is generated and displayed. A data processing unit is provided as a unit that generates traveling section display data that has section information indicating an automated driving section and a manual driving section on a traveling route of a vehicle and further generates display data that has information set to indicate offerability of a remote driving assistance service of a control center as additional information associated with a traveling position included in the traveling section display data. The data processing unit generates display data that has an icon which indicates offerability of the remote driving assistance service and which is set in association with a traveling position according to the traveling section display data.

FIG.32

TRAVELING SECTION DISPLAY DATA

4G
5G

51 CONTROLLER ICON   52 REMOTE DRIVING ASSISTANCE OPERATOR ICON   53 LEADING VEHICLE ICON   54 CONTROL CENTER ICON

EP 4 083 960 A1

**Description**

[Technical Field]

The present disclosure relates to an information processing device, a mobile apparatus, an information processing system, an information processing method, and a program. More specifically, the present disclosure relates to an information processing device, a mobile apparatus, an information processing system, an information processing method, and a program for achieving safe traveling of a mobile apparatus, such as a vehicle, capable of switching between automated driving and manual driving.

[Background Art]

Technologies relating to automated driving have been actively developed in recent years. An automated driving technology is a technology which achieves automated traveling on a road with use of position detection means provided on a vehicle (car), and various sensors necessary for detection, recognitive determination, and the like of an ambient environment affecting a traveling route of an own vehicle. This type of technology is expected to rapidly spread in the future. Note that PTL 1 (JP 2015-141051A) is an example of a conventional technology which discloses a technology relating to an automated driving system.

However, automated driving still remains in a development stage in current circumstances. It is thus considered that enormous infrastructure investment and time are required to achieve seamless and 100% automated driving in an environment where various types of ordinary vehicles are travelable.

It is necessary to allow free movement between any two points in view of usability of vehicles such as a conventional type private car. For achieving this purpose, it is predicted that traveling with appropriate switching between automated driving and manual driving by a driver according to infrastructure or a road situation will be still needed for the time being.

However, it may be difficult for a driver to transit from automated driving to manual driving in a certain case. In such a case, it is effective to drive a vehicle according to remote assistance, i.e., according to instructions from a controller of an outside control center or under remote control by an operator of an outside control center. For realizing spread of automated driving vehicles, it is necessary to construct configurations for giving instructions from the controller and remote control from the operator. However, no specific proposal has been presented yet concerning these configurations in current circumstances.

[Citation List]

[Patent Literature]

  [PTL 1]
  JP 2015-141051A
  [PTL 2]
  PCT Patent Publication No. WO2019/097944

[Summary]

[Technical Problem]

The present disclosure has been developed in consideration of the above-mentioned problem, for example. It is an object of the present disclosure to provide an information processing device, a mobile apparatus, an information processing system, an information processing method, and a program for achieving safe traveling by giving instructions from a controller and remote control from an operator to a mobile apparatus, such as a vehicle, capable of switching between automated driving and manual driving.

[Solution to Problem]

A first aspect of the present disclosure is directed to an information processing device including a data processing unit that generates traveling section display data that has section information indicating an automated driving section and a manual driving section on a traveling route of a vehicle and further generates display data that has information set to indicate offerability of a remote driving assistance service of a control center as additional information associated with a traveling position included in the traveling section display data.

Moreover, a second aspect of the present disclosure is directed to a mobile apparatus that is a mobile apparatus capable of switching between automated driving and manual driving. The mobile apparatus includes a driver information acquisition unit that acquires driver information associated with a driver of the mobile apparatus, an environmental information acquisition unit that acquires ambient information around the mobile apparatus, and a data processing unit that generates traveling section display data for allowing identification of at least an automated driving allowed section and a manual driving section on a traveling route of a vehicle. The data processing unit generates display data that has information set to indicate offerability of a remote driving assistance service of a control center as additional information associated with a traveling position included in the traveling section display data.

Further, a third aspect of the present disclosure is directed to an information processing system including a mobile apparatus and a control center. The control center transmits information indicating offerability of a remote driving assistance service to the mobile apparatus. The mobile apparatus includes a data processing unit that generates traveling section display data that has section information indicating an automated driving section and a manual driving section on a traveling route of a vehicle and further generates display data that has information set to indicate offerability of the remote driving assistance service of the control center as additional information associated with a traveling position included in the traveling section display data.

In addition, a fourth aspect of the present disclosure is directed to an information processing method executed by an information processing device. The method includes, by a data processing unit of the information processing device, generating traveling section display data that has section information indicating an automated driving section and a manual driving section on a traveling route of a vehicle and further generating display data that has information set to indicate offerability of a remote driving assistance service of a control center as additional information associated with a traveling position included in the traveling section display data.

Besides, a fifth aspect of the present disclosure is directed to a program that causes an information processing device to execute information processing. The program causes a data processing unit of the information processing device to generate traveling section display data that has section information indicating an automated driving section and a manual driving section on a traveling route of a vehicle and further generate display data that has information set to indicate offerability of a remote driving assistance service of a control center as additional information associated with a traveling position included in the traveling section display data.

Note that the program according to the present disclosure is a program providable using a recording medium or a communication medium provided in a computer-readable form for an information processing device or a computer system capable of executing various program codes, for example. Under such a program provided in a computer-readable form, processes corresponding to the program are implemented on the information processing device or the computer system.

Other objects, characteristics, and advantages of the present disclosure will become apparent by more detailed description based on an embodiment of the present disclosure described below and appended drawings. Note that the system in the present description refers to a logical set configuration constituted by a plurality of devices. The devices of the respective configurations are not necessarily limited to devices accommodated in the same housing.

[Advantageous Effect of Invention]

Provided according to an embodiment of the present disclosure is a configuration for generating and displaying display data which has information that is set on a traveling route of a vehicle and that indicates offerability of a remote driving assistance service of a control center.

Specifically, for example, the configuration includes a data processing unit that generates traveling section display data that has section information indicating an automated driving section and a manual driving section on a traveling route of a vehicle and that further generates display data that has information set to indicate offerability of a remote driving assistance service of a control center as additional information associated with a traveling position included in the traveling section display data. The data processing unit generates display data that has an icon which indicates offerability of the remote driving assistance service and which is set in association with a traveling position according to the traveling section display data.

This configuration provides such a configuration which generates and displays display data that is set on a traveling route of a vehicle and that indicates offerability of a remote driving assistance service of a control center.

Note that advantageous effects described in the present description are presented only by way of example. Advantageous effects to be produced are not limited to these effects. In addition, additional advantageous may be offered.

[Brief Description of Drawings]

[FIG. 1]

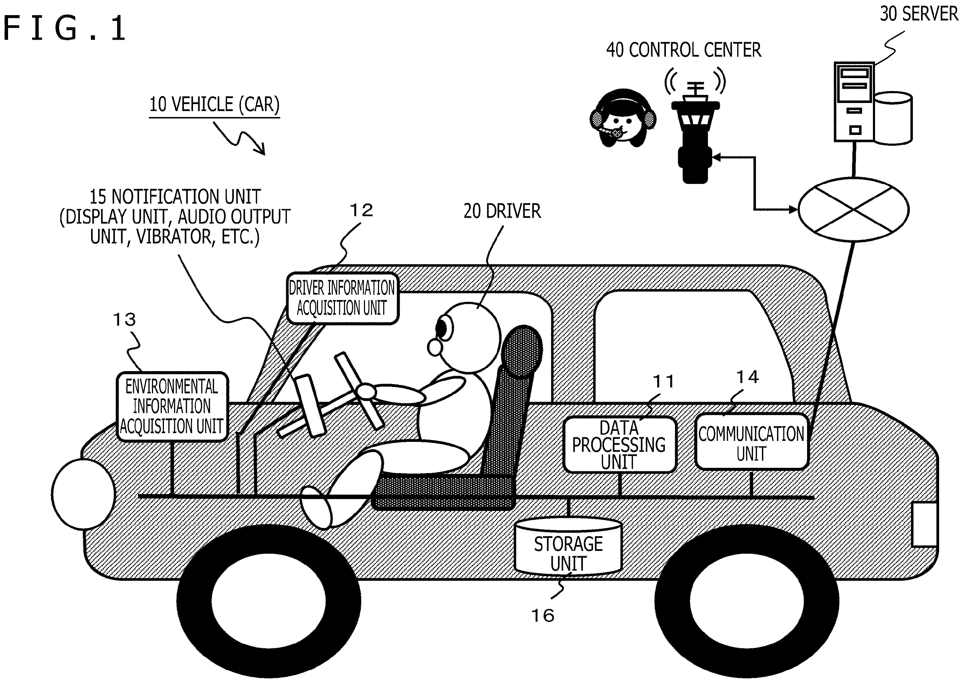

FIG. 1 is a diagram explaining a configuration example of a mobile apparatus of the present disclosure.
[FIG. 2]

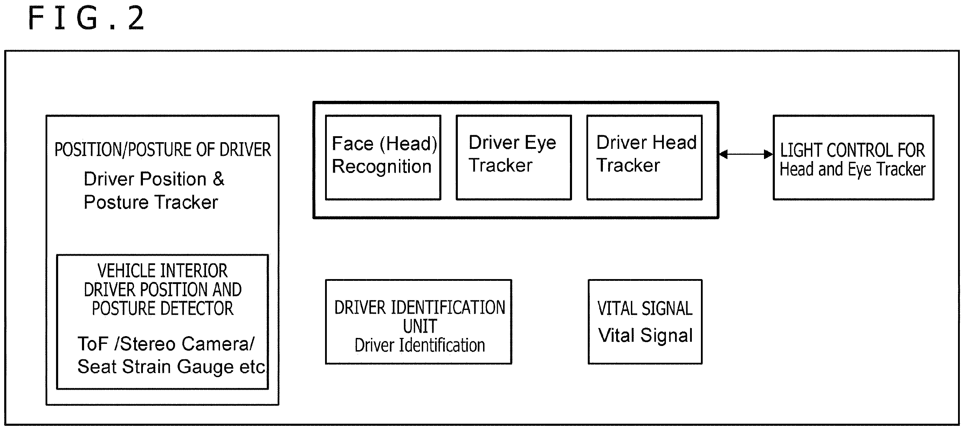

FIG. 2 is a diagram explaining a configuration example of a driver information acquisition unit of the mobile apparatus of the present disclosure.
[FIG. 3]

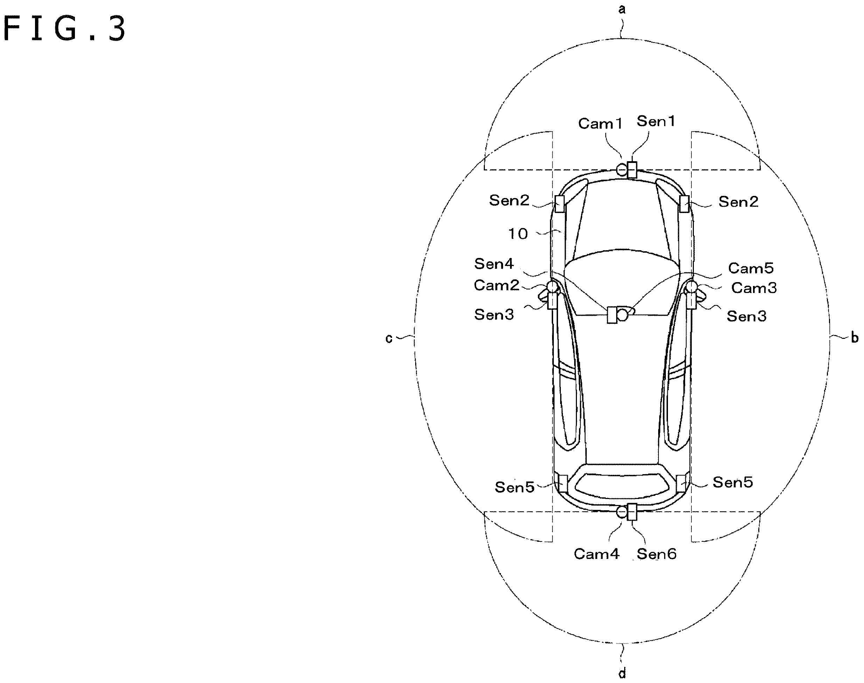

FIG. 3 is a diagram explaining a configuration example of sensors of an environmental information acquisition unit of the mobile apparatus of the present disclosure.
[FIG. 4]

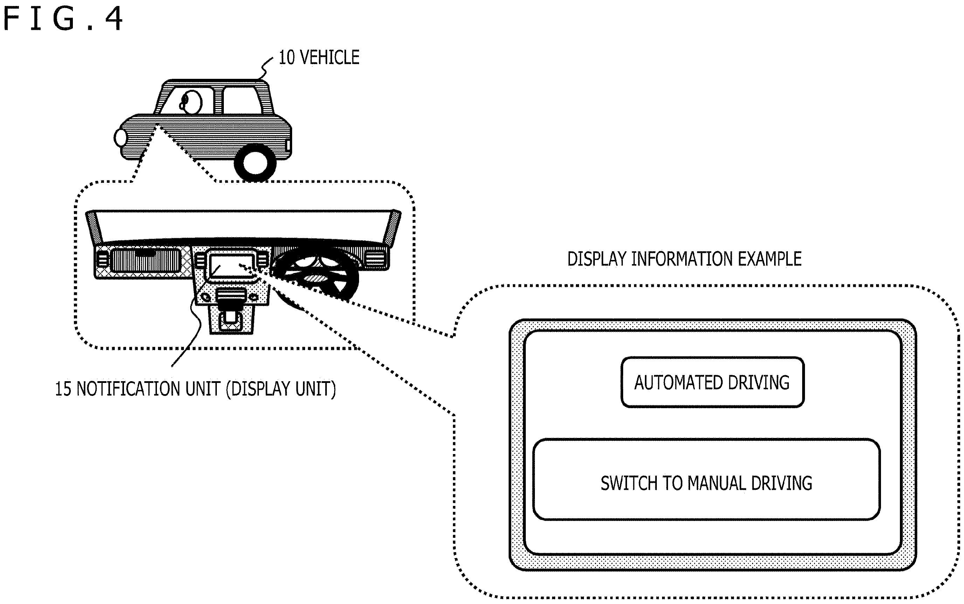

FIG. 4 is a diagram explaining an example of data displayed on a display unit of the mobile apparatus of the present disclosure.
[FIG. 5]

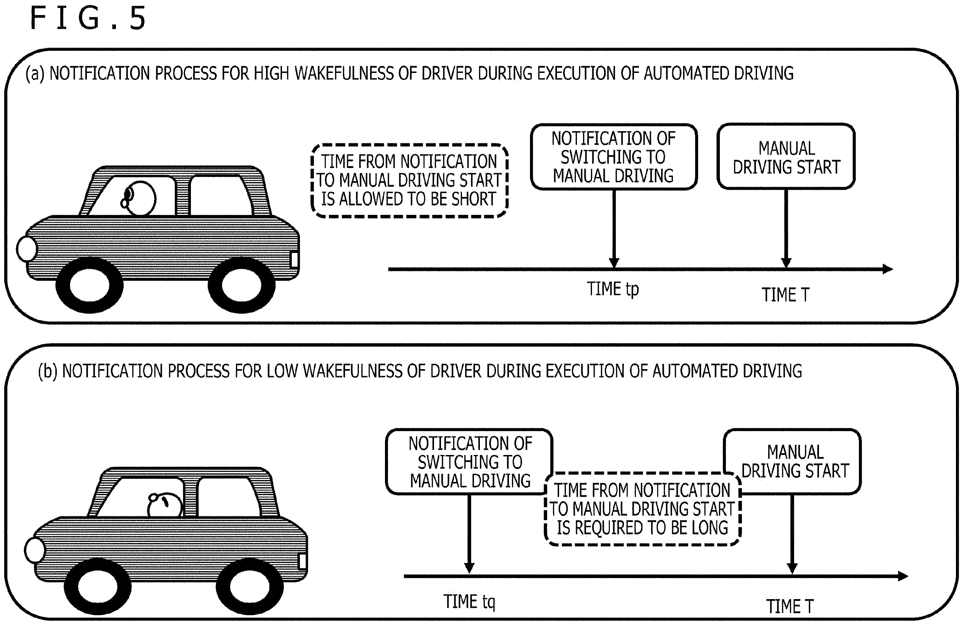

FIG. 5 is a diagram explaining processes executed by the mobile apparatus of the present disclosure.
[FIG. 6]

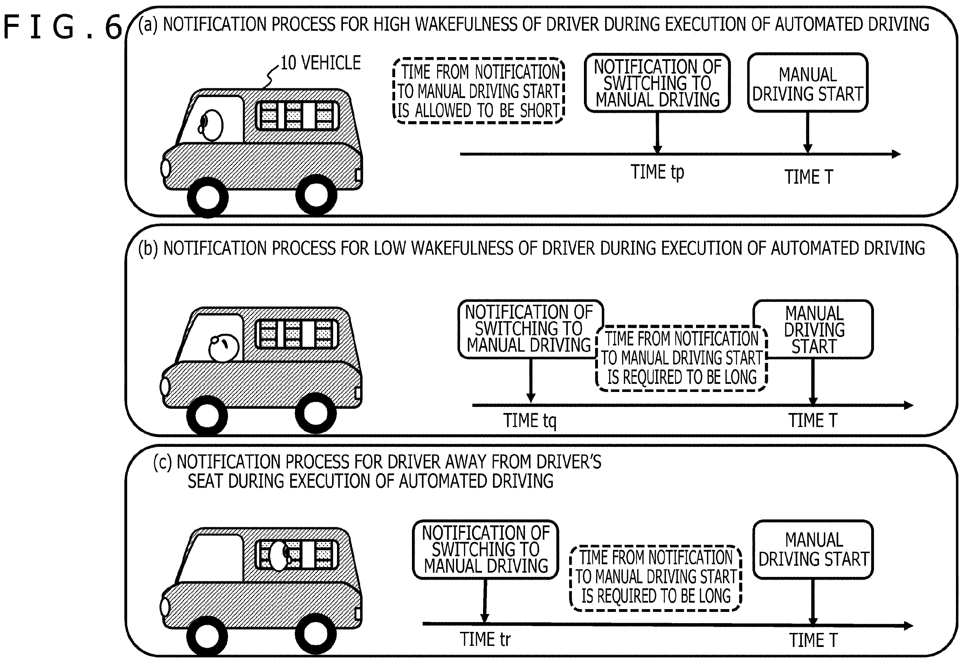

FIG. 6 is a diagram explaining processes executed by the mobile apparatus of the present disclosure.
[FIG. 7]

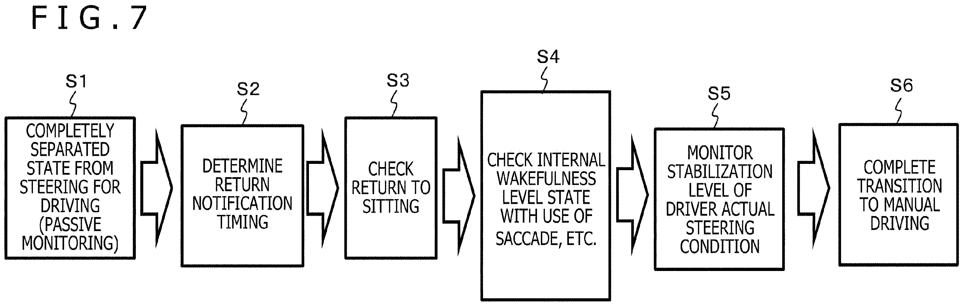

FIG. 7 is a diagram depicting an example of a mode switching sequence which switches from an automated driving mode to a manual driving mode and is executed by the mobile apparatus of the present disclosure.

[FIG. 8]

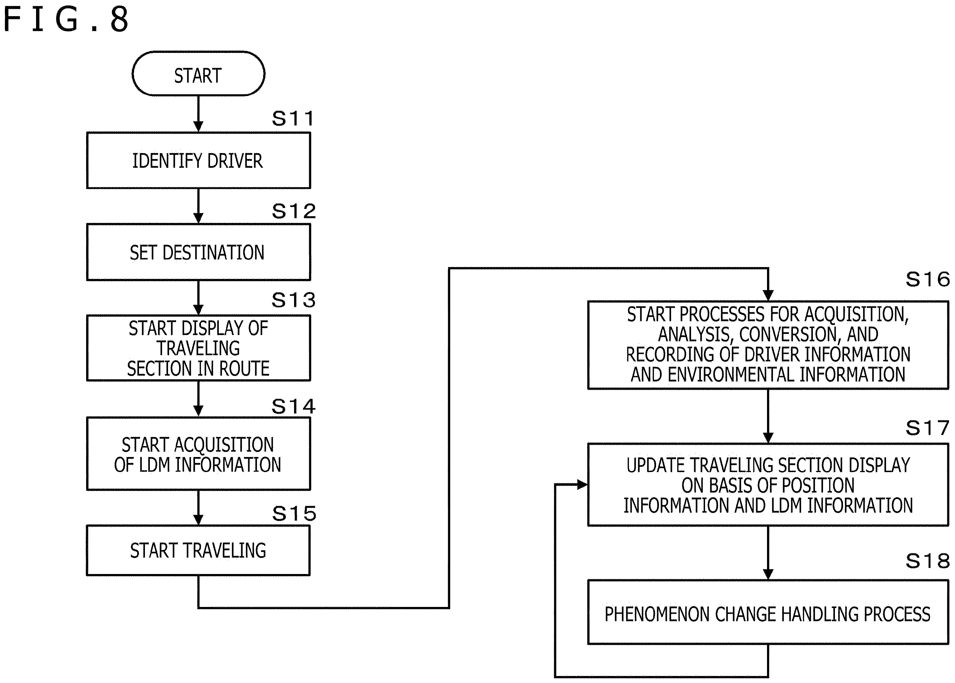

FIG. 8 is a diagram presenting a flowchart explaining an example of an operation sequence of automated driving.

[FIG. 9]

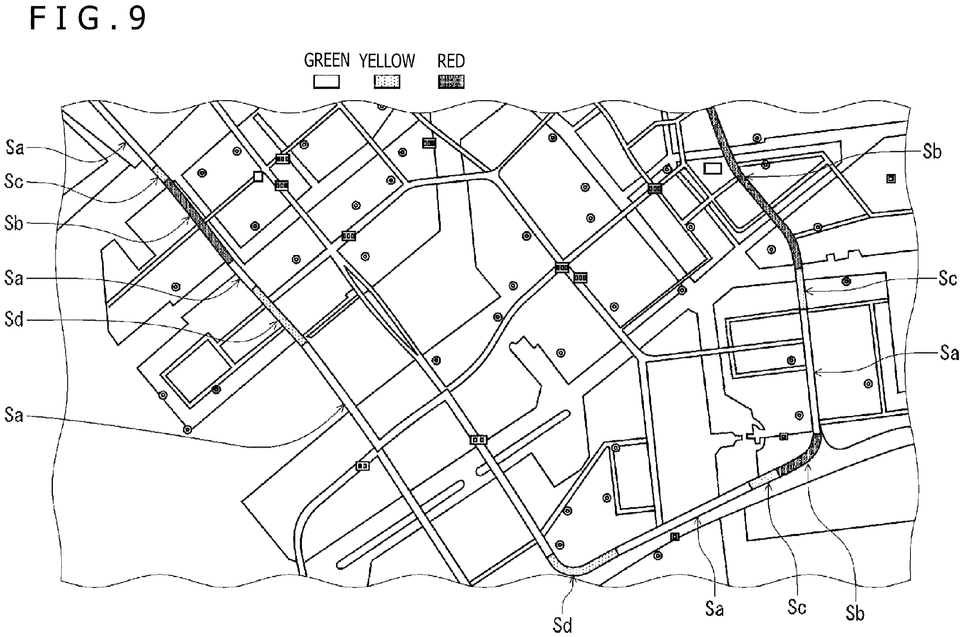

FIG. 9 is a diagram depicting an example of a traveling route which has spots set or generated as automated driving allowed or prohibited sections determined according to a destination set by a driver.

[FIG. 10]

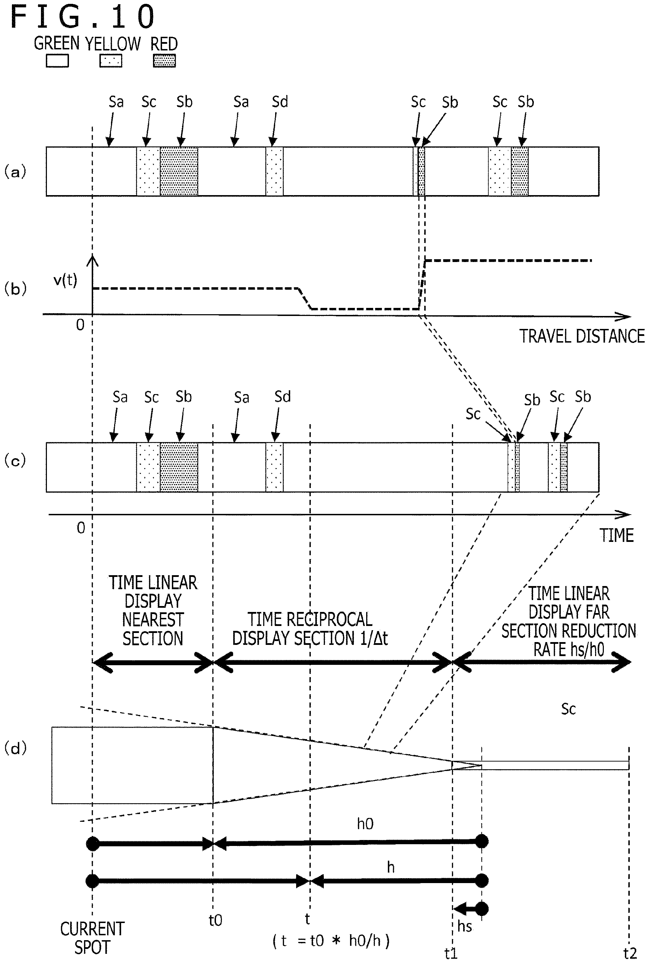

FIG. 10 is a diagram explaining information processing for traveling section display in a traveling route.

[FIG. 11]

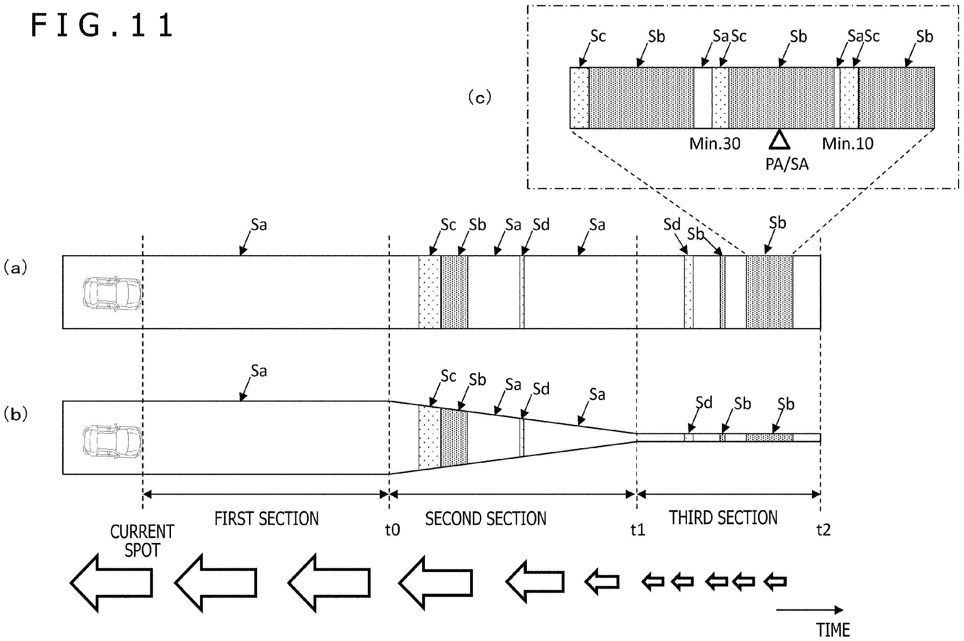

FIG. 11 depicts diagrams each depicting an example of traveling section display finally displayed.

[FIG. 12]

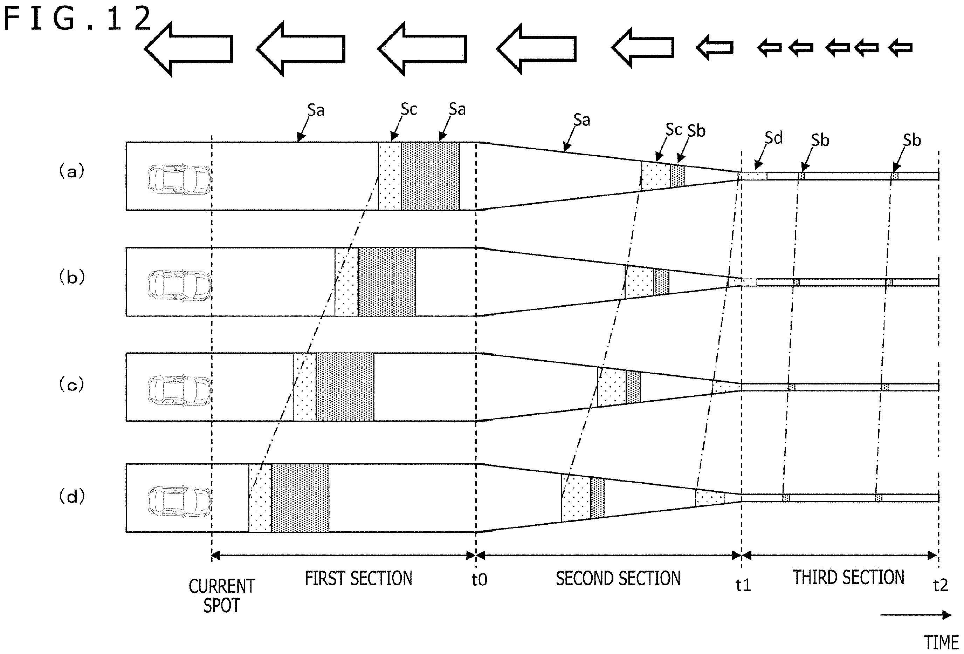

FIG. 12 depicts diagrams each depicting a change example (scroll example) of traveling section display with an elapse of time.

[FIG. 13]

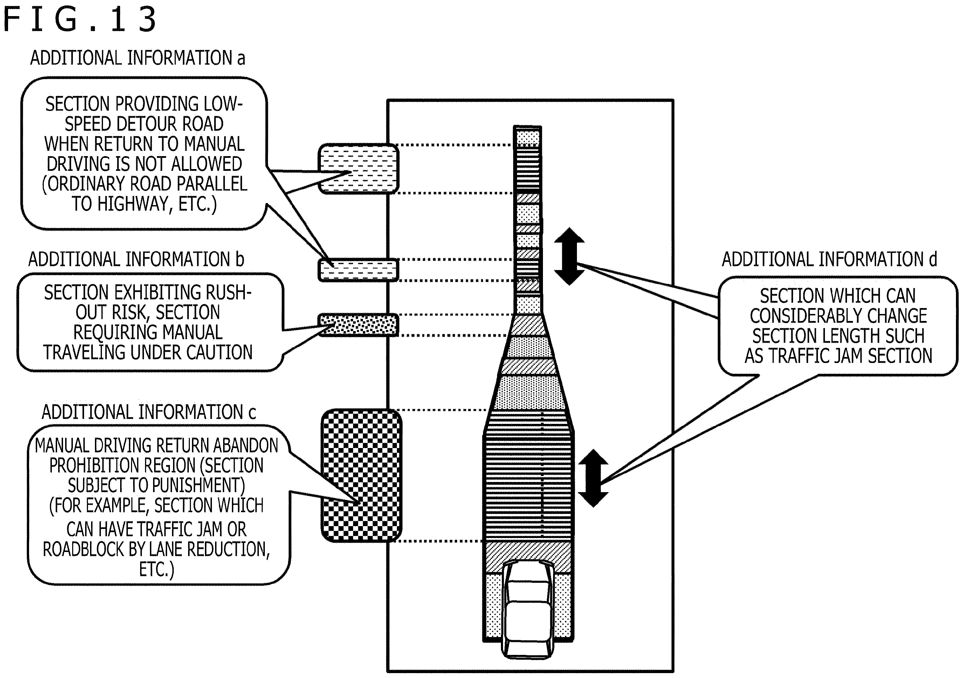

FIG. 13 is a diagram explaining an additional display example of additional information added to traveling section display data.

[FIG. 14]

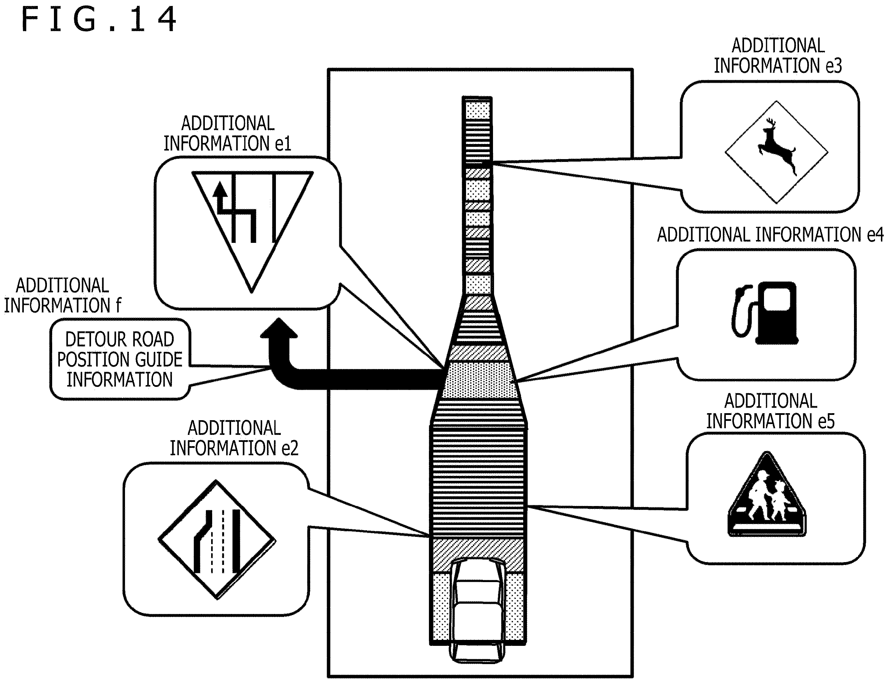

FIG. 14 is a diagram explaining an additional display example of additional information added to traveling section display data.

[FIG. 15]

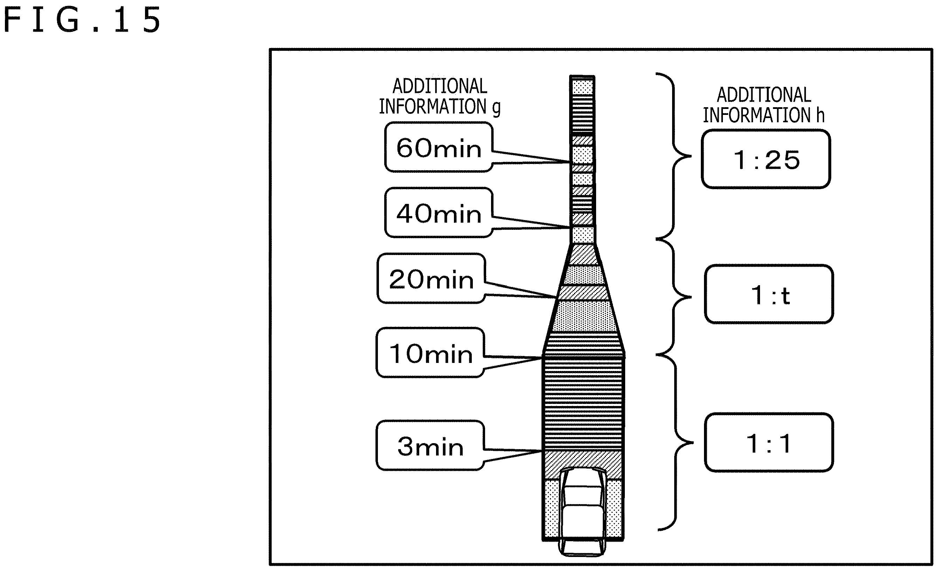

FIG. 15 is a diagram explaining an additional display example of additional information added to traveling section display data.

[FIG. 16]

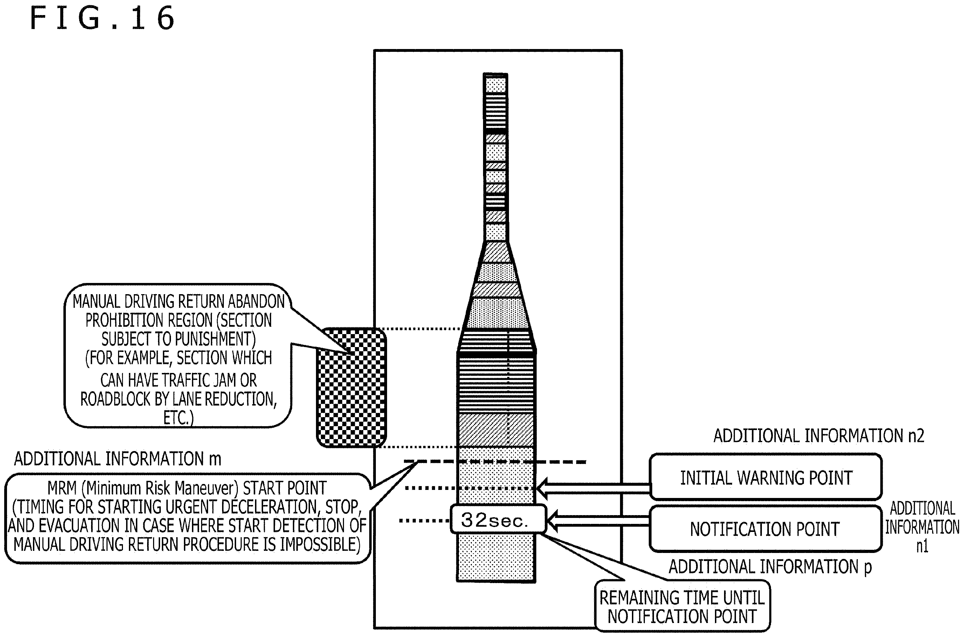

FIG. 16 is a diagram explaining an additional display example of additional information added to traveling section display data.

[FIG. 17]

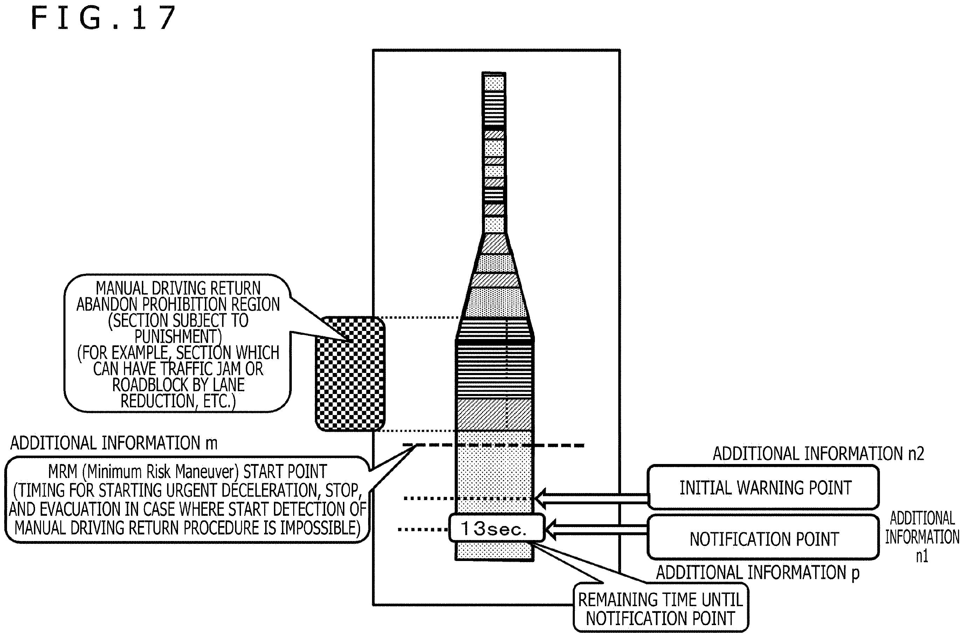

FIG. 17 is a diagram explaining an additional display example of additional information added to traveling section display data.

[FIG. 18]

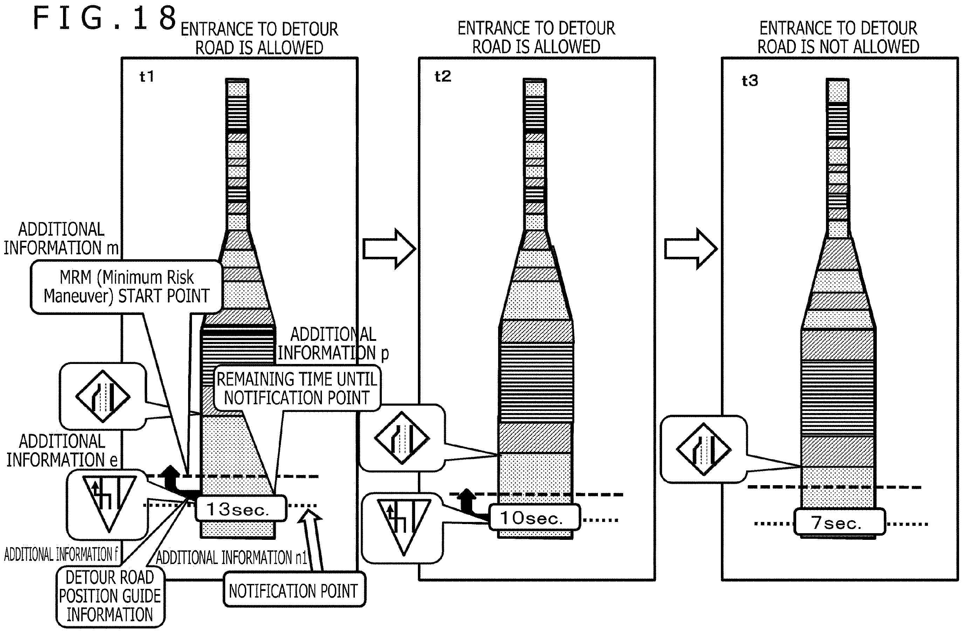

FIG. 18 is a diagram explaining an additional display example of additional information added to traveling section display data.

[FIG. 19]

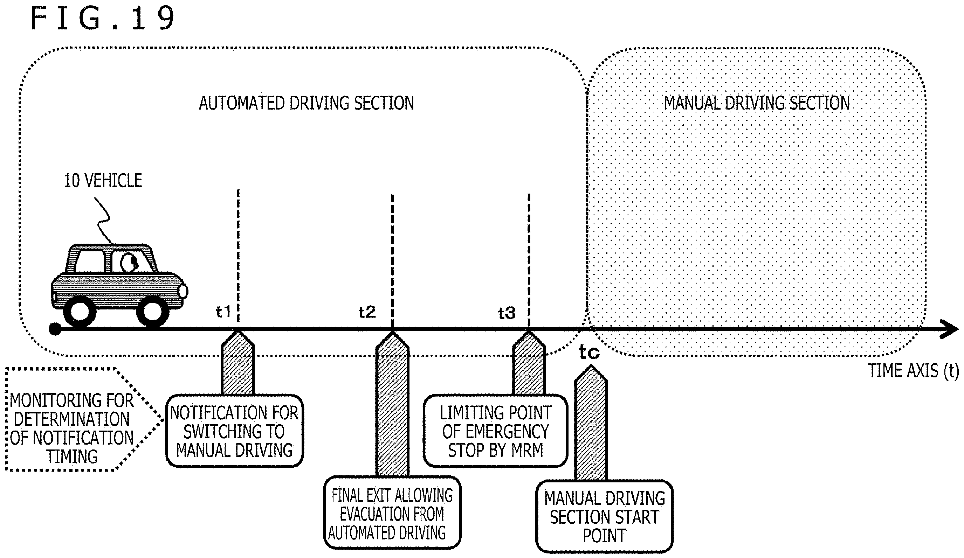

FIG. 19 is a diagram explaining an example of a transition process from automated driving to manual driving.

[FIG. 20]

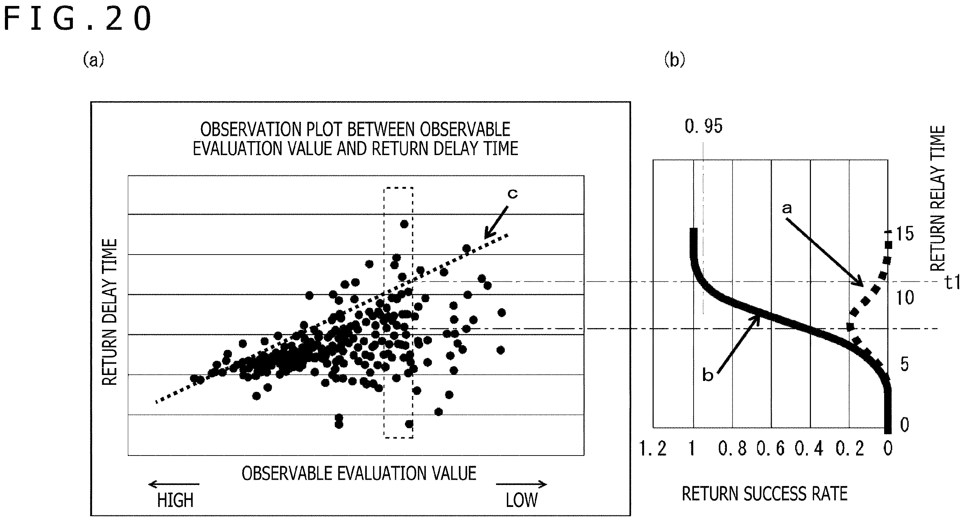

FIG. 20 is a diagram explaining a distribution example of a plurality of pieces of information (observation plots) associated with a relation between an observable evaluation value corresponding to an observation value and to a return delay time (i.e., manual driving return allowed time) and a return success rate.

[FIG. 21]

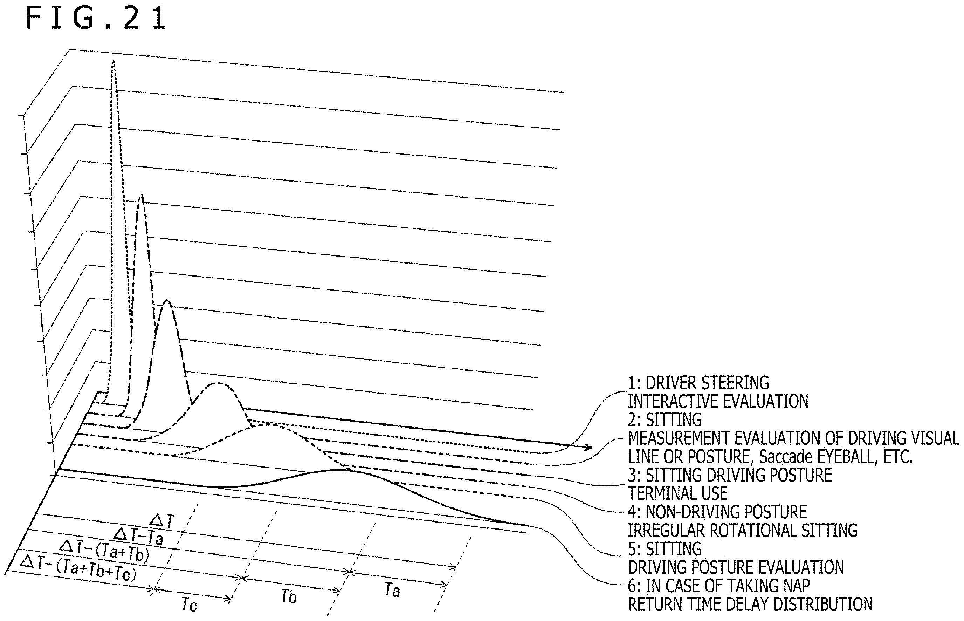

FIG. 21 is a chart explaining a manual driving return allowed time according to a type of a process executed by the driver in the automated driving mode (secondary task).

[FIG. 22]

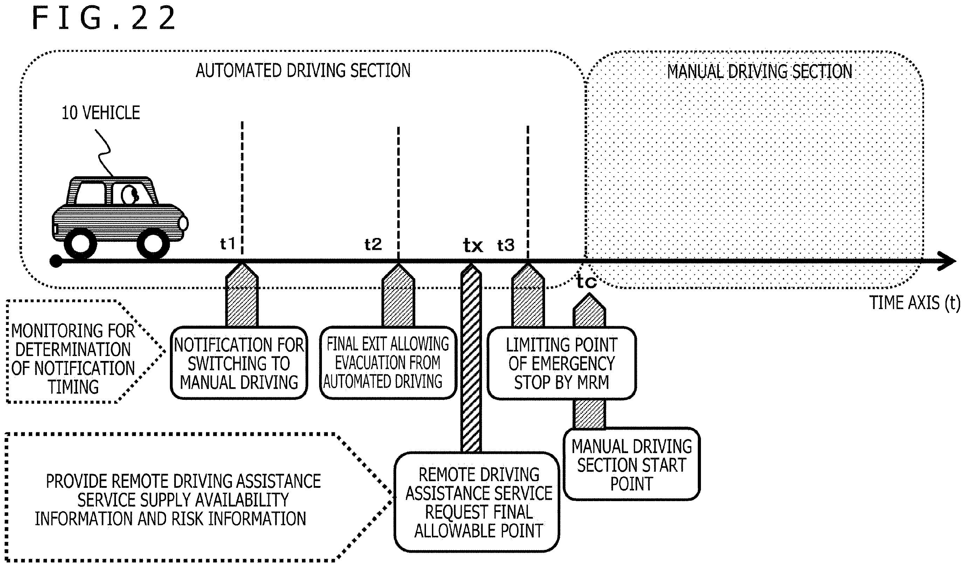

FIG. 22 is a diagram depicting an example of a transition process from automated driving to manual driving.

[FIG. 23]

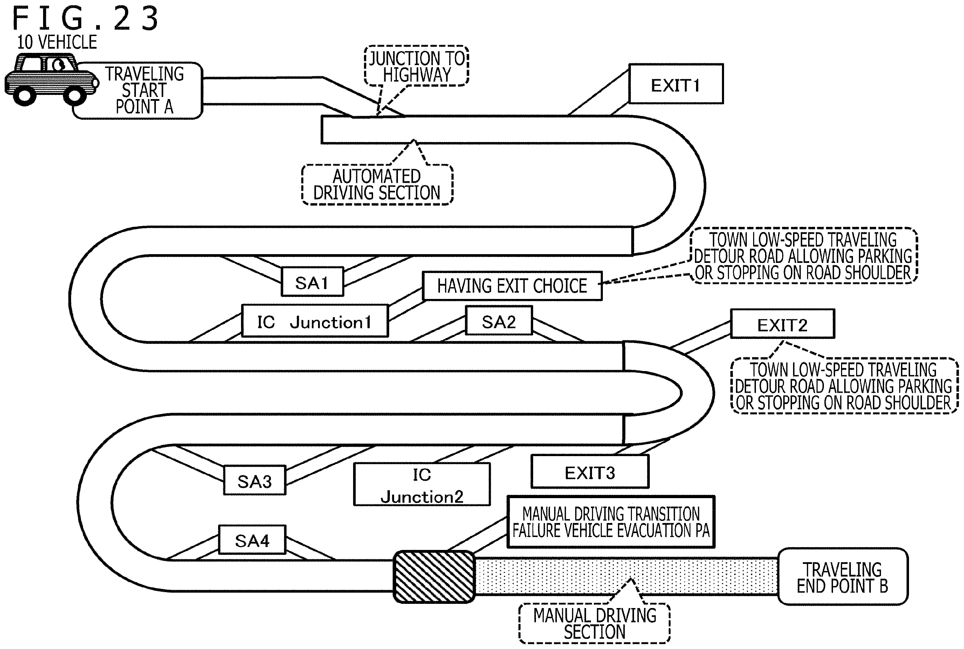

FIG. 23 is a diagram explaining an example of display data of traveling route information.

[FIG. 24]

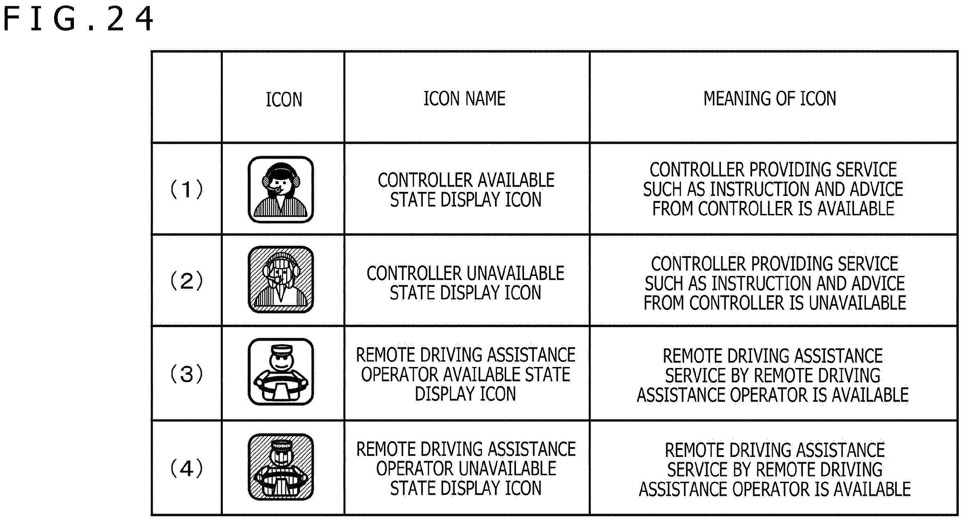

FIG. 24 is a diagram explaining an example of icons displayed together with traveling route display data.

[FIG. 25]

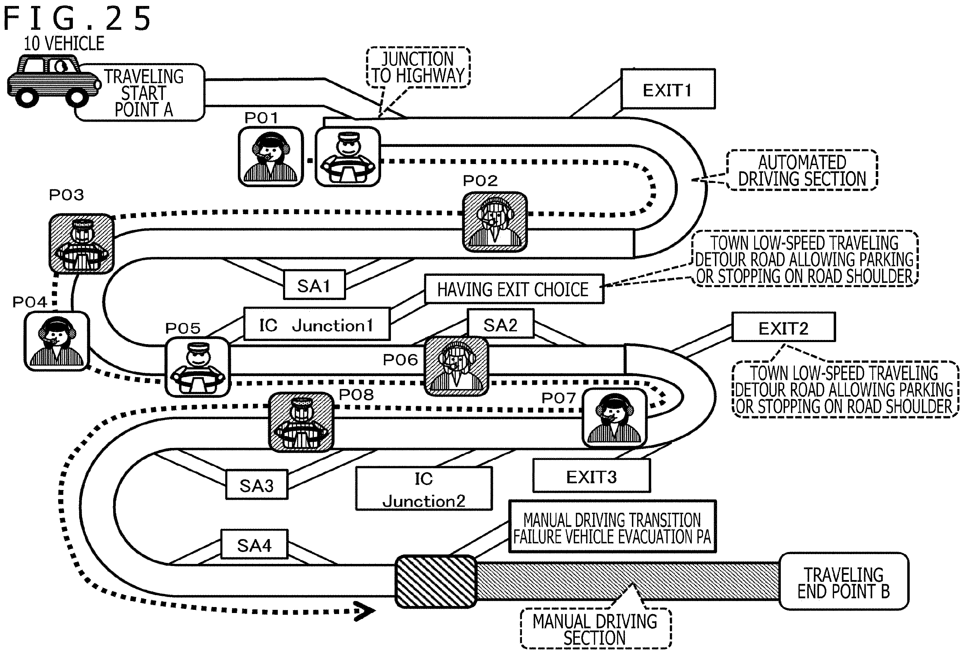

FIG. 25 is a diagram depicting an example of display data which has icons displayed together with traveling route display data.

[FIG. 26]

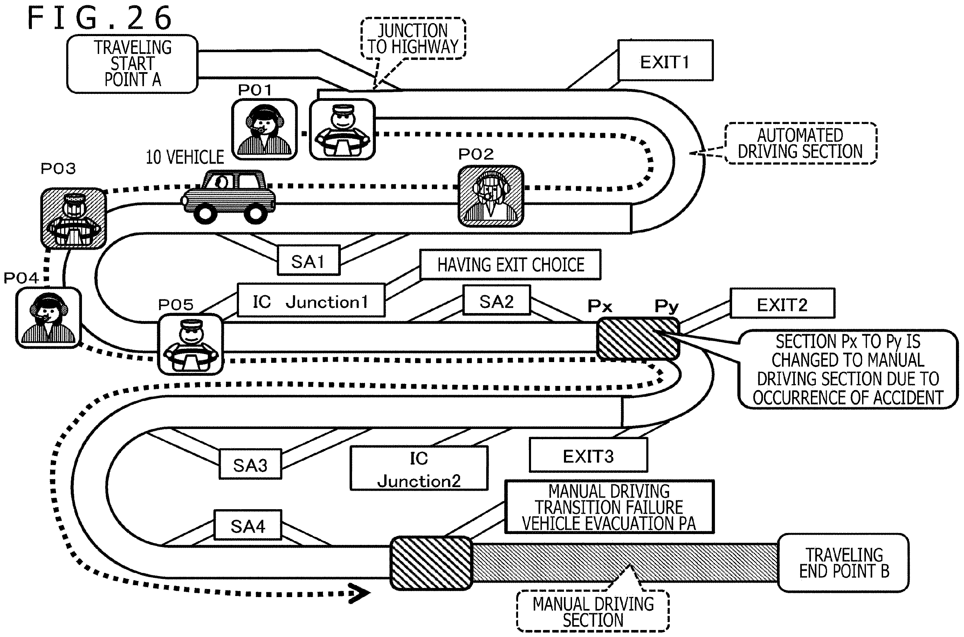

FIG. 26 is a diagram explaining a use example of display data allowing checking at which spot a controller or a remote driving assistance operator of a control center is available.

[FIG. 27]

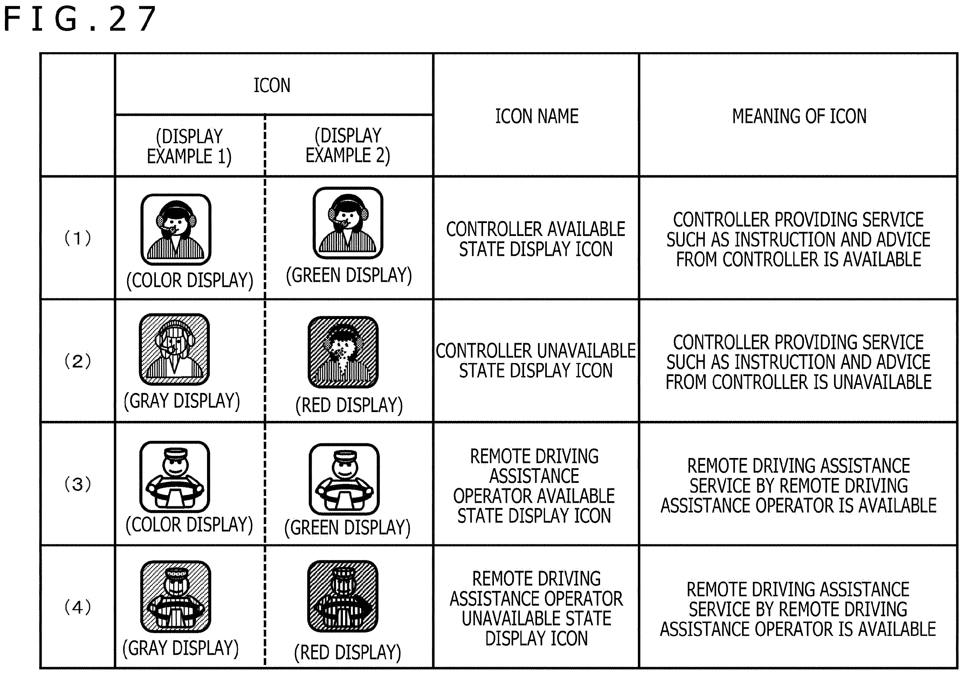

FIG. 27 is a diagram explaining an example of icons used for displaying remote driving assistance service offerability information and the like on the traveling section display data.

[FIG. 28]

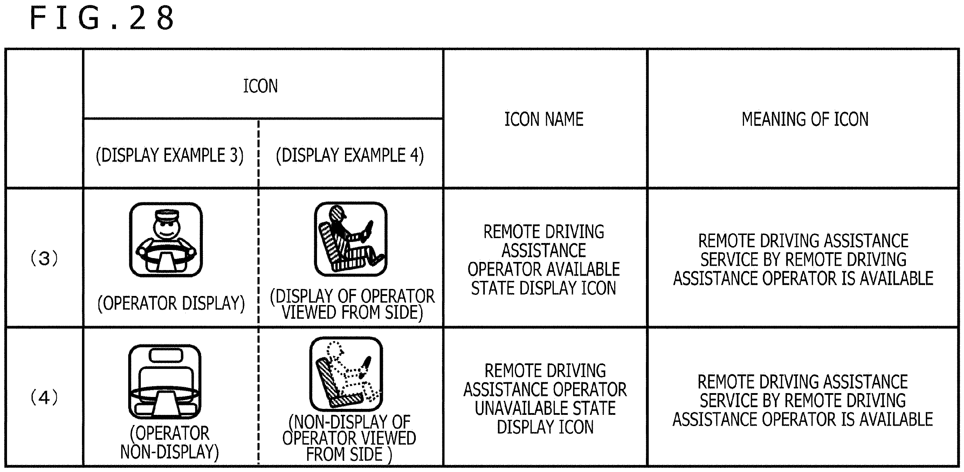

FIG. 28 is a diagram explaining an example of icons used for displaying remote driving assistance service offerability information and the like on the traveling section display data.

[FIG. 29]

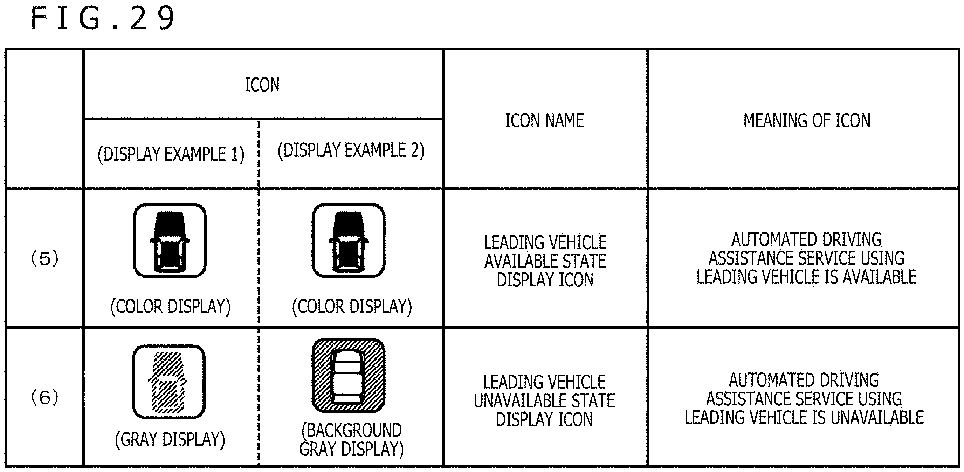

FIG. 29 is a diagram explaining an example of icons used for displaying remote driving assistance service offerability information and the like on the traveling section display data.

[FIG. 30]

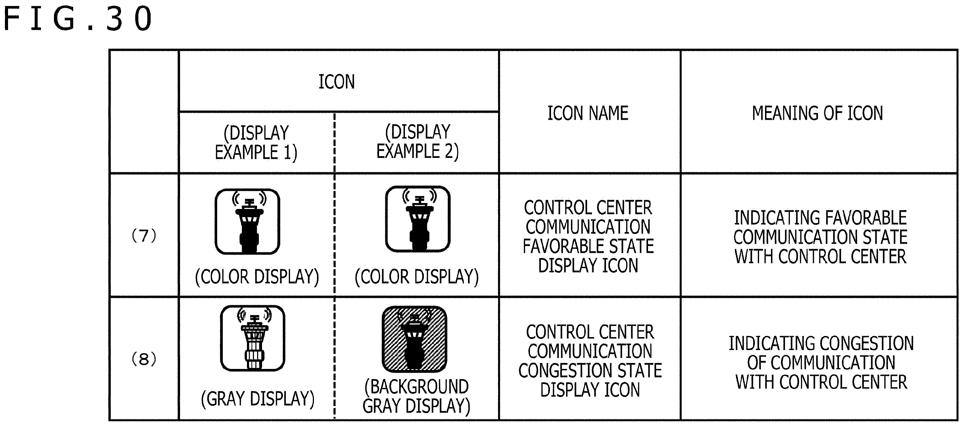

FIG. 30 is a diagram explaining an example of icons used for displaying remote driving assistance service offerability information and the like on the traveling section display data.

[FIG. 31]

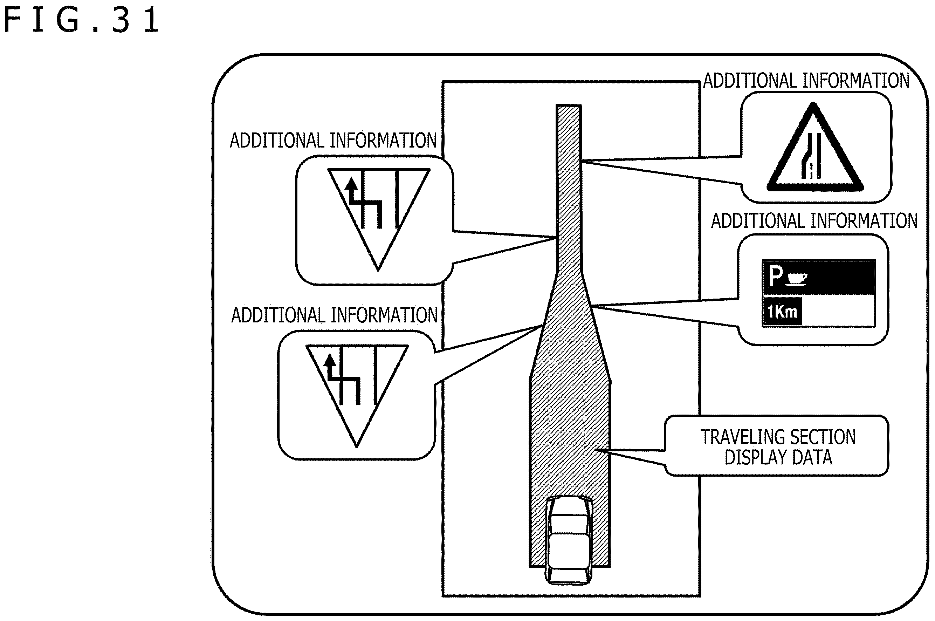

FIG. 31 is a diagram explaining an example of traveling section display data for which additional information is set.

[FIG. 32]

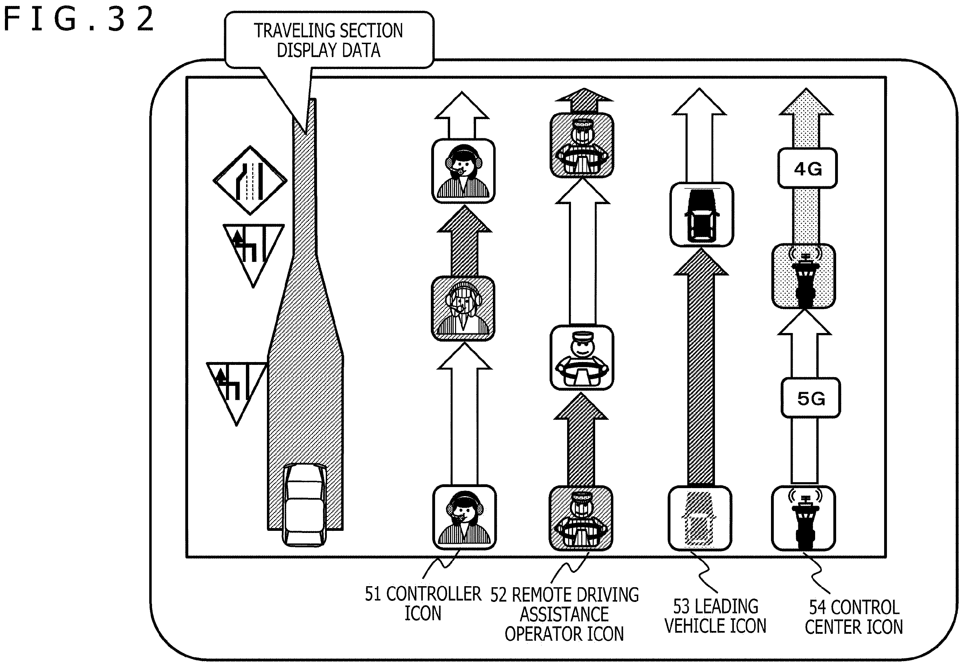

FIG. 32 is a diagram explaining an example of traveling section display data for which additional information indicating remote driving assistance service offerability information and the like is set.

[FIG. 33]

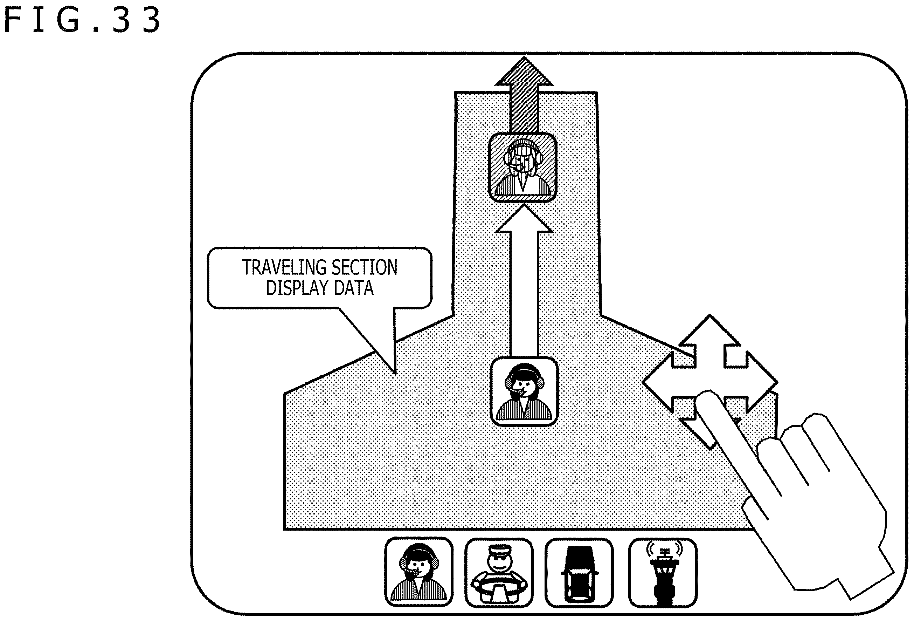

FIG. 33 is a diagram explaining an example of traveling section display data for which additional information indicating remote driving assistance service offerability information and the like is set.

[FIG. 34]

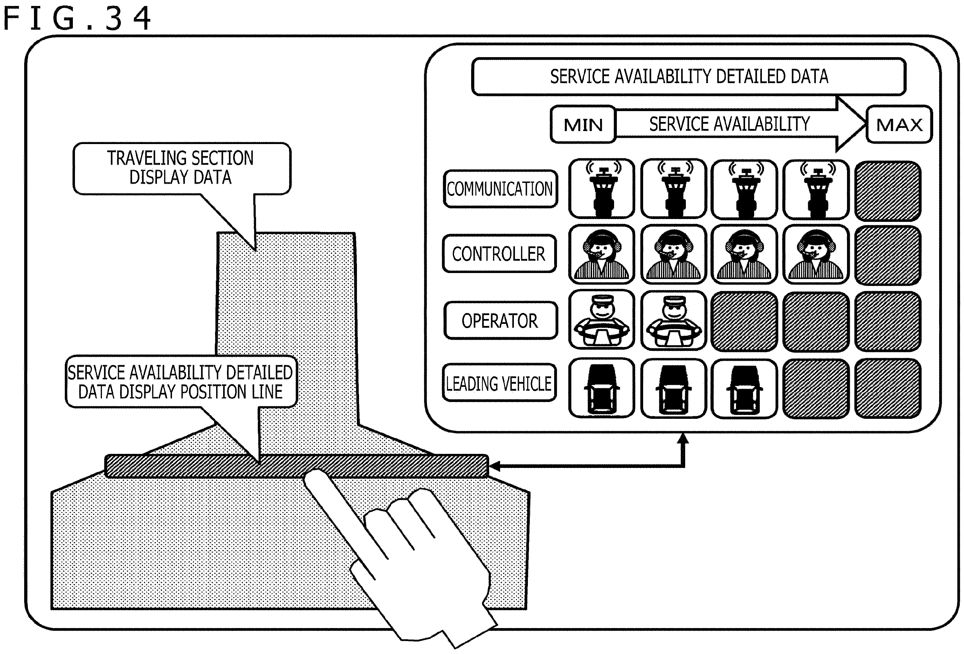

FIG. 34 is a diagram explaining an example of traveling section display data for which additional information indicating remote driving assistance service offerability information and the like is set.

[FIG. 35]

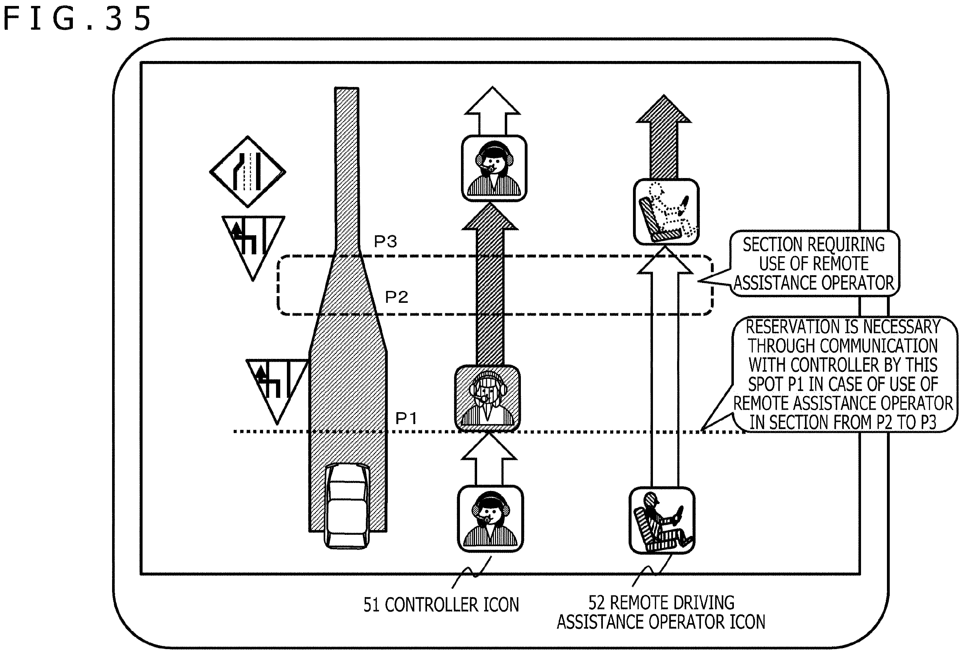

FIG. 35 is a diagram explaining an example of traveling section display data for which additional information indicating remote driving assistance service offerability information and the like is set.

[FIG. 36]

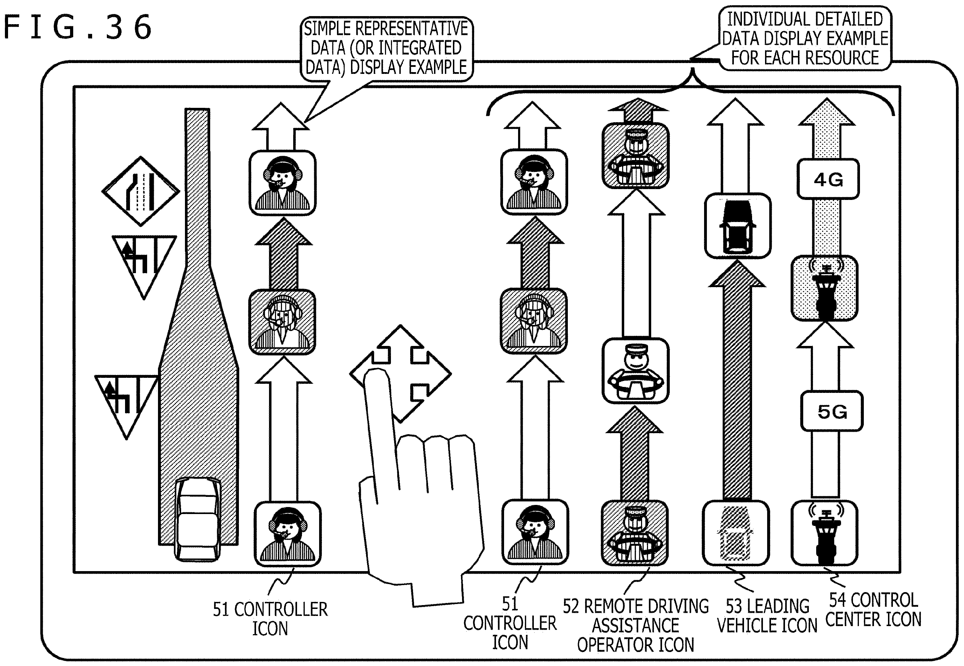

FIG. 36 is a diagram explaining an example of traveling section display data for which additional information indicating remote driving assistance service offerability information and the like is set.

[FIG. 37]

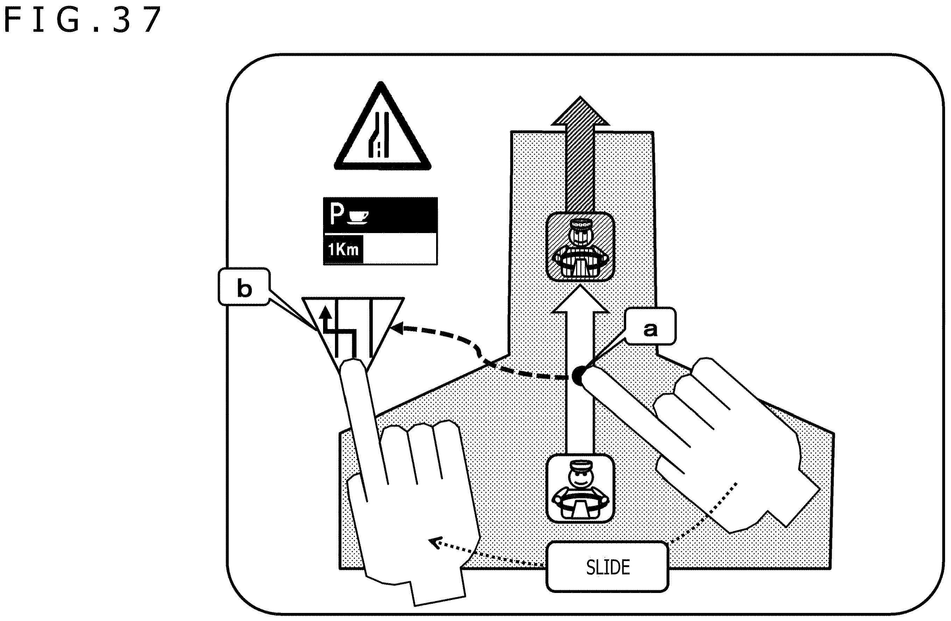

FIG. 37 is a diagram explaining an example of traveling section display data for which additional information indicating remote driving assistance service offerability information and the like is set.

[FIG. 38]

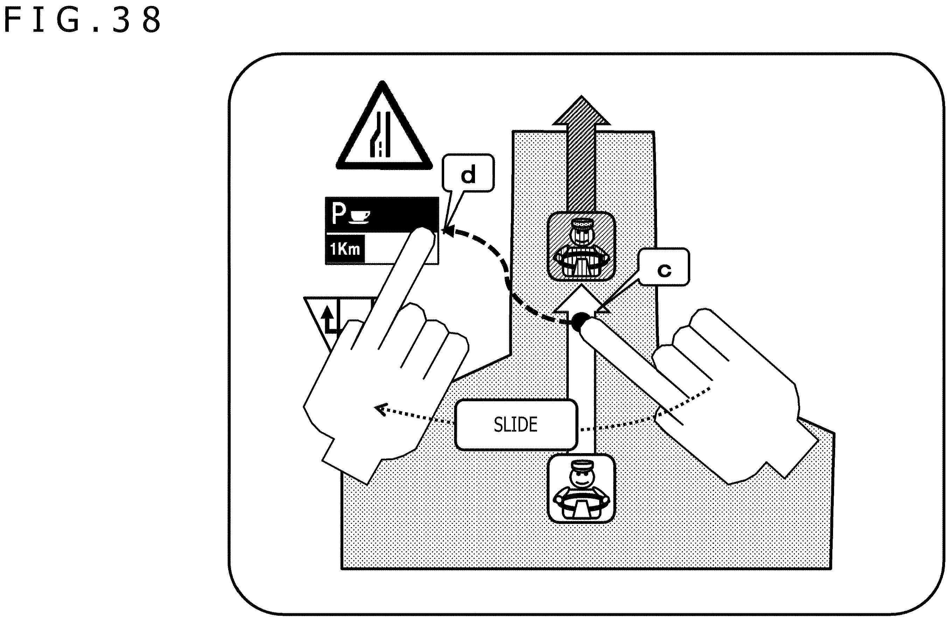

FIG. 38 is a diagram explaining an example of traveling section display data for which additional information indicating remote driving assistance service offerability information and the like is set.

[FIG. 39]

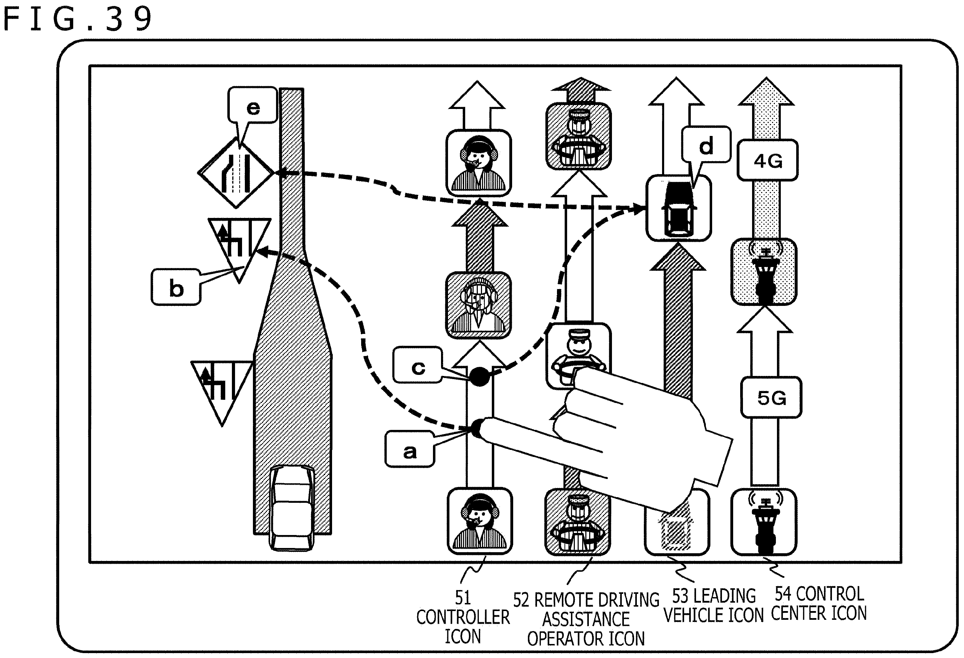

FIG. 39 is a diagram explaining an example of traveling section display data for which additional information indicating remote driving assistance service offerability information and the like is set.

[FIG. 40]

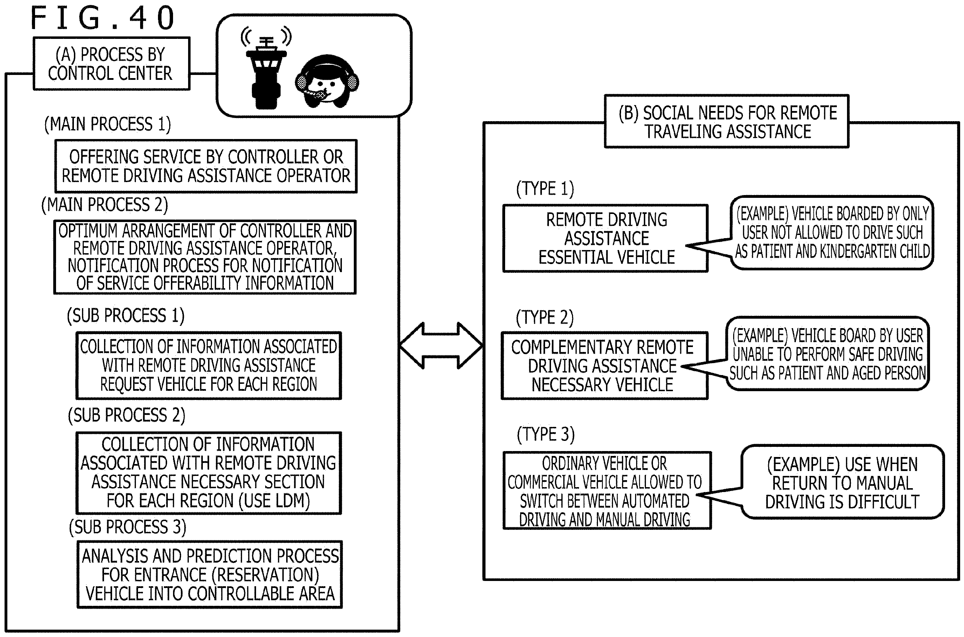

FIG. 40 is a diagram explaining (A) processes performed by the control center, and (B) social needs for remote driving assistance.

[FIG. 41]

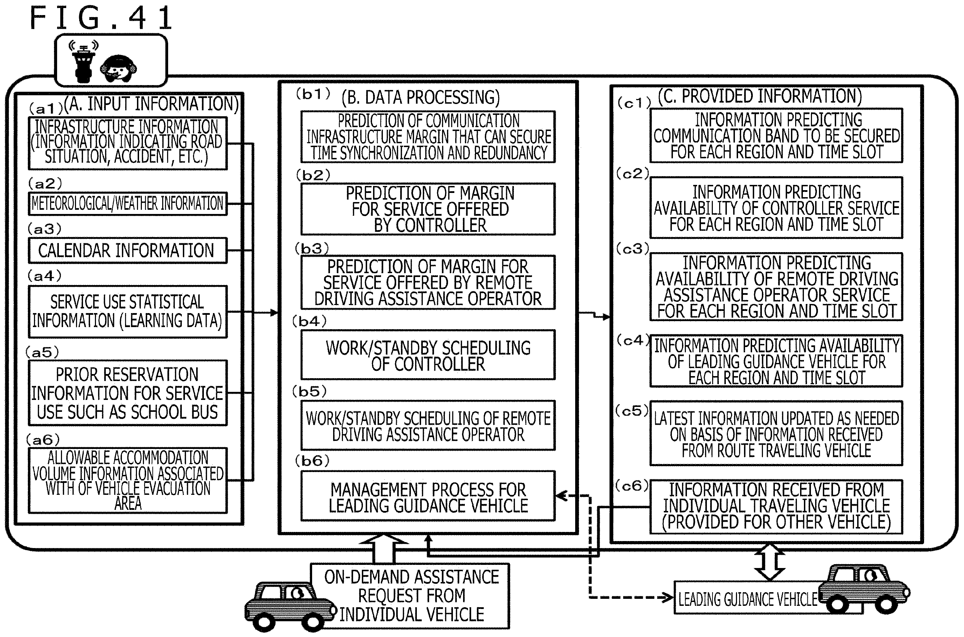

FIG. 41 is a diagram explaining (A) input information acquired by the control center, (B) data processing executed by the control center, and (C) provided information provided by the control center to the outside.

[FIG. 42]

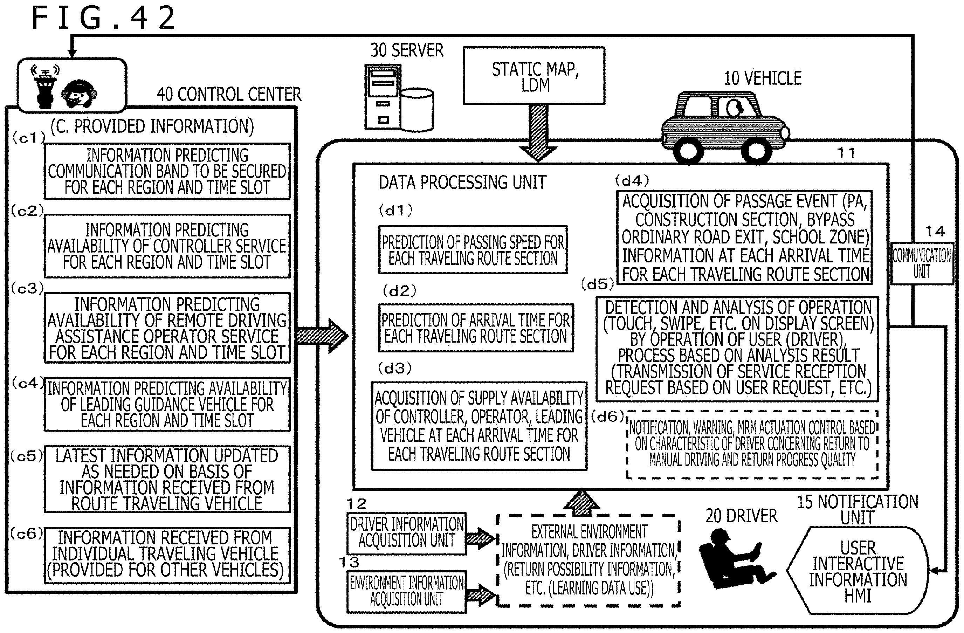

FIG. 42 is a diagram explaining processes executed by a vehicle or the information processing device provided in the vehicle.

[FIG. 43]

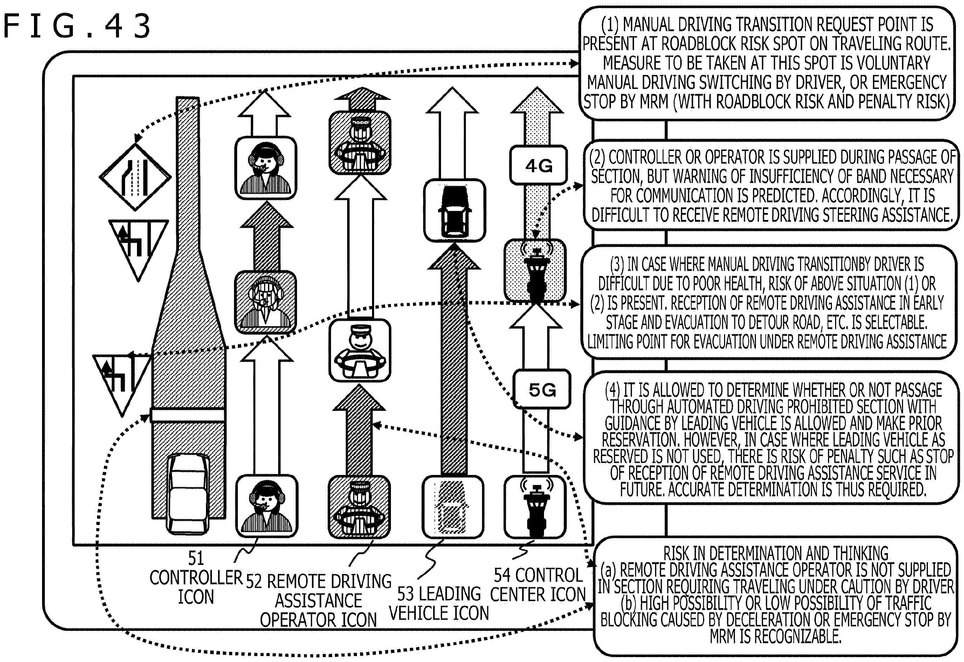

FIG. 43 is a diagram explaining examples of a thinking and determination process of the driver based on notification information.

[FIG. 44]

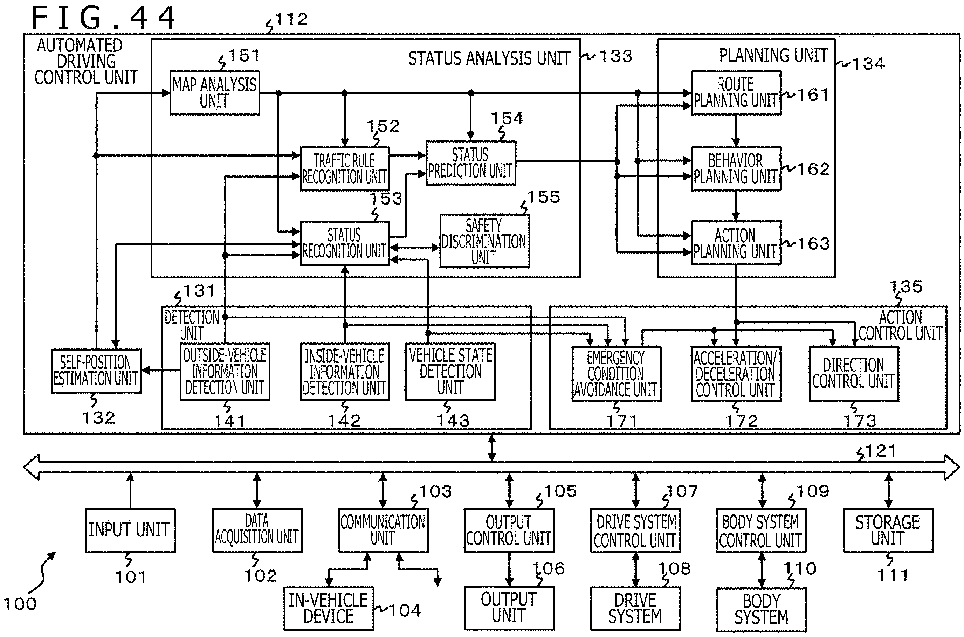

FIG. 44 is a diagram explaining a configuration example of the mobile apparatus of the present disclosure.

[FIG. 45]

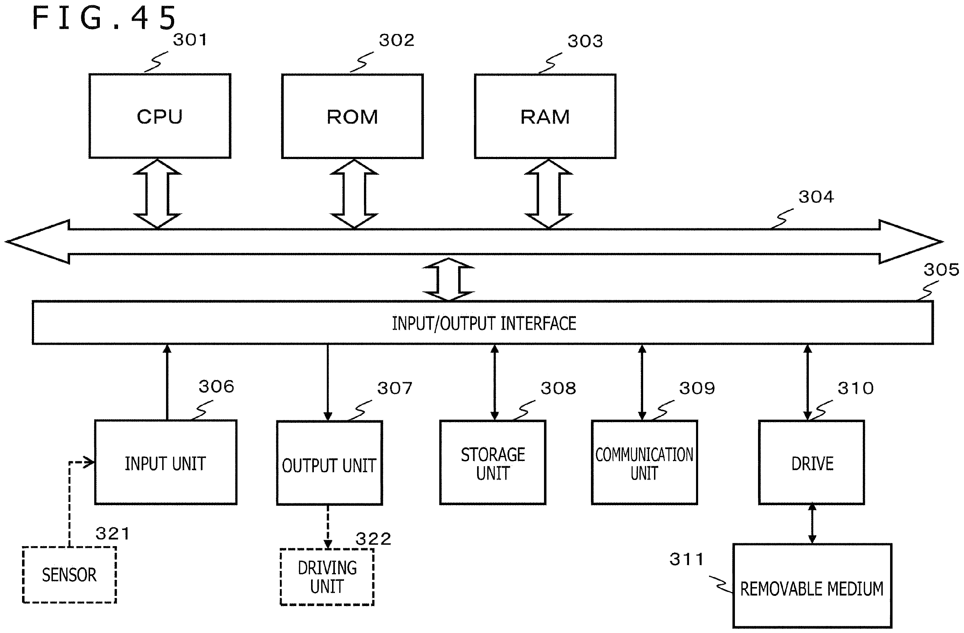

FIG. 45 is a diagram explaining a hardware configuration example of an information processing device, or an information processing device included in a server or a control center.

[Description of Embodiment]

Details of an information processing device, a mobile apparatus, an information processing system, an information processing method, and a program of the present disclosure will be hereinafter described with reference to the drawings. Note that the description will be presented according to the following items.

1. Outline of configuration and processing of mobile apparatus and information processing device of present disclosure
2. Mode switching sequence from automated driving mode to manual driving mode
3. Automated driving operation sequence example
4. Specific example of traveling section display data
5. Traveling control process accompanied by communication with control center
6. Configuration for providing information with additional information set on traveling section display data
7. Specific example of transition process from automated driving to manual driving
8. Use example of remote driving assistance service at transition process timing from automated driving to manual driving
9. Composite use example of remote driving assistance service
10. Provision example of remote driving assistance service offerability information
11. Configuration example for displaying remote driving assistance service offerability information and the like on traveling section display data
12. Configuration and process of control center
13. Process executed by vehicle or information processing device provided in vehicle and thinking and determination process by driver based on notification information
14. Configuration example of mobile apparatus (vehicle)
15. Configuration example of information processing device
16. Configuration summary of present disclosure

[1. Outline of configuration and processing of mobile apparatus and information processing device of present disclosure]

Described first with reference to FIG. 1 and following figures will be an outline of configurations and processes of a mobile apparatus and an information processing device of the present disclosure.

For example, the mobile apparatus of the present disclosure is a vehicle (car) which is a mobile apparatus having a function of communicating with an outside control center to achieve traveling.

Note that the mobile apparatus of the present disclosure may be either an automated driving vehicle (car), or a vehicle (car) capable of switching between automated driving and manual driving during traveling.

Note that described hereinafter will be a typical example of the mobile apparatus of the present disclosure which uses a vehicle capable of switching between automated driving and manual driving during traveling.

In a case where switching from an automated driving mode to a manual driving mode is necessary for the vehicle of the above type, a driver is required to start manual driving.

The driver need not be engaged in driving during execution of automated driving, and therefore is allowed to perform various types of work (tasks) other than driving. Note that a task (work) performed by the driver other than driving will be hereinafter referred to as a secondary task.

There are various types of secondary tasks which can be performed by the driver during automated driving. For example, the driver can be gazing at the front of the car in a manner similar to the manner during driving except that the driver keeps his or her hands off a steering wheel, or can be reading a book or dozing.

A wakefulness level (consciousness level) of the driver differs according to differences of these processes.

For example, the wakefulness level of the driver lowers during dozing. In other words, the consciousness level drops to a lower state. In such a low wakefulness state, normal manual driving is difficult to achieve. When the mode is suddenly switched to the manual driving mode in this state, an accident can be caused in a worst case.

In such a case, safe traveling is realizable if traveling is performed under control given from an operator of an outside control center through communication with the control center.

Note that manual driving performed by the driver needs to be started in a high wakefulness state, i.e., in a state of clear consciousness so as to secure sufficient safety of the manual driving.

For this purpose, it is necessary to execute observation (monitoring) of the driver and acquire data which allows determination of the wakefulness state of the driver even during execution of automated driving.

Configurations and processes of the mobile apparatus of the present disclosure and the information processing device attachable to the mobile apparatus will be described with reference to FIG. 1 and following figures.

FIG. 1 is a diagram depicting one configuration example of a car 10 which is one example of the mobile apparatus of the present disclosure.

The information processing device of the present disclosure is attached to the vehicle (car) 10 depicted in FIG. 1.

The vehicle 10 depicted in FIG. 1 is a car capable of performing driving in two driving modes, i.e., a manual driving mode and an automated driving mode.

The manual driving mode performs traveling according to operations of a driver 20, i.e., a steering wheel (steering) operation and operations using an accelerator, a brake, and the like.

On the other hand, the automated driving mode does not require operations performed by the driver 20, and achieves driving on the basis of sensor information obtained by a position sensor, other ambient information detection sensors, and the like, for example.

The position sensor is a GPS receiver or the like, for example, while the ambient information detection sensors are constituted by a camera, a stereo camera, a ToF sensor, an ultrasonic sensor, a radar, a LiDAR (Light Detection and Ranging, Laser Imaging Detection and Ranging), a sonar, and the like, for example.

Note that FIG. 1 is a diagram explaining an outline of the present disclosure, and schematically depicts main constituent elements. Detailed configurations will be described below.

As depicted in FIG. 1, the vehicle 10 includes a data processing unit 11, a driver information acquisition unit 12, an environmental information acquisition unit 13, a communication unit 14, a notification unit 15, and a storage unit 16.

For example, the driver information acquisition unit 12 acquires information for determining a wakefulness level of the driver, state information associated with the driver, and others.

The driver information acquisition unit 12 includes various types of sensors for detecting information inside the vehicle. Specifically, for example, the driver information acquisition unit 12 includes an imaging device for imaging the driver, a biosensor for detecting biological information associated with the driver, a microphone for collecting voices in a vehicle cabin, and others. The biosensor is provided on a seat surface, a steering wheel, or the like, for example, and detects a sitting state of an occupant sitting on a seat or biological information associated with the driver gripping the steering wheel.

Various types of observable data are available as vital signals, such as a heart rate, a pulse rate, blood flow, breathing, mind-body connection, visual stimulation, electroencephalogram, a sweat state, a head posture and behavior, eyes, a gaze, a blink, saccade, micro-saccade, a fixed gaze, drift, a stare, PERCLOS (percentage of eyelid closure), and pupil reaction by an iris.

Note that saccade and micro-saccade are each eyeball behavior information. An eyeball performs a behavior according to a reflexive behavior for cancelling rotational movement or the like of the eyeball as a result of motion by semicircular canals, and a saccade action shifting a central visual field at a high speed in response to risk information associated with a moving body captured in a peripheral visual field.

Moreover, for determining a target captured substantially in the central visual field, on the basis of a memory, in steps of perception, recognition, and determination of the target, behaviors such as a fixed gaze and micro-saccade, a tremor, and a drift in the vicinity of the captured target develop. When another attention attractant phenomenon is a phenomenon at a fixed level or lower, the driver directs his or her visual line toward the target captured in the central visual field, during perception, recognition, and determination of the target.

Particularly, the latter recognition and determinant behaviors are considerably associated with understandings within the brain. Accordingly, a wakeful state can be estimated on the basis of results of these observations. The saccade action for shifting the visual line toward a new target is caused by various types of factors, such as a different risk factor entering a peripheral visual field, stimulation produced by a sound such as a siren, an impact, and stimulation produced by a memory. Accordingly, the above eyeball behavior is a behavior considerably different for each person in terms of detection, occurrence frequency, and duration of the behavior, even with a certain tendency for each situation, driving experience, fatigue degree, or the like. On the other hand, return quality of the wakefulness level of the driver can be evaluated as a wakefulness level evaluation of the driver on the basis of a behavior during a stable period under steady wakefulness.

FIG. 2 depicts an example of various types of sensors for obtaining information associated with the driver in the vehicle, the sensors being included in the driver information acquisition unit 12. For example, the driver information acquisition unit 12 includes a camera, a stereo camera, a ToF sensor, a seat strain gauge, or others as a detector for detecting a position and a posture of the driver. Moreover, the driver information acquisition unit 12 includes a facial recognizer (Face (Head) Recognition), a driver eye tracker, a driver head tracker, or others as a detector for obtaining vital activity observable information associated with the driver.

Further, the driver information acquisition unit 12 includes a vital signal detector as a detector for obtaining vital activity observable information associated with the driver. In addition, the driver information acquisition unit 12 includes a driver identification unit. Note that an identification method considered to be adoptable may be knowledge identification using a password, a personal identification number, or the like, and also vital identification using a face, a fingerprint, a pupil iris, a voiceprint, or the like.

The environmental information acquisition unit 13 acquires an own vehicle state and traveling environmental information associated with the vehicle 10. For example, the environmental information acquisition unit 13 acquires information such as image information on the front, rear, left, and right of the car, position information obtained by GPS, and obstacle information which indicates a surrounding obstacle and is obtained from LiDAR (Light Detection and Ranging, Laser Imaging Detection and Ranging), a sonar, or the like.

The environmental information acquisition unit 13 includes various types of sensors for detecting the own vehicle state and the like. Specifically, for example, the environmental information acquisition unit 13 includes a gyro sensor, an acceleration sensor, an inertial measurement unit (IMU), a sensor or the like for detecting an operation amount of an acceleration pedal, an operation amount of a brake pedal, a steering angle of the steering wheel, an engine speed, a motor speed, or a rotation speed of wheels and the like.

Moreover, for example, the environmental information acquisition unit 13 includes various types of sensors for detecting information associated with the outside of the own vehicle. Specifically, for example, the environmental information acquisition unit 13 includes an imaging device such as a ToF (Time Of Flight) camera, a stereo camera, a monocular camera, an infrared camera, and other types of cameras. Further, for example, the environmental information acquisition unit 13 includes an environment sensor for detecting weather, meteorology, or the like, and an ambient information detection sensor for detecting an object around the own vehicle. The environment sensor is constituted by a raindrop sensor, a fog sensor, a sunlight sensor, a snow sensor, or the like, for example. The ambient information detection sensor is constituted by an ultrasonic sensor, a radar, a LiDAR (Light Detection and Ranging, Laser Imaging Detection and Ranging), a sonar, or the like, for example.

For example, FIG. 3 depicts an installation example of various types of sensors for detecting information associated with the outside of the own vehicle. Each of Cam1, Cam2, Cam3, Cam4, and Cam5 is an imaging device (camera). For example, the camera is provided at least one of a front nose, side mirrors, a rear bumper, a back door, and an upper part of a windshield in the vehicle cabin of the vehicle 10.

The imaging device Cam1 provided on the front nose and the imaging device Cam5 provided on the upper part of the windshield in the vehicle cabin each mainly acquire a front image of the vehicle 10. Each of the imaging devices Cam2 and Cam3 provided on the side mirrors mainly acquires a side image of the vehicle 10. The imaging device Cam4 provided on the rear bumper or the back door mainly acquires a rear image of the vehicle 10. The imaging device Cam5 provided on the upper part of the windshield in the vehicle cabin is mainly used for detection of a preceding vehicle, or detection of a pedestrian, an obstacle, a traffic light, a traffic sign, a lane, or the like. Moreover, extension use may be allowed, in the future automated driving, to detect a crossing pedestrian on a road for a right or left turn located ahead in a wider range or further in a range of an approaching object on the cross road at the time of a left or right turn of the vehicle.

Note that FIG. 3 depicts an example of each of imaging ranges of the imaging devices Cam1, Cam2, Cam3, and Cam4. An imaging range "a" indicates an image range of the imaging device Cam1 provided on the front nose, imaging ranges "b" and "c" indicate imaging ranges of the imaging devices Cam2 and Cam3 provided on the corresponding side mirrors, and an imaging range "d" indicates an imaging range of the imaging device Cam4 provided on the rear bumper or the back door. For example, a bird's eye view image of the vehicle 10 viewed from the above, and further, an entire circumferential and three-dimensional display image surrounding vehicle peripheral portions by using curved planes and the like are obtained by overlapping image data captured by the imaging devices Cam1, Cam2, Cam3, and Cam4.

Sen1, Sen2, Sen3, Sen4, Sen5, and Sen6 depicted in FIG. 3 are each a sensor. For example, each of these sensors is a sensor such as an ultrasonic sensor or a radar.

These sensors are provided at the front, the rear, the sides, the corners, and the upper part of the windshield in the vehicle cabin of the vehicle 10. The sensors Sen1, Sen4, and Sen6 provided on the front nose, the rear bumper, the back door, and the upper part of the windshield in the vehicle cabin of the vehicle 10 may be LiDARs, for example. Each of these sensors Sen1 to Sen6 is mainly used for detection of a preceding vehicle, a pedestrian, an obstacle, or the like. Results of these detections may be further applied to bird's eye view display of images captured by the cameras and improvement of three-dimensional object display of entire circumferential and three-dimensional display.

The data processing unit 11 performs an automated driving control process. Further, the data processing unit 11 receives inputs of driver information acquired by the driver information acquisition unit 12 and environmental information such as vehicle information and outside information acquired by the environmental information acquisition unit 13, and executes an abstraction process, an encryption process, a recording process, an analysis process, and the like for the acquired information.

Details of these processes will be described below.

Further, the data processing unit 11 calculates a safety index value indicating a state of the driver in the vehicle, such as whether or not the driver in the vehicle during automated driving is in a state allowed to execute safe manual driving, whether or not the driver during manual driving is executing safe driving, and the like.

Moreover, in a case where switching from the automated driving mode to the manual driving mode is necessary, for example, the data processing unit 11 executes a process for issuing a notification for urging switching to the manual driving mode, via the notification unit 15.

It is assumed that this notification process is performed at the optimum timing calculated by analyzing information input from the driver information acquisition unit 12 and the environmental information acquisition unit 13, for example.

In other words, the notification process is performed at such a timing that safe manual driving can be started by the driver 20.

Specifically, in a case where the driver sits on a driver's seat and regularly executes visual checking of the front at a high wakefulness level, a notification is issued immediately before a manual driving start time, such as five seconds before the manual driving start time. In a case where the driver is at a low wakefulness level, a process for issuing a notification 20 seconds before the manual driving start time well in advance is performed, for example.

Calculation of the appropriate notification time is executed by the data processing unit 11 of the vehicle 10, or a server 30 depicted in FIG. 1. Specifically, for example, the optimum notification time is calculated on the basis of learning data already generated.

The notification unit 15 is constituted by a display unit or an audio output unit that issues this notification or a vibrator of the steering wheel or the seat.

FIG. 4 depicts an example of warning indications displayed on the display unit constituting the notification unit 15.

As depicted in FIG. 4, indications presented below are displayed on the display unit 30.

driving mode information = "automated driving," and warning indication = "switch to manual driving."

In a driving mode information indication area, an indication "automated driving" is displayed during execution of the automated driving mode, and an indication "manual driving" is displayed during execution of the manual driving mode.

A warning indication information indication area is an indication area where the following indication is displayed during execution of automated driving in the automated driving mode.

"switch to manual driving"

Note that this example is an example which spells out the explanation. However, the indication is not limited to this text indication, but may be an indication using a symbol such as a pictogram. In addition, a method for presenting the notification is not limited to visual information, but may be achieved using voices, blinking and lighting of a dedicated light source, vibration of the seat or a steering signal, or the like. This method is therefore not limited to any particular means.

Driving information acquired by the driver information acquisition unit 12 and environmental information such as vehicle information and outside information acquired by the environmental information acquisition unit 13 are recorded in the storage unit 16. The information to be recorded is not limited to simple acquired information, but may be recorded together with a timing of the notification process and various types of notifications determined and generated on the basis of information acquired by the data processing unit 11 of the system, information issued as a notification from presentation means to the driver, information indicating recognition and confirmation of the notification information by the driver, a time at which a change has been produced, and the like to check when the driver has obtained the information and when the driver has performed a necessary target action.

Note that the information stored in the storage unit 16, i.e., the driving information acquired by the driver information acquisition unit 12, and the environmental information such as the vehicle information and the outside information acquired by the environmental information acquisition unit 13 may be transmitted to the server 30 via the communication unit 30 and stored in a storage unit of the server 30.

For example, the information stored in the storage unit 16 or the server 30 is used for performing a process for analyzing a cause of an accident at the time of occurrence of the accident, a process for evaluating the driver, and others. Specifically, the information is used for performing a process for evaluating how information indicating possible choices selected the driver has been provided, and what determination and at what timing the driver has made as determination for risk reduction selection, for example. Moreover, the information is defined as confirmation recording information essential for time-series procedure confirmation of whether to make an emergency stop in a traveling journey section for a risk of a failure of appropriate transition from automated driving to manual driving.

As depicted in FIG. 1, the vehicle 10 has a configuration capable of communicating with the server 30 and an outside control center 40 via the communication unit 14.

The server 30 executes a process for providing road information for the vehicle 10, a process for storing information acquired by the driver information acquisition unit 12 and the environmental information acquisition unit 13 of the vehicle 10, and other processes. These processes will be described below in detail.

For example, the control center 40 issues instructions associated with a driving operation and the like given from a controller to the driver, and performs remote traveling control associated with the vehicle and given from a remote driving assistance operator and other processes. Specific processes of these will be also described below.

FIG. 5 is a diagram depicting a specific example of processes executed by the mobile apparatus and the information processing device of the present disclosure.

FIG. 5 is a diagram depicting a setting example of an appropriate timing of issuing a notification of a manual driving switching request during execution of automated driving in the automated driving mode, and presents the following two notification process examples.

> (a) a notification process in a case of a high wakefulness level of the driver during execution of automated driving, and
> (b) a notification process in a case of a low wakefulness level of the driver during execution of automated driving.

The example (a) is an example where the driver faces the front and views a road during execution of automated driving. In this case, the wakefulness level of the driver is in a high-level state, i.e., in a state where the driver is allowed to start manual driving at any time.

In such a case, the driver is capable of starting safe manual driving quickly even when the notification for switching to manual driving is given immediately before the time at which manual driving is required.

The example (b) is an example where the wakefulness level of the driver is in an extremely low-level state where, for example, the driver is dozing during execution of automated driving.

In such a case, the driver starts manual driving with unclear consciousness when the notification for switching to manual driving is given immediately before the time at which manual driving is required. As a result, the driver is more likely to cause an accident. Accordingly, it is necessary to give the notification for switching to manual driving in an earlier stage in such a case of the low wakefulness level.

Moreover, for a vehicle which has a luggage compartment and allows the driver to move into the luggage compartment and work therein during execution of automated driving, such as a delivery vehicle, it is preferable to provide the following different settings for the notification timing of the manual driving switching request, according to three situations as depicted in FIG. 6, for example.

> (a) a notification process in a case of a high wakefulness level of the driver during execution of automated driving,
> (b) a notification process in a case of a low wakefulness level of the driver during execution of automated driving, and
> (c) a notification process in a case where the driver is away from the driver's seat during execution of automated driving.

The example (a) is an example where the driver faces the front and views a road during execution of automated driving. In this case, the wakefulness level of the driver is in a high-level state, i.e., in a state where the driver is allowed to start manual driving at any time.

In such a case, the driver is capable of starting safe manual driving quickly even when the notification for switching to manual driving is given immediately before the time at which manual driving is required.

The example (b) is an example of a case where, for example, the driver is dozing during execution of automated driving. In this case, the wakefulness level of the driver is in an extremely low-level state.

In such a case, the driver starts manual driving with unclear consciousness when the notification for switching to manual driving is given immediately before the time at which manual driving is required. As a result, the driver is more likely to cause an accident. Accordingly, it is necessary to give the notification for switching to manual driving in an earlier stage in such a case of the low wakefulness level.

The example (c) is an example of a case where, for example, the driver moves away from the driver's seat and works during execution of automated driving. In such a case, a time is required for the driver to return to the driver's seat.

In such a case, when the notification for switching to manual driving is given immediately before the time at which manual driving is required, it is possible that the vehicle 10 enters the manual driving section before the driver returns to the driver's seat. Accordingly, it is necessary to give the notification for switching to manual driving in an earlier stage in such a case where the driver is away from the driver's seat.

Note that the notification time for switching to manual driving is explained using abstract expressions such as "early" and "immediately before" for easy understanding. In an actual situation, however, the system (data processing unit) of the vehicle 10 learns behavior characteristics and the like of the driver in a stereotypical manner, and calculates the optimum notification timing. For example, the system (data processing unit 11) estimates a driver wakeful state based on an observed state of the driver, and calculates a notification time at which normal transition is highly likely to be completed with reference to correlation data between a distribution associated with the time required until a driving return, the distribution being generated beforehand, and a return success rate on a current traveling road.

Thereafter, the system issues a notification at a spot corresponding to the calculation and at a point before an arrival at a target transition spot. Specifically, for example, a method described in PTL 2 (PCT Patent Publication WO2019/097944) which is a patent application previously filed by the present applicant is available. Specifically, available is such a method which estimates a time required for a return of the driver on the basis of a result of learning of a return time distribution of the driver and thus calculates a notification timing. It is assumed in the following description that the system on the vehicle side estimates a timing at which the driver should be returned and issues a notification to the driver at the timing estimated by the system, and that the driver recognizes or handles the notification or performs other processing for the notification.

[2. Mode switching sequence from automated driving mode to manual driving mode]

A transition sequence from the automated driving mode to the manual driving mode will be subsequently described.

FIG. 7 schematically depicts an example of a mode switching sequence executed by the data processing unit 11 for switching from the automated driving mode to the manual driving mode.

In step S1, the driver is in a state of being completely separated from steering for driving. In this state, the data processing unit 11 executes a monitoring process (passive monitoring) according to information input from the driver information acquisition unit 12 and the environmental information acquisition unit 13.

For example, the driver is allowed to execute a secondary task such as taking a nap, watching a video, concentrating on a game, or performing work using a visualization tool such as a tablet and a smartphone. It is also considered that the work using the visualization tool such as a tablet and a smartphone is performed in a state in which the driver's seat is shifted or on a seat different from the driver's seat, for example.

It is estimated that the time required for a return of the driver considerably varies according to the work contents of the moment depending on the state of the driver as described above at the time of approach to a section requiring a return to manual driving in the route.

Step S2 is a timing for issuing manual driving return request notification as previously described with reference to FIG. 4. The data processing unit 11 calculates the optimum notification timing by analyzing information input from the driver information acquisition unit 12 and the environmental information acquisition unit 13. Various modes are adoptable for a notification process for the driver. For example, a notification of a driving return is issued using dynamic haptics such as vibration, or in a visual or auditory manner.

For example, the data processing unit 11 recognizes a timing for issuing a notification on the basis of monitoring information indicating a steady state of the driver, and issues a notification at an appropriate timing. Specifically, the system constantly monitors an execution state of a secondary task of the driver in a passive manner in a passive monitoring period in a previous stage to calculate the optimum timing for the notification. It is preferable that the system constantly and continuously performs passive monitoring in the period of step S1 to determine the return timing and issue the return notification according to a return characteristic unique to the driver.

In other words, it is preferable that the system learns the optimum return timing according to a return behavior pattern of the driver, a vehicle characteristic, or the like, and presents to the driver the optimum timing statistically obtained and required for the driver to return manual driving from automated driving in a normal manner at a rate equal to or higher than an established rate. In this case, a warning is given using ringing of an alarm in a case of no response from the driver to the notification within a fixed time.

In step S3, whether the driver has returned and sit is checked. In step S4, a state of an internal wakefulness level of the driver is checked by analyzing the face or the eyeball behavior such as saccade. In step S5, a stability level of an actual steering condition of the driver is monitored. Thereafter, in step S6, a transition from automated driving to manual driving is completed.

[3. Automated driving operation sequence example]

An example of an operation sequence of automated driving will be subsequently described with reference to a flowchart presented in FIG. 8.

The flowchart depicted in FIG. 8 is a flowchart for explaining an operation sequence of automated driving executed by the data processing unit 11 of the information processing device mounted on the vehicle 10.

First, in step S11, the driver is identified. This driver identification is achieved by knowledge identification using a password, a personal identification number, or the like, vital identification using a face, a fingerprint, a pupil iris, a voiceprint, or the like, or a combination of the knowledge identification and the vital identification. The driver identification performed in such a manner allows accumulation of information for determining a notification timing in association with each driver even in a case where a plurality of drivers drives an identical vehicle.

Next, in step S12, a destination is set by an operation input by the driver through the input unit. For example, the driver inputs the operation on the basis of display on an instrument panel.

Note that described in the present embodiment is such an example where a traveling schedule is assumed to be set after boarding on the vehicle. However, a remote advance reservation or the like may be set using a smartphone in advance before boarding on the vehicle, or using a personal computer before a departure from the driver's own home, for example. Alternatively, the system of the vehicle may set pre-planning according to a schedule table indicating a schedule assumed by the driver, and update and acquire local dynamic map (LDM) information indicating a road environment, i.e., what is generally called LDM information which updates traveling map information with high density and constantly as information indicating a road on which the vehicle travels, for example, to further present actual traveling advice display or the like in a manner of a concierge at the time of boarding the vehicle or before boarding.

The local dynamic map (LDM) information is information provided from the server 30, for example, and sequentially updated according to a road condition.

In step S13, display of a traveling section in the traveling route is subsequently started.

Traveling section display data is display data including section information such as an automated driving allowed section, a manual driving section (driver intervention necessary section) of a traveling scheduled road.

The driver can recognize an approach to the manual driving section by viewing the traveling section display data.

This traveling section display is presented on the instrument panel, or displayed next to a work window on a tablet or the like on which the driver performs the secondary task, for example. In this manner, the driver performing the work using the work window can easily recognize the driver intervention necessary section and the automated driving allowed section in the traveling route on the basis of an arrival prediction time axis from a current spot.

A forward schedule and information indicating approach to each spot are presented in this traveling section display. In this traveling section display, the driver intervention necessary section and the automated driving allowed section of the traveling route are presented using the arrival prediction time axis from the current spot. In addition, the driver intervention necessary section includes a manual driving section, a transition section in which a transition from automated driving to manual driving is performed, and a cautious traveling section following automated driving. Details of this traveling section display data will be described below.

In step S14, acquisition of LDM update information is subsequently started. The contents of the traveling section display can be updated to the latest state by acquiring this LDM update information. In step S15, traveling is subsequently started.

Processing in steps S16 to S18 is continuously executed in response to the traveling start.

In step S16, processes for acquisition, analysis, conversion, and recording of the driver information and the environmental information are started.

The data processing unit 11 depicted in FIG. 1 receives inputs of observation information associated with the driver and acquired by the driver information acquisition unit 12 and environmental information acquired by the environmental information acquisition unit 13, such as vehicle information and outside information, and starts the processes for analysis, conversion, and recording of the acquired information.

In addition, in a case where the acquired information includes data not allowed to be recorded as it is under personal information protection regulations, such as a facial image, the data processing unit 11 executes an abstraction process or an encryption process for these data, and executes a process for recording the processed data in the storage unit 16 or the server 30.

Decoding of the encrypted data stored in the storage unit 16 or the server 30 requires a key (e.g., password) known only by the driver.

Details or the processes for acquisition, analysis, conversion, and recording of the driver information and the environmental information in step S16 will be described in a following stage.

In step S17, the display of the traveling section display is subsequently updated on the basis of the position information associated with the own vehicle and the acquired LDM update information. As a result, the traveling section display is scroll-displayed, for example, such that each of the sections is approaching the own vehicle according to traveling.

A specific example of the traveling section display data will be described below.

In step S18, a phenomenon change handling process is subsequently performed. This phenomenon change handling process includes a mode switching process for handling a case where a switching spot already present in the traveling route as a spot for switching between the automated driving mode and the manual driving mode or where the cautious traveling section is approaching, a phenomenon generation process for handling a case where the mode switching spot or the driver intervention necessary section of the caution traveling section is newly generated in the traveling route, and other processes. Thereafter, processing of step S17 and step S18 is repeated in an appropriate manner.

[4. Specific example of traveling section display data]

Next, a specific example of the traveling section display data will be described.

As previously described, the traveling section in the traveling route is displayed in step S13 in the flow presented in FIG. 8, and the process for updating the traveling section display data is executed in step S17.

As described above, the traveling section display data is display data including section information such as the automated driving allowed section and the manual driving section (driver intervention necessary section) of the traveling scheduled road.

For example, the driver executing various secondary tasks during execution of automated driving can recognize an approach to the manual driving section by viewing the traveling section display data.

A specific example of the traveling section display data will be described with reference to FIG. 9 and following figures.

Note that this traveling section display is displayed on the instrument panel, or displayed next to a work window on a tablet or the like on which the driver performs the secondary task, for example. In this manner, the driver performing the work using the work window can easily recognize the driver intervention necessary section and the automated driving allowed section in the traveling route on the basis of an arrival prediction time axis from a current spot.

FIG. 9 depicts an example of traveling section display data displayed on a traveling route determined according to a destination set by the driver. The traveling route includes automated driving allowed sections Sa, manual driving sections Sb, transition sections Sc in which transitions from automated driving to manual driving are performed, and cautious traveling sections Sd following automated driving. Each of the transition sections Sc herein is always located immediately before the manual driving section Sb, and requires the driver to have a return posture to manual driving. Moreover, each of the cautious traveling sections Sd is a section which allows automated driving without change but at a reduced speed, for example, under cautious monitoring by the driver in the returned posture to manual driving.

In the depicted example, the automated driving allowed sections Sa are indicated in green, the manual driving sections Sb are indicated in red, and the transition section Sc and the cautious traveling section Sd are indicated in yellow. Note that each of the colors is indicated in a different pattern for convenience.

For displaying the traveling section with use of a display device such as a center information display of the vehicle 10 or a tablet, each pf the sections of the traveling route described above is indicated on the basis of an arrival prediction time axis from a current spot. The data processing unit 11 performs information processing for displaying the traveling section in the traveling route on the basis of traveling route information and traffic information.

A part (a) of FIG. 10 presents each of the sections of the traveling route on a fixed scale using a travel distance axis from the current spot. A part (b) of FIG. 10 represents a flow speed v(t) of average road traffics at each of the spots. A part (c) of FIG. 10 represents each of the sections indicated on the basis of a time axis after conversion from those indicated on the basis of the shift distance axis, with use of the speed v(t). In this manner, each of the sections of the traveling route is indicated using an arrival prediction time axis from the current spot. Specifically, the sections can be represented using the time axis by dividing physical distances of the traveling route by a predicted average speed for each of the sections.

According to this embodiment, all the sections represented by the traveling section display are divided into three sections as depicted in a part (d) of FIG. 10, and the time axis of each of the sections is varied. Specifically, a first section from the current spot to a first spot (time t0, e.g., approximately 10 minutes) is indicated using a first time axis as a time linear display nearest section. For example, the time t0 is set to a time sufficient for an ordinary driver to complete a secondary task and return to driving. The nearest section approaching according to traveling produces a visually intuitive effect equivalent to indication of traveling at a fixed speed on a map. Therefore, the driver can start preparation for an accurate return to driving according to an approach to a phenomenon. Accordingly, there is offered such an advantageous effect that a point to start the return is instinctively recognizable with some accuracy. In other words, an object of display of this section is to provide start determination information for the user for determining a start of an accurate return point of the driver.

Moreover, a second section from the first spot (time t0) to a second spot (time t1, e.g., approximately one hour) is represented using a time axis sequentially changing from the first time axis to a second time axis reduced from the first time axis at a predetermined ratio, as a time reciprocal display section. In a case of display mainly at a scale magnification equivalent to that of the first section described above, display for a long period is difficult to present in a narrow display space. Accordingly, an object of display of this second section is to provide contrivance for providing an accurate and longer-period road condition for the driver by using narrow display. In this manner, the driver can easily recognize until what spot in a certain fixed preceding section no driving intervention is required according to traveling. Accordingly, there is offered such an advantageous effect that engagement in a secondary task is achievable in a scheduled manner. The second section therefore allows well-organized deriving intervention, and also plays a role of presenting important information for planning a release of the driver from a secondary task or the like produced by an exchange with a third party or the like.

A method for setting the second display section will be described herein with reference to the part (d) of FIG. 10. Assuming that a height of a triangle is h0, a time t at a spot before a distal end of the triangle by h is calculated using the following equation (1).

$$t = t0*h0/h \ ... \ (1)$$

Moreover, the second time axis at the second spot (time t1) is reduced from the first time axis at a rate of hs/h0. For example, in a case of hs = h0/8, the reduction rate is 1/8.

In a case of traveling at a constant vehicle speed, the display of the second display section described above corresponds to display of a traveling linear extension display section on a map as viewed with inclination in the traveling direction, or a state where the front in the road plane is obliquely viewed. In other words, a distance of a display image height position is intuitively obtainable as a visual effect of this display section. Accordingly, this display is considered as such a display where an intuitive distance is easily recognizable without the necessity of display of a scale or the like of accurate position indication on a screen. Moreover, a far section is reduced. This section is not a spot immediately reached by traveling, and therefore requires rough prediction as an important factor but does not require the driver to intuitively recognize precise arrival time information equivalent to that information at a near point. Accordingly, the second section is also suitable for planning of execution of the secondary task.

Moreover, a third section from the second spot (time t1) to a third spot (time t2) is indicated using the second time axis (reduction rate: hs/h0) as a time linear display far section. By this display divided into three sections, the driver is allowed to know details of section information nearest in terms of time, and also know section information farther in terms of time, with a limited display space. Note that human visual resolution, and further, system display resolution may decrease to limit resolution or lower when a far part is displayed without change from the display mode of the second section. In this case, information necessary for planning determination of the secondary task is difficult to discriminate, and the significance of the display function is lost. Accordingly, most effective display is as follows. That is, reduction of the display scale is ended in such a stage where sufficient intuitive recognition of sense of sections in terms of time and appropriate display of classifications of intervention necessary sections and unnecessary sections are both achievable, and display at the fixed scale is performed again in the following sections.

Note that the storage unit 16 of the vehicle 10 stores default values of the times t0, t1, and t3. It also can be considered that the times t0, t1, and t3 for long-distance driving are set to values different from those values for short-distance driving. Accordingly, each of the default values is not limited to one value, but may have a plurality of types such that the driver (user) or the system selectively uses the values according to the traveling route. It also can be considered that the driver (user) sets desired values for the times t0, t1, and t3.

Parts (a) and (b) of FIG. 11 each depict an example of traveling section display finally presented. Note that a length of each arrow indicates whether the time axis is linear, and also represents a change of the reduction rate of the time axis. In the case of the part (a) of FIG. 11, all of the first section, the second section, and the third section are displayed as sections having a first width for each without change.

On the other hand, in the case of the part (b) of FIG. 11, the first section from the current spot to the first spot (time t0) is indicated with the first width, the second section from the first spot (time t0) to the second spot (time t1) is indicated with a width sequentially changed from the first width to a second width smaller than the first width, and the third section from the second spot (time T1) to the third spot (time T2) is indicated with the second width. In this manner, the driver is capable of visually recognizing a degree of reduction of the time axis of the second section and the third section from the first section.

Specifically, the display mode of the part (a) of FIG. 11 is display considering only the reduction rate in the traveling direction. However, as depicted in the part (b) of FIG. 11, the same distance effect as that effect as viewed in an infinite direction along traveling on the road or the map can be further obtained by changing a cross width of the display information with respect to the traveling direction in correspondence with the distance. In this manner, a sense of distance by the arrival time distance is easily and more intuitively recognizable by viewing a screen of a distribution of the driving intervention necessary sections in the part (b) of FIG. 11 than by only viewing the screen in the part (a) of FIG. 11 for a moment. Particularly in a case where only the second section is rotated counterclockwise and viewed, the road width of the front of the road and the arrival time at the corresponding spot become equivalent to those in a case of traveling at a constant speed. Accordingly, the arrival time to each of the spots can be intuitively recognized without the necessity of visual determination of an accurate position memory on the display screen. As a result, the driver can easily achieve time allocation for performing a secondary task, for example.

In addition, if a section having a short time length in a part at a small reduction rate hs/h0 as in the third section, for example, is displayed without change of the time length, this section is indicated as an extremely narrow section. In this case, it is predicted that recognition of this section by the driver becomes difficult. Accordingly, even in a case where the driver intervention section (manual driving section, transition section, cautious traveling section) actually has a fixed time length or smaller, the driver intervention section is displayed as a section having the fixed time length. In this case, in a case where the transition section and the manual driving section are continuously provided, for example, display of the transition section may be omitted. The display of the initial manual driving section Sb of the third section in the parts (a) and (b) of FIG. 11 corresponds to such a state. In this manner, the driver intervention necessary section having a small time length can be displayed in such a manner as to be recognizable by the driver in the third section where the time axis is considerably reduced. In other words, this display plays a role of prevention of overlooking.

Moreover, in a case where the manual driving section Sb intermittently continues in a short cycle in the part at a small reduction rate hs/h0 as in the third section, the entire part is represented as the continuous manual driving section Sb. The display of the second manual driving section Sb of the third section in each of the parts (a) and (b) of FIG. 11 corresponds to the connected display state described above. The manual driving section Sb displayed in such a manner actually includes the transition section Sd and the automated driving allowed section Sa each as a short period, in addition to the manual driving section Sb, as depicted in the part (c) of FIG. 11. Note that details of a location can be presented in response to a double touch at the corresponding location, for example, in a state where the traveling section is displayed on a tablet or the like as described below.

The traveling section display on the traveling route as described above is updated on the basis of the position information associated with the own vehicle and the acquired LDM update information. In this manner, the traveling section display is scroll-displayed such that each of the sections is approaching the own vehicle according to an elapse of time. Parts (a) to (d) of FIG. 12 each depict a change example of the traveling section display according to an elapse of time. This example represents an example where the second section is displayed in a tapered shape. However, the same is applicable to a case where all the sections are indicated as sections having the same width.

In this case, shifts between the sections in the first section are rapidly achieved. Moreover, reduction of the time axis in the second section decreases with nearness to the first section from the third section. Accordingly, display shifts between the sections more rapidly with nearness to the first section. Further, the time axis is more reduced in the third sections. Accordingly, display slowly shifts between the sections.

[5. Traveling control process accompanied by communication with control center]

Described next will be a traveling control process performed by the vehicle 10 and accompanied by communication with the control center 40 depicted in FIG. 1.

For example, there is such a case where the driver sits on the driver's seat of the vehicle 10 capable of switching between automated driving and manual driving during traveling as depicted in FIG. 1 previously described and needs switching to manual driving during traveling by automated driving. However, it may be difficult for the driver to transit from automated driving to manual driving even with an early notification if the driver is dozing, for example. In such a case, safe traveling is achievable if the vehicle travels under remote assistance, such as remote control from the control center 40 depicted in FIG. 1, for example.

Such traveling control requiring communication with the control center 40 will be hereinafter described.

While the driver is executing a task other than driving (i.e., secondary task/NDRA: Non Driving Related Activity) during use of automated driving, the system (data processing unit) of the vehicle 10 determines that automated driving may be difficult to continue, on the basis of information acquired by the environmental information acquisition unit 13 or the like, such as occurrence of an accident on the front side, and issues a return notification for the driver to return to manual driving.

In a case where it is difficult for the driver to complete a transition to normal manual driving within an extension of time in this situation, a process for urgently decelerating the vehicle 10 or stopping the vehicle 10 is performed to prevent an accident, with use of a risk minimization vehicle controller (MRM: Minimum Risk Maneuver) included in the system (data processing unit) of the vehicle 10.

However, thoughtless deceleration in a condition of a large traffic volume on a main road or simple stopping of the vehicle in a narrow road section may cause a collision by a following vehicle, or completely blocks a passage-allowed road, and therefore may generate considerable obstruction to efficiency of traffic infrastructure essential for societies.

For reducing these social negative factors, timely and precise driving assistance by the remote control center 40 is effective in a case where manual driving transition by the driver is determined to be difficult. The remote assistance allows continuation of safe traveling without urgent speed reduction or stop by MRM.

For obtaining effective remote assistance, such a state where an instruction providing service from a controller of the control center 40 or a remote control service by a remote operator actually performing remote traveling control is offerable needs to be produced without a delay from a timing at which remote assistance is necessary.

Note that a controller and an operator (remote driving assistance operator) are stationed in the control center 40. The controller mainly provides instructions, advice, and priority allocation triage of the operator for the driver of the vehicle. The operator (remote driving assistance operator) performs a process for achieving traveling of the vehicle under remote control.

Automated traveling of a vehicle at a high speed in any environment is still considered to be difficult at a current technical level of automated driving. Accordingly, switching from automated driving to manual driving is needed as necessary.

For example, in a case where an appropriate return to manual driving cannot be achieved by the driver even at the time of approach to a section where the vehicle is difficult to pass by automated driving, it is possible that the system is required to make an emergency stop of the vehicle with use of the risk minimization vehicle controller (MRM). In that case, the vehicle becomes an obstruction to traffics if the emergency stop is made in a narrow road section.

Many privately owned vehicles each have an advantage of availability as means of transportation from any departure spot A to any destination spot B. It is difficult for the driver to complete automated traveling for all courses of this journey without performing steering operation.

Accordingly, in a case where the system (data processing unit) of the vehicle 10 determines that passage through a section is difficult without switching from automated driving, on the basis of information obtained from a local dynamic map (LDM) or performance of a mounted device, for example, the system requests remote assistance from the outside control center 40, in place of the driver. If this remote assistance service from the control center 40 is receivable in a timely manner, it is allowed to prevent execution of urgent handling control of the vehicle, such as an emergency stop by the risk minimization vehicle controller (MRM).

For example, even when passing through a section is difficult without change from automated driving is present at the time of travel from the departure spot A to the destination spot B, the vehicle 10 depicted in FIG. 1 is capable of continuing automated driving under remote driving assistance by receiving the remote assistance service from the control center 40 in the corresponding section. Accordingly, the driver 20 is allowed to continuously execute a secondary task other than driving.

By offering a timely remote steering assistance service as described above, safe automated driving is allowed to continue even when the driver is away from the driving steering operation. As a result, usability increases without increasing socially negative factors such as an emergency stop using the risk minimization vehicle controller (MRM).

However, for achieving the remote driving assistance for many vehicles in a timely manner without a time delay, a large number of operators corresponding to the number of traveling vehicles, i.e., controllers or remote steering operators, need to be permanently stationed in the control center 40.

The mechanism of the remote assistance given by the control center 40 is a service for the driver as a beneficiary, and thus is difficult to offer inexhaustibly. Accordingly, management reducing unnecessary use is required.

It is also necessary to provide such a mechanism which prevents excessive use of the remote assistance services given from the control center 40 to the driver and reduces the use of the service. For example, a pay-per-use system applied to excessive use is one of effective measures. Moreover, such management which gives an incentive to an excellent driver using a smaller volume of services is also effective.

It is considered to be effective, as the remote driving assistance service, to construct a mechanism for giving an incentive, a charge, or a penalty to a user of the remote assistance service according to a use mode, a mechanism for determining appropriateness of use of the service by the user, a mechanism for notifying the user of a determination result, or the like to maintain an optimum balance between supply and demand of controllers giving instructions or advices to the driver and operators providing actual remote driving assistance.

In a case of passing through a certain vehicle traveling section, the vehicle 10 or the driver 20 can take an optimum measure if the driver or the automated driving system (data processing unit 11) of the vehicle 10 can acquire beforehand information indicating whether the remote driving assistance is needed in that section, whether supply of sufficient control services is reliably provided during passage of this section, and whether sufficient remote steering operators allocated by the control service are reliably provided, or the like.

For example, a route change can be made in advance, or such a measure which urges temporary entrance into a service area and a wait thereat can be executed.

Further adoptable is such a measure which finds a vehicle for leading and guide-traveling and performs automated traveling for following that vehicle as a paired vehicle, for example.

As described above, if supply availability information associated with the controller or the actual steering operator of the control center 40, information indicating presence or absence of the vehicle allowing guide traveling, information indicating a vacant space in a waiting place such as a service area are combined and offered for the automated traveling vehicle, the driver of the vehicle can take measures such as early evacuation to an ordinary road, waiting in a service area, and giving an incentive point to a different vehicle and requesting a guidance as a leading vehicle.

For example, if these types of information are obtained, even in a case where an immediate return to manual driving is difficult for the driver during traveling on a main road from which evacuation is difficult, such as Metropolitan Expressway in Tokyo, the driver or the driving system (data processing unit 11) of the automated vehicle 10 can determine to take such a measure for entering an ordinary road, where speed reduction or a vehicle stop is allowed, from the main road in an early stage. As a result, traffic obstruction to a following vehicle on the main road is avoidable, for example.

However, for example, the supply availability information associated with the controller or the actual steering operator of the control center 40 is sequentially changed. Accordingly, acquisition of an actual status is not easy.

Moreover, each vehicle or each user (driver) of the remote assistance service has different needs. Accordingly, smooth management is achievable by adopting a configuration capable of offering information in a form suited for the needs of the users, and allowing the user to select a service suited for priority of needs of the user.

It is assumed that the remote assistance service is used by the user (driver) in various modes. For example, the following use modes are assumed as specific use modes.

(a) use by a traveling vehicle along a regulated route, such as a school bus, for which a traveling route or a destination has been determined without the necessity of any intervention by the user for driving,
(b) use, by a driver who is an aged person or a person suffering from a disease and unable to drive a vehicle, for a purpose of travel to a hospital or for shopping,
(c) use by an unmanned transport vehicle for transportation to a main collection site of agricultural products in a less-populated area,
(d) triage-type use for allowing use of the remote assistance service with priority on the basis of a priority degree according to a level of urgency,
(e) use by an ordinary driver unable to appropriately conduct a transition to manual driving in response to a manual driving request from the system (secondary task execution assistance for the driver),
(f) use at an entrance or an exit of an express way where automated driving by leading vehicle following traveling ends, use by a vehicle having evacuated to a road shoulder at the time of abnormality, or the like, and
(g) use at the time of passing through a manual driving necessary section during execution of automated driving using a leading vehicle.

For example, the various types of use modes of the remote assistance service described above are assumed.

The control center 40 is required to appropriately allocate a finite number of controllers or remote driving assistance operators to these various types of use modes of the remote assistance service.

[6. Configuration for providing information with additional information set on traveling section display data]

Next, a configuration for providing information with additional information set on traveling section display data will be described.

The traveling section display data described above with reference to FIGS. 9 to 12 is one of mechanisms for assisting a return to intervention by the driver on each of approaching roads on the traveling route during use of automated driving by the driver.

However, the display examples described with reference to FIGS. 9 to 12 are display examples of only the traveling section display data. Specifically, the display examples are examples of only traveling section display data including position information associated with the following sections.

the automated driving allowed sections Sa,
the manual driving sections Sb,
the transition sections Sc in which transitions from automated driving to manual driving are performed, and
the cautious traveling sections Sd.

The data processing unit 11 included in the configuration in FIG. 1 further generates information useful for the user (driver) for this traveling section display data as additional information, and presents the information to the user (driver).

A specific example of the additional information will be described with reference to FIG. 13 and following figures.

FIG. 13 presents the following additional information display examples.

additional information "a": a section providing a low-speed detour road when a return to manual driving is impossible (e.g., an ordinary road parallel to a highway),
additional information "b": a section exhibiting a rush-out risk, a section requiring manual traveling under caution,
additional information "c": a manual driving return abandon prohibition region (a section subject to punishment) (e.g., section which can have a traffic jam or roadblock by lane reduction), and
additional information d: a section which can considerably change a section length, such as a traffic jam section.

For example, each of these items of additional information is displayed as a combination of a specific color region or icon and explanatory information as depicted in FIG. 13.

The user (driver) is allowed to check detailed information concerning a traveling direction of the vehicle with reference to these items of information.

Note that adoptable is such a setting which displays only icons to present explanation in a case where the user performs a touch process or a click process for any of the icons.

Further adoptable is such a configuration which displays information indicating signs equipped on a road, a gas station, a service area, a construction, or the like, detour road information, and the like as depicted in FIG. 14. FIG. 14 presents the following additional information display examples.

additional information e1 to e5: sign information, gas station information, and
additional information "f": detour road position guide information.

Note that the additional information e1 and the additional information "f" depicted in FIG. 14 are each detour road information before entrance into a manual driving section, for example, and provided as indication information available in a case where entrance into another automated driving section via a detour road is allowed, for example.

Further, arrival time information indicating an arrival time at each of the sections (Sa to Sd) presented on traveling section display data 70 may be displayed, as additional information "g" depicted in FIG. 15.

In addition, time conversion (or distance) display magnification ratio information for each of the display sections (short-distance section to long-distance section) may be further displayed, as additional information "h" depicted in FIG. 15.

In the example depicted in FIG. 15, the magnification ratio of the short-distance section is 1:1, while that ratio of the long-distance section is 1:25. In a case where an actual section length of the short-distance section in units of a predetermined unit length is 1 Km, for example, an actual section length of the long-distance section in units of the same predetermined unit length is 25 Km.

An actual section length of an intermediate-distance section in units of the same predetermined unit length is t × 1 Km.

In the above description, the "distance" is used for explanation with a concept that a map is viewed from above. However, in a case of implementation as display by an actual device, an arrival time at each of the spots is information necessary for most important behavior determination. Accordingly, it is preferable that a display axis for the traveling direction is an axis of display converted into a predicted arrival time.

Moreover, as depicted in FIG. 16, various types of timings information may be additionally displayed as additional information. FIG. 16 presents the following additional information display examples.

additional information "m": risk minimization vehicle controller (MRM: Minimum Risk Maneuver) start point position (timing for starting urgent deceleration, stop, or evacuation in a case where detection of a start of a manual driving return procedure is difficult),
additional information n1: a notification point (a notification point for manual driving return request notification),
additional information n2: a warning point (a warning point for manual driving return request), and
additional information "p": a remaining time until a notification point.

The user (driver) can check detailed information associated with various notifications, warnings, an automated driving control process, or the like given in the future, on the basis of these items of additional information.

Note that a display position and display a timing of each of these items of additional information may be changed on the basis of behavior information associated with the user (driver).

For example, a display mode depicted in FIG. 16 is adopted in a case where the user (driver) sits on the driver's seat in such a state as to be able to immediately return to manual driving. A display mode depicted in FIG. 17 is adopted in a case where the user (driver) is away from the driver's seat, or not in a state allowing an immediately return to manual driving, such as a case of sleeping.

FIG. 17 depicts additional information similar to that of FIG. 16. However, display positions and time information associated with the following items of information are displayed at positions close to a current position and a current time.

additional information n1: a notification point (a notification point for manual driving return request notification),
additional information n2: a warning point (a warning point for manual driving return request), and
additional information "p": a remaining time until a notification point.

The manner of display described above allows the user (driver) to recognize a highly urgent state and to start preparation for a return to manual driving at an early timing.

FIG. 18 is a diagram depicting an example of an update process for the additional information with an elapse of time.

Specifically, FIG. 18 depicts an example of an update process for display data including the following additional information according to an elapse of time (t1 to t3).

> additional information "m": risk minimization vehicle controller (MRM: Minimum Risk Maneuver) start point position (timing for starting urgent deceleration, stop, or evacuation in a case where detection of a start of a manual driving return procedure is difficult), additional information n1: a notification point (a notification point for manual driving return request notification),
> additional information "p": a remaining time until a notification point,
> additional information "e": sign (sign indicating detour road, and
> additional information "f": detour road position guide information.

Each of the time t1 and the time t2 is an example of display data being in a state where entrance into a detour road is allowed.

The display data indicates the following additional information.

> additional information "e": sign (sign indicating detour road), and
> additional information "f": detour road position guide information.

The time t3 is an example of display data at a time when entrance into a detour road is impossible.

The display data at the time t3 is updated to a state where the following items of additional information are not displayed.

> additional information "e": sign (sign indicating detour road), and
> additional information "f": detour road position guide information.

In such a manner, the data processing unit executes display control for selecting and displaying only information available for the user (driver) at each time point.

As described above, the user (driver) can check beforehand a fact that a section not allowing use of automated driving is approaching, for example, with reference to additional information set for traveling section display data and provided for the user (driver).

The user (driver) can recognize beforehand a risk changeable according to traveling on the traveling route, such as whether a future traveling route is in a state where travelling in the automated driving mode is impossible, by checking the traveling section display data for which the additional information has been set.

For example, during traveling on an expressway, information indicating an arrival time at an exit from the express way, an SA or a PA as a rest area, or the like can be obtained.

However, the user is unable to check an optimum measure only on the basis of these types of information in a case where switching to manual driving and passing through a section are impossible even at the time of approach to an end point of the section allowing traveling by automated driving.

In other words, the user is completely unable to recognize whether to perform an emergency stop process or the like using the risk minimization vehicle controller (MRM), or whether the current state is such a situation where automated driving is allowed to continue by receiving supports such as remote driving assistance.

That is, the user has no information in advance for checking whether or not an expected remote driving assistance service is receivable at a spot where a transition to manual driving is necessary, in a case where automated driving is continued under the control of the system (data processing unit 11) of the vehicle 10 without change.

As a result, if remote assistance from the control center 40 cannot be received and the user (driver) cannot return to manual driving, for example, the system of the vehicle 10 starts control such as an urgent avoidance process like an emergency stop using the risk minimization vehicle controller (MRM), for example. In this case, social obstruction such as a traffic obstruction on a road may be caused.

[7. Specific example of transition process from automated driving to manual driving]

A specific example of a transition process from automated driving to manual driving will be subsequently described.

During execution of automated driving, the driver performs a secondary task other than driving, or is dozing, for example. In a case where a transition process from automated driving to manual driving is performed in such a situation, a mechanism for increasing a success rate of returning to manual driving is needed.

When the driver executes a task other than driving (= NDRA, secondary task) on the vehicle equipped with an automated driving function, many of working memories of the brain come into a status associated with memorization of the secondary task.

In such a situation, a short-term memory is occupied by contents associated with the secondary task even after interruption of the secondary task. As a result, it becomes difficult to recognize in a short time a status of driving steering which is originally a primary task.

For example, in a case where a visual line is directed to a display where a game played as a secondary task is displayed, the user (driver) initially starts collection of information which compensates for lacking information by visual checking of a front road traveling environment, and then starts thinking for making various determinations for switching driving of the vehicle during automated traveling to manual driving. This process requires a predetermined time. Accordingly, a return to the primary task, i.e., manual driving, can be delayed.

Determination of a behavior by a human is made by projection of a future risk mainly based on his/her memory. When a human feels some danger, the human makes determination on the basis of information remaining in a working memory of the brain at that moment. For rapidly making this determination, it is effective to multidimensionally leave a largest possible volume of information as determination factors.

Accordingly, even during execution of the secondary task by the user (driver), accurate determination can be made in a short time if memory information necessary for determination of a future risk is retained in the working memory of the brain.

Note that the present applicant has already filed a plurality of patent applications relating to a configuration for reducing a time required for a return to manual driving as described above.

Specifically, the present applicant has filed the following patent applications.

    (1) PCT Patent Application PCT/JP2018/038740 (PCT Patent Publication WO2019/082774),
    (2) PCT Patent Application PCT/JP2018/000095 (PCT Patent Publication WO2018/135318),
    (3) Japanese Patent Application 2018-171586 (PCT Patent Application PCT/JP2019/034078), and
    (4) Japanese Patent Application 2019-079644

For example, the patent application (1) mentioned above discloses a configuration which generates short, middle, and long term display data in muti-scale time series and which presents the generated data to the user (driver) to provide information indicating phenomena caused in the near future.

The patent application (2) mentioned above discloses a configuration which psychologically gives a returning stimulus to the user (driver) by giving a penalty to a delay of a return to manual driving.

Further, the patent application (3) mentioned above cooks a configuration which causes the user (driver) to execute a predetermined assignment and evaluate a result of success or failure to determine a thinking state or a wakefulness state of the user (driver).

Moreover, the patent application (4) mentioned above discloses a configuration for providing information indicating a penalty or a risk for the user (driver).

For example, the following processes can be achieved by using a combination of these configurations.

By using the configuration described in the above patent application (1), a rough future prospect of the necessity of manual driving and remote assistance in a traveling route of the vehicle until an arrival at a destination can be recognized.

By using the configuration described in the above patent application (2), a penalty imposed in a case of a delay at the time of a transition to manual driving can be checked.

Further, by using the configuration described in the above patent application (3), a penalty does not become a mere formality but can be strengthened as a risk stimulus by recording the result of success or failure of the assignment presented to the user (driver). Accordingly, a psychological weight can be added to the importance of determination of execution of a manual driving transition.

Moreover, by using the configuration described in the above patent application (4), a risk produced in a case where a request for a manual driving transition is not received in an early stage is visually presented to the user (driver). In this manner, the stimulus can become a more reliable stimulus.

The configurations described in these patent applications are configurations mainly for increasing reliability of returning to manual driving by the driver. However, in a case where the return to manual driving is not completed by the driver at the time of entering from the automated driving section to the manual driving section, the system of the vehicle having only these configurations is highly likely to perform an emergency stop process using the risk minimization vehicle controller (MRM). As a result, a traffic obstruction or a traffic jam is caused.

For reducing a risk of traffic blocking of such types, it is necessary to adopt a mechanism other than the measure for increasing reliability of the return to manual driving by the driver. Specifically, even in a case where the return to manual driving by the driver is not achieved, the necessity of performing the emergency stop process by the system of the vehicle using the risk minimization vehicle controller (MRM) is eliminated by receiving the remote driving assistance service from the control center 40. As a result, occurrence of traffic obstruction or a traffic jam is avoidable.

However, for reliably receiving the remote driving assistance service from the control center 40 at the timing of entering to the manual driving section from the automated driving section, the controller or the operator in the control center 40 is required to be in a service offerable state. To meet this requirement, a balance between supply and demand of the service needs to be maintained.

For urging the driver to behave in a manner not causing traffic obstruction, it is effective to provide the following information for the driver, for example.

Future traveling route prediction information, i.e., information associated with a situation ahead in the traveling direction, and

information indicating choices of means for avoiding traffic obstruction caused by an emergency stop or the like and risk determination information for each choice.

For example, it is effective to provide these types of information for the driver.

Even if only information indicating the presence or absence of the remote driving assistance service is provided for the driver, it is difficult to determine whether or not a service is actually receivable, depending on availability of the controller, the operator, the communication capacity in the region, or the like. Accordingly, this information is insufficient as provided information.

In a case of determination that continuation of automated driving is difficult, the system (data processing unit 11) of the vehicle 10 initially issues a request for a transition from automated driving to manual driving to the driver.

The request for a transition from automated driving to manual driving to the driver needs to be issued sufficiently before a start of the manual driving section.

An example of a transition process from automated driving to manual driving will be described with reference to FIG. 19.

FIG. 19 depicts the vehicle 10 during traveling in an automated driving section. A manual driving section is approaching in the front.

FIG. 19 presents the following timing points along a time axis (t) extending from the left to the right in FIG. 19.

> t1: notification timing for switching to manual driving,
> t2: final exit allowing evacuation from automated driving,
> t3: limiting point of emergency stop by MRM, and
> tc: manual driving section start point.

The driver information acquisition unit 12 of the vehicle 10 executes monitoring of the driver 12 of the vehicle 10 currently executing automated driving. The system (data processing unit 11) of the vehicle 10 determines a notification timing for issuing a request for switching to manual driving according to a driver state obtained by this monitoring process.

The system (data processing unit 11) of the vehicle 10 learns behavior characteristics and the like of the driver in a stereotypical manner, and calculates the optimum notification timing. For example, the system (data processing unit 11) estimates a driver wakeful state based on an observed state of the driver, and calculates a notification time at which a normal transition is highly likely to be completed, with reference to correlation data between a distribution which is associated with the time required until a driving return and which is generated beforehand and a return success rate on a current traveling road.

Thereafter, the system issues a notification at a spot corresponding to the calculation and at a point before an arrival at a target transition spot.

Note that a learner used at the time of a process for estimating a manual driving return allowed time can be set for each driver, or can be set in such a manner as to have observation information including types of secondary tasks during execution of automated driving.

In this case, performed is a process (manual driving return allowed time estimation process) which uses, as observation information, personal identification information associated with the driver currently driving, and information indicating the type of the secondary tasks currently executed.

FIG. 20(a) depicts an example of a distribution of a plurality of pieces of information (observation plots) associated with a relation between an observable evaluation value corresponding to an observation value and a return delay time (i.e., manual driving return allowed time). This example corresponds to a certain type of secondary task of a certain driver. For calculating a return delay time from the plurality of pieces of relation information (observation plots), relation information (observation plots) within a region having a fixed width in an evaluation value direction and corresponding to acquired observation values (indicated by a broken rectangular frame) are extracted. A dotted line "c" in FIG. 20(a) indicates a boundary line when a return delay time at a return success rate of 0.95 in FIG. 20(b) described below is observed using observation values of a different driver.

A region securing a success of a return from automated driving to manual driving by the driver at a rate of 0.95 or higher is obtained by issuing, at an extension time longer than the dotted line "c," i.e., an earlier extension time, a return notification or an alarm for the driver to return from automated driving to manual driving. Note that a target value for a normal return from automated driving to manual driving by the driver for each case (RRR: Request for Recovery Ratio) is determined on the basis of the necessity of infrastructure on the road side, for example, and provided for an individual vehicle passing through the section.

Note that, in a case where no obstructive factor is produced for surroundings even at the time of a stop of the vehicle on the traveling road, it is sufficient if such a measure which stops the vehicle and reduces a vehicle speed until a speed at which the system can handle is taken. Generally, a stop of a vehicle on a traveling road is not necessarily considered to be preferable in many cases, and therefore a high return rate is desired to be set as a default. Particularly in a case of a particular route in Metropolitan Expressway or the like, an extremely high return success rate is required as a default even if updated information is given from infrastructure.

FIG. 20(b) depicts a relation between the return delay time and the return success rate obtained on the basis of the plurality of pieces of the extracted relation information (observation plots). A curve "a" herein indicates a single success rate at each return delay time, while a curve "b" indicates a cumulative success rate at each return delay time. In this case, a return delay time t1 is calculated on the basis of the curve "b" such that a predetermined rate of the success rate, or a success rate of 0.95 in the example depicted in FIG. 20(b), can be obtained.

For example, this calculation process is performed using distribution information indicating a plurality of pieces of information (observation plots) associated with a relation between the observable evaluation value and the return delay time previously acquired and stored in the storage unit.

FIG. 21 is a chart explaining a manual driving return allowed time according to a type of a process executed when the driver is in a state separated from driving steering work in the automated driving mode (secondary task).

Each of distribution profiles corresponds to an observation value depicted in FIG. 20(b), i.e., the curve "a" predicted on the basis of the driver state. Specifically, for completing the return from automated driving to manual driving at a transition point at a necessary return probability, it is continuously monitored, until completion of a transition, whether each return stage has reached a state actually necessary for the return on the basis of the time t1 at which the corresponding profile (return success rate profile in FIG. 20(b)) becomes a desired value with reference to a previous characteristic of the driver necessary for the return on the basis of an observation value that allows evaluation of the wakefulness level of the driver and that is detected in each stage.

For example, an initial curve obtained while the driver is taking a nap is an average distribution of total return delay characteristics of the corresponding driver after an issue of a wakefulness alarm on the basis of estimation of a sleep level obtained from observation information such as breathing and a pulse wave passively monitored in a nap period during automated driving. Each of intermediate distributions is determined according to the driver state observed during a subsequent shift return procedure after wakening. A timing presented on the right side of FIG. 21 at which a wakefulness alarm can be issued in time is determined by observing "6. in case of taking nap" presented in FIG. 21. The subsequent intermediate courses are return time distributions in a return budget predicted from an observable driver state evaluation value at a prediction intermediate point.

No violation of a remaining transition time limit sequentially decreasing until a transition is completed is continuously observed for each intermediate stage. In a case of the presence of a violation risk, a handling process such as deceleration and generation of a time extension is performed. In addition, when a return starts from "4. non-driving posture irregular rotational sitting" in the absence of steps of "6. in case of taking nap" and "5. sitting," for example, a return process starts from initial status recognition and understanding. In this case, a thinking process of the same item in the state "4. non-driving posture irregular rotational sitting" as an intermediate step starting from "6. in case of taking nap" is in a return consciousness process even though the posture is the same. Accordingly, in a case of a start from status recognition initially from the posture of "4. non-driving posture irregular rotational sitting," the distribution becomes longer due to the necessity of a time for status recognition.

Further, there is a case where information associated with a relation between the observable evaluation value and the return delay time of the driver currently driving is not sufficiently accumulated in the storage unit. In such a case, the return delay time t1 can be calculated using assumed distribution information prepared beforehand in the storage unit as return characteristic information generated on the basis of information collected from a driver population in the same generation, for example. This return information is not sufficiently learned yet concerning driver unique characteristics, and therefore may be used at the same return probability or given a setting of higher return success rate on the basis of this information. Note that an inexperienced user is more cautious in ergonomic view, and therefore expected to return in an early stage in an initial stage of use. The driver adapts himself or herself to a behavior corresponding to a notification from the system as the driver gets accustomed to the use. In addition, in a case of use of different vehicles in such fields as a logistics industry operating a large number of vehicles, a transportation industry such as a bus company and a taxi company, and a car sharing or car rental industry, data of return characteristics is not necessarily required to be retained in each individual vehicle, but may be processed in a remote learning process or retained by managing and learning observable information and return characteristics of driving in a concentrated or dispersed manner using a remote server or the like after personal identification of the driver.

Moreover, it is assumed in this description that the return success rate is defined as a uniform time until success or failure because of a fact that the notification timing is important. However, success or failure of switching from automated driving to manual driving is not limited to success or failure using binary values, but may be further discriminated on the basis of extended return transition quality. Specifically, a delay time of a return procedure transition until actual return checking, a return start delay from a notification, stagnation of an intermediate return action, or the like may be further input to the learner as both a return within an allowable time and a return quality evaluation value.

[8. Use example of remote driving assistance service at transition process timing from automated driving to manual driving]

Next, a use example of a remote driving assistance service at a transition process timing from automated driving to manual driving will be described.

The transition process from automated driving to manual driving described above with reference to FIG. 19 is a processing example in a case where a remote driving assistance service from the control center 40 is absent.

In a case where the driving assistance service from the control center 40 is present, the driver 20 of the vehicle 10 is allowed to continue automated driving under a remote driving assistance service from the control center 40 without a return to manual driving.

FIG. 22 is a figure depicting an example of a transition process from automated driving to manual driving similarly to FIG. 19 explained above. FIG. 22 depicts the vehicle 10 during traveling in an automated driving section. A manual driving section is approaching in the front.

FIG. 22 presents the following timing points along a time axis (t) extending from the left to the right in FIG. 22 similarly to FIG. 19 described above.

t1: notification timing for switching to manual driving,
t2: final exit allowing evacuation from automated driving,
t3: limiting point of emergency stop by MRM, and
tc: manual driving section start point.

FIG. 22 further presents the following timing.
tx: remote driving assistance service request final allowable point

If the driver of the vehicle 10 or the automated driving system of the vehicle requests the control center 40 to offer the driving assistance service by this timing, automated driving is allowed to continue under the driving assistance from the control center 40 in a subsequent manual driving section.

However, this timing tx changes according to a status of the controller or the operator of the control center. Driving assistance service supply availability information or risk information is offered for the driver or the automated driving system of the vehicle until the timing tx. This information is provided from the server 30 or the control center 40 depicted in FIG. 1.

[9. Composite use example of remote driving assistance service]

Next, a composite use example of a remote driving assistance service will be described.

As described with reference to FIG. 22, a use mode adopted in a case where an appropriate transition to manual driving is impossible to be achieved by the driver during automated driving of the vehicle is an example of the effective use mode of the remote driving assistance service offered from the control center 40.

In such a case, urgent handing immediately achieved by the operator of the control center 40 is required.

On the other hand, in such a use mode as to receive the remote driving assistance service to continue traveling under automated driving at the time of occurrence of abnormality of the vehicle traveling on a regular route at a low speed, such as a loop-line bus, urgent handling immediately achieved by the operator of the control center 40 is not necessarily needed.

As described above, there are various use modes and urgency levels of the remote driving assistance service offered from the control center 40. Accordingly, for efficient management of the operator, it is necessary to acquire information associated with a route that requires assistance, a vehicle that highly requires assistance, and the like, and analyze these types of information.

Moreover, effective is such a process which offers such information as to give an incentive to a driver in a case where information effective for offering the remote driving assistance service is received from the vehicle of the driver, the vehicle being among vehicles in a road section of a monitoring area in a predetermined wide region monitored by a fixed number of controllers of the control center 40, and, on the other hand, to give a penalty such as a predetermined charge to a vehicle receiving the remote driving assistance service.

This process allows the driver as a service beneficiary to contribute to improvement of quality of the service, and appropriately determine the use of the service.

In addition, in a case where the vehicle 10 depicted in FIG. 22 proceeds to a switching spot from the automated driving section to the manual driving section and then requests the control center 40 to offer remote driving assistance at the switching spot, for example, the vehicle 10 has no choice but to make an emergency stop using the risk minimization controller (MRM), for example, if the vehicle 10 cannot receive the assistance immediately.

The numbers of the controllers and the operators of the control center 40 are limited. Accordingly, it is difficult to allocate the controller and the operator to each vehicle. It is not known when a phenomenon occurs. It is therefore difficult in view of cost to arrange many controllers and operators in a standby state to cope with such a phenomenon.

Accordingly, even if a request for receiving the remote driving assistance service is given from a certain vehicle, this request is rejected in a case where the controllers or the operators are handling different vehicles. As a result, an emergency stop can be made using the risk minimization controller (MRM).

For offering an appropriate service for a large number of vehicles by using a limited number of controllers and remote driving assistance operators, it is effective to set a priority order for offering the service, or construct a mechanism for preventing excessive service dependency on the driver side corresponding to the user side.

As the mechanism for preventing excessive service dependency on the driver side corresponding to the user side, it is effective to provide a mechanism which sets a charge for use of the service and gives an incentive in a case of no use of the service.

Moreover, it is preferable to offer a largest possible volume of information for the driver as the vehicle user to determine whether or not to receive the remote driving assistance service. For example, it is preferable to offer the following items of information for the driver as the vehicle user.

information indicating in which traveling section the remote driving assistance service is receivable, and information associated with a handling method in a case where the assistance is not receivable, such as information indicating an evacuation route to a service area and an evacuation route from a stop prohibited road section of Metropolitan Expressway or the like to a road allowing low-speed traveling or stopping in an ordinary town area.

Note that the congestion level of the controllers and the operators is updated from moment to moment. Accordingly, it is necessary to constantly update information and offer latest information.

High-speed traveling is required on a main road as long as no stagnation of traveling is produced as a result of a traffic jam or the like. Adoptable is such a configuration which offers a remote driving assistance service limited to a region other than the section that requires high-speed traveling as described above, the region allowing only low-speed traveling.

This is a use mode as a low-speed mobility service, i.e., what is generally called Maas (Mobility as a service) assuming use in a narrow range, and uses automated driving only in a limited region, for example. Specifically, this mode includes a use mode of an unmanned automated driving vehicle called "Last One Mile" or the like, for example.

One idea also conceivable is such a configuration which provides the service only for a school bus operating in a low-speed traveling route not using a main road, a vehicle publicly operating in a depopulated area, or the like, as described above.

If automated driving is attempted in a high-speed traveling section such as a main road, deceleration or stopping of the vehicle may cause a traffic jam or a collision. Moreover, if automated driving is attempted in a high-speed traveling section, the vehicle itself is required to achieve high-level ambient environmental recognition performance or high-level signal processing performance based on acquired information. Further, freshness or an information volume of map data of the traveling environment considerably increases, and causes a problem of raising initial investment or maintenance and management cost.

However, it is generally difficult to constitute a route of a vehicle to a destination only by a low-speed traveling route.

Many main roads such as a highway do not allow traveling of low-speed traveling vehicles. Accordingly, in a case where a low-speed traveling vehicle performing automated traveling only in a low-speed traveling allowed section attempts to travel in a high-speed traveling section, manual driving is required in a high-speed traveling section.

If the remote driving assistance service is receivable from the control center 40 in the high-speed traveling section as described above, the low-speed traveling vehicle performing automated traveling only in a low-speed traveling allowed section is also capable of achieving automated driving at a high speed. Accordingly, a travelable route range considerably expands.

However, for achieving high-speed traveling automated driving while receiving the remote driving assistance service, a seamless remote driving assistance service needs to be received. It is therefore necessary to create a system capable of constantly supplying a fixed and stable remote support. For continuously maintaining and managing this service supply system in an institutional manner, it is also essential to secure a demand for a stable and continuous service. In other words, a balanced state between demand and supply of the service is required.

Note that only users board a vehicle without a driver in a public transportation service such as a bus performing low-speed automated driving in many cases. In such a case, the service use mode as described above where the user issues an instruction to the control system of the vehicle and requests the control center 40 to offer the remote driving assistance service is not adoptable.

On the other hand, if a user of an ordinary vehicle thoughtlessly requests the control center 40 to offer the remote driving assistance service when using automated driving, a load on the control center 40, a load on the operator, and a communication resource load increase. As a result, the service itself is highly likely to stagnate.

One of advantages produced when the driver uses the automated driving function is that the driver is allowed to be away from driving steering and perform a secondary task in this period.

For concentrating on the secondary task, it is important to maintain such a state where the remote driving assistance service is constantly available in a stable manner.

However, if the driver is excessively dependent on the remote driving assistance service, it is possible that the driver rejects a return to manual driving even at the time of issue of a manual driving return request to the driver from the system of the vehicle. In this case, it is possible that a dangerous state is produced if the remote driving assistance service cannot be offered at that timing.

Accordingly, the driver needs to constantly realize that a situation requiring a return to manual driving can be caused regardless of offerability of the remote driving assistance service. For achieving this purpose, such a measure which imposes a charge on use of the remote driving assistance service, or a penalty on unnecessary use of the remote driving assistance service needs to be taken.

Such a measure allows the user to use the remote driving assistance service in an appropriate manner without excessive dependency on the remote driving assistance service. As a result, a demand for the remote driving assistance service can be reduced in an appropriate manner, and supply and demand become well-balanced.

The driver of the automated driving vehicle needs to accurately recognize by which timing a return to manual driving is to be made during automated driving of the vehicle.

For this purpose, it is important to recognize a risk of a delay of the return to manual driving.

Specifically, recognition of the following risks is effective.

> a risk of missing an exit to a detour,
> a risk of a start of use limit of a terminal used for a secondary task currently executed,
> a risk of an additional charge,
> a temporary forced stop at an evacuation area,
> a shift to a traveling mode limiting an upper limit speed for punishment,
> a stop of use of the automated driving mode for a fixed period, and
> a risk of recording of violation use.

An advantageous effect considered to be produced is such an effect that the driver having recognized these risks reduces excessive use of the remote driving assistance service and uses the service in an appropriate manner.

[10. Provision example of remote driving assistance service offerability information]

Next, a provision example of remote driving assistance service offerability information will be described.

A provision example of remote driving assistance service offerability information will be described with reference to FIG. 23 and following figures.

As depicted in FIG. 23, it is assumed that the vehicle 10 is scheduled to travel on a route from a traveling start point A to a traveling end B. For example, the system (data processing unit) of the vehicle 10 can acquire route information or traffic information regarding the route from the traveling start point A to the traveling end B on the basis of a local dynamic map (LDM) or the like provided from an outside server.

For example, traveling route information depicted in FIG. 23 is displayed on the display unit of the vehicle 10 on the basis of this acquired information.

Moreover, the configuration of the present disclosure displays icons depicted in FIG. 24 together with this traveling route display data.

FIG. 24 presents the following four types of icons.

> (1) controller available state display icon,
> (2) controller unavailable state display icon,
> (3) remote driving assistance operator available state display icon, and
> (4) remote driving assistance operator unavailable state display icon.

Note that the controller mainly gives instructions or advice to the user of the vehicle as described above. The operator (remote driving assistance operator) performs a process for achieving traveling of the vehicle under remote control.

The "(1) controller available state display icon" is an icon indicating that the service offered by the controller, such as instructions and advice of the controller, is in an available state.

The "(2) controller unavailable state display icon" is an icon indicating that the service offered by the controller, such as instructions and advice of the controller, is in an unavailable state.

The "(3) remote driving assistance operator available state display icon" is an icon indicating that the remote driving assistance service offered by the remote driving assistance operator is in an available state.

The "(4) remote driving assistance operator unavailable state display icon" is an icon indicating that the remote driving assistance service offered by the remote driving assistance operator is in an unavailable state.

FIG. 25 depicts an example of display data which displays the icons depicted in FIG. 24 together with traveling route display data.

For example, at a highway junction spot P01, the following two icons are displayed.

> (1) controller available state display icon, and
> (3) remote driving assistance operator available state display icon.

It is obvious that both the services from the controller and the remote driving assistance operator are available at the highway junction spot P01.

However, at a spot P02, the following icon is displayed.

(2) controller unavailable state display icon.

It is obvious that the service of the controller becomes unavailable at the spot P02 and after this spot.

At a spot P04, the following icon is displayed.

> (1) controller unavailable state display icon.

It is obvious that the service of the controller becomes available at the spot P04 and after this spot.

Similarly, at a spot P03,

the (4) remote driving assistance operator unavailable state display icon is displayed. It is obvious that the remote driving assistance service offered by the remote driving assistance operator becomes unavailable at the spot P03 and after this spot.

At a spot P05,

the (3) remote driving assistance operator available state display icon is displayed. It is obvious that the remote driving assistance service offered by the remote driving assistance operator becomes available at the spot P05 and after this spot.

As described above, the present disclosure is configured to display the following icons on the traveling route of the vehicle 10.

(1) controller available state display icon,
(2) controller unavailable state display icon,
(3) remote driving assistance operator available state display icon, and
(4) remote driving assistance operator unavailable state display icon.

The display data of traveling route information including these icons is sequentially updated according to the use status of the controller and the remote assistance operator of the control center 40.

Note that this display data is provided from the control center 40 depicted in FIG. 1 to the vehicle 10, for example. Alternatively, the display data is provided from the control center 40 to the vehicle 10 via the server 30 providing an LDM, for example.

The driver of the vehicle 10 viewing this display data is allowed to check at which spot the controller or the remote driving assistance operator of the control center 40 is available.

A specific use example will be described with reference to FIG. 26. For example, as depicted in FIG. 26, it is assumed that the automated driving section is switched to the manual driving section in a section from Px to Py indicated in a right middle part of FIG. 26 as a result of an accident while the vehicle 10 is traveling at an intermediate spot between the spots P02 and P03.

This information concerning switching from the automated driving section to the manual driving section is recognizable on the basis of the LDM including traveling section information described above with reference to FIGS. 9 to 12, for example.

According to the configuration of the present disclosure, the icons indicating offerability of the services from the controller or the remote driving assistance operator are displayed on the traveling route as depicted in FIG. 26.

The driver of the vehicle 10 present in the section between the spots P02 and P03 checks that the controller is not available at P02 and after this spot and becomes available at the spot P04 and after this spot, and then notifies the controller of a request for receiving the remote driving assistance after passage through the spot P04. The remote driving assistance operator is available at P05 and after this spot. The vehicle 10 is allowed to receive the remote driving assistance service at P05 and after this spot and to pass through the manual driving section from Px to Py unexpectedly produced, while continuing automated driving.

As described above, each of the icons indicating offerability of the services from the controller and the remote driving assistance operator is presented. The driver checking these icons can recognize at which spot in the traveling route the services are receivable or unreceivable from the controller and the remote driving assistance operator. Thereafter, plural choices imposing different levels of burdens on the user are provided, such as a choice for passing through a different detour IC Junction 1 on the way and traveling toward an exit to an ordinary road and a choice for making an stop on the way in a service area SA2.

Accordingly, for example, the driver approaching a section where a service is not available may request the control center 40 to offer a service. Moreover, if the fact that the service is not receivable is recognizable beforehand on the basis of supply availability information, a choice allowing evacuation to a section located before the section where a service is not available can be voluntarily selected beforehand. Such choices can prevent an emergency stop executed by the risk minimization vehicle controller (MRM), because traveling continues in the scheduled route.

[11. Configuration example for displaying remote driving assistance service offerability information and the like on traveling section display data]

Described next will be a configuration example for displaying remote driving assistance service offerability information and the like on the traveling section display data explained above with reference to FIGS. 9 to 12.

As described above with reference to FIGS. 9 to 12, section information indicating the automated driving section and the manual driving section is displayed in the traveling section display data. Moreover, as explained with reference to FIGS. 13 to 19, various types of additional information are added to the traveling section display data to generate display data.

Further described hereinafter will be a configuration example which displays remote driving assistance service offerability information and the like on the traveling section display data.

An example of icons used for displaying remote driving assistance service offerability information and the like on the traveling section display data will be initially described with reference to FIGS. 27 to 29.

FIG. 27 presents the following four types of icons similarly to the above description with reference to FIG. 24.

(1) controller available state display icon,
(2) controller unavailable state display icon,
(3) remote driving assistance operator available state display icon, and
(4) remote driving assistance operator unavailable state display icon.

FIG. 27 presents a display example of two of these four types of icons.

(Display example 1) is a display example which switches displays in the following manner.

(1) controller available state display icon = color display,

(2) controller unavailable state display icon = gray display,

(3) remote driving assistance operator available state display icon = color display, and

(4) remote driving assistance operator unavailable state display icon = gray display.

(Display example 2) is a display example different from (display example 1) and is a display example which switches displays in the following manner.

(1) controller available state display icon = green display,

(2) controller unavailable state display icon = red display,

(3) remote driving assistance operator available state display icon = green display, and

(4) remote driving assistance operator unavailable state display icon = red display.

For example, various display examples including the examples presented above are adoptable.

Further, FIG. 28 presents a different display example of the remote driving assistance operator availability state display icons.

(Display example 3) is a display example which switches displays in the following manner.

(3) remote driving assistance operator available state display icon = operator display, and

(4) remote driving assistance operator unavailable state display icon = operator non-display.

(Display example 4), which is a display example different from (display example 3), is a display example which switches respective displays in the following manner.

(3) remote driving assistance operator available state display icon = display of operator viewed from the side, and

(4) remote driving assistance operator unavailable state display icon = non-display of operator viewed from the side.

FIG. 29 presents two display examples of leading vehicle availability state display icons each indicating whether or not automated driving is achievable using a leading vehicle.

A "(5) leading vehicle available state display icon" is an icon indicating a state where automated driving is achievable using a leading vehicle.

A "(6) leading vehicle unavailable state display icon" is an icon indicating a state where automated driving is not achievable using a leading vehicle.

(Display example 1) is a display example which switches displays in the following manner.

(5) leading vehicle available state display icon = color display, and

(6) leading vehicle unavailable state display icon = gray display.

(Display example 2) is a display example which switches displays in the following manner.

(5) leading vehicle available state display icon = color display, and

(6) leading vehicle unavailable state display icon = background gray display.

FIG. 30 presents two display examples of icons each indicating a communication state with the control center.

A "(7) control center communication favorable state display icon" is an icon indicating that communication with the control center 40 is executable in a favorable manner.

A "(8) control center communication congestion state display icon" is an icon indicating that communication with the control center 40 is congested and not executable in a favorable manner.

(Display example 1) is a display example which switches displays in the following manner.

(7) control center communication favorable state display icon = color display, and

(8) control center communication congestion state display icon = gray display.

(Display example 2) is a display example which switches displays in the following manner.

(7) control center communication favorable state display icon = color display, and

(8) control center communication congestion state display icon = background gray display.

Described next will be an example where various types of these icons are displayed together with the traveling section display data explained with reference to FIGS. 9 to 19.

FIG. 31 is an example of display data presenting additional information similar to the information explained above with reference to FIGS. 13 to 19 together with the traveling section display data.

Note that the traveling section display data presented in FIG. 31 and following figures is uniformly depicted with omission of display modes in different units of section within the traveling section display data. Actually, the manual driving section and the automated driving section are displayed in a discriminative manner.

FIG. 32 depicts an example of display data indicating remote driving assistance service offerability information and the like in addition to the display data depicted in FIG. 31.

The display example depicted in FIG. 32 is an example of display data which indicates traveling section display data presenting the additional information depicted in FIG. 31 on the left side, and the remote driving assistance service offerability information and the like on the right side.

The following icons are presented in the right part of the display data.

a controller icon 51,
a remote driving assistance operator icon 52,
a leading vehicle icon 53, and
a control center icon 54.

These four types of icons are displayed.

These icons are configured to be switched for display in correspondence with a traveling position so as to allow recognition of availability of the services and a change of the communication state in the traveling section display data presented on the left side according to the traveling position.

The user (driver) viewing each display state of these icons can recognize an availability state of each service according to traveling of the vehicle 10.

Note that the user can perform a process for enlarging display of the traveling section display data on the left side, or a process for scrolling the traveling section display data, for example.

The display unit is a touch panel. As depicted in FIG. 33, the user can achieve scrolling by touching the traveling section display data by using a finger and sliding the traveling section display data upward or downward, and achieve scaling by sliding the traveling section display data leftward or rightward. Note that a haptic sense operation using a touch panel is described herein by way of example for clear explanation of the operation method. However, a midair operation achieved by gesture recognition, intuitive operation HMI achieved by projection drawing into a virtual space using AR such as HUD, or the like may be adopted.

The example depicted in FIG. 33 is an example of enlarged display.

Moreover, transition information associated with the service offerability state of an icon selected can be displayed on the traveling section display data displayed with enlargement by touching and selecting the icon which is one of icons included in an icon group depicted in a lower part of FIG. 33.

FIG. 34 depicts a further different display example.

Display data depicted in FIG. 34 is an example which displays a "service availability detailed data display position line" at a touched position in response to a touch by the user at a part of the traveling section display data on the left side to display, as sub data, availability detailed data associated with each of the types of services at the traveling positions corresponding to this line.

"Service availability detailed data" depicted in an upper right part is availability detailed data of each of the types of services at the traveling position corresponding to the position touched by the user.

Display is presented as level data ranging from a minimum to a maximum for each availability of the communication, the controller, the operator (remote driving assistance operator), and the leading vehicle.

The availability increases, i.e., the possibility that the service is receivable increases as the number displayed icons (0 to 5) becomes larger.

In addition, in a case of such a configuration which requires a reservation process for the controller as preprocessing at the time of a request for receiving remote driving assistance from the remote driving assistance operator, the user (driver) needs to check the controller service availability information together with the remote driving assistance operator service availability information.

For example, in a case where the user (driver) desires to use the service of the remote driving assistance operator in a section from P2 to P3 in a situation depicted in FIG. 35, the reservation process in this case needs to be executed through communication with the controller in a controller service available period before the section from P2 to P3. According to the example depicted in FIG. 35, it is necessary to give a request for the service use of the remote driving assistance operator in the section from P2 to P3 through communication with the controller before the point P1.

FIG. 36 is a data display example which allows selective display of data displayed together with the traveling section display data and which is selectable between simple representative data (or integrated data) and individual detailed data for each resource.

Display is switchable between the simple representative data (or integrated data) on the left side and the individual detailed data for each resource on the right side, according to a slide of a central arrow by the user leftward or rightward.

Moreover, in a case where automated driving under the remote driving assistance using the service of the remote driving assistance operator is executed, an instruction designating an automated driving traveling route can be given using additional information displayed together with the traveling section display data.

For example, as depicted in FIG. 37, the user (driver) slides a finger in touch with the traveling section display data from a spot "a" to a position "b" corresponding to a detour road sign on the traveling section display data. This slide processing information is transmitted to a control unit of the control center 40.

The control unit of the control center 40 analyzes this slide processing information, and determines that the user (driver) desires to make a detour toward a detour road at the spot "a." Thereafter, the control unit updates traveling planning of automated driving traveling control to make a detour toward the detour road, and gives an instruction for entering the detour road. While not depicted in FIG. 37, confirmation is achievable by receiving supply of the updated traveling planning and obtaining new traveling information indicating that the driver has entered the detour road.

Moreover, as depicted in FIG. 38, when the user (driver) slides the finger in touch with the traveling section display data from a spot "c" to a position "d" corresponding to a parking area sign, this slide processing information is transmitted to the control unit of the control center 40.

The control unit of the control center 40 analyzes this slide processing information, and determines that the user (driver) desires to enter a parking area at the spot "c." Thereafter, the control unit updates traveling planning of automated driving traveling control to enter the parking area, and gives an instruction for entering a detour road. While not depicted in FIG. 38, confirmation is achievable by receiving supply of the updated traveling planning and obtaining new traveling information indicating that the driver has entered the detour road.

Further, as depicted in FIG. 39, processing using the icons can be performed.

The finger is slid from a certain spot "a" which corresponds to the controller icon and which is included in a service offerable region to a position "b" corresponding to a detour road sign as depicted in FIG. 39, while touching these spots. This slide processing information is transmitted to the control unit of the control center 40.

The control unit of the control center 40 analyzes this slide processing information, determines that the user (driver) desires to make a detour to a detour road at the spot "a," and gives an instruction from the controller for causing making a detour to the detour road.

Further, the following processing is executed in response to slide processing of "c," "d," and "e" by the user as depicted in FIG. 39.

The finger is slid from a certain spot "c" which corresponds to the controller icon and which is included in the service offerable region, toward a certain spot "d" which corresponds to the leading vehicle icon and which is included in the service offerable region, and further toward a position "e" corresponding to a traveling lane limiting sign, while touching these spots.

The data processing unit 11 of the information processing device of the vehicle 10 transmits this slide processing information to the control unit of the control center 40.

The control unit of the control center 40 analyzes this slide processing information, determines that the user (driver) desires to request the controller to provide a leading vehicle at the spot "c" to perform automated traveling with guidance by the leading vehicle at the spot "e," and offers a service for performing processing corresponding to this desire.

The data processing unit 11 of the information processing device of the vehicle 10 executes automated traveling of the vehicle 10 on the basis of remote driving assistance control information corresponding to user operation information received from the control center 40.

In such a manner, the user (driver) can perform various processes using display data.

In the present disclosure, various use modes of the remote controller, the remote operator, and the like have been described to explain a direct operation of display data of the user. However, when offerability of services is efficiently managed, various types of use modes, such as a members-only concierge service using a voice call for exchange and recognition of these services, and an operation combined with automatic voice recognition or combined with artificial intelligence, are established.

[12. Configuration and process of control center]

Next, a configuration and a process of the control center 40 will be described.

One of ideas for safely introducing the automated driving system is to construct such a configuration for driving the vehicle at a low speed while receiving driving assistance from the remote control center 40 in a case where handling using only the automated driving system of the vehicle is difficult.

Moreover, as an approach for realizing automated driving at a high speed, there is a plan which promotes maintenance of road environments, communication environments, and evacuations, maintenance of LDM update infrastructure, and the like in dedicated highway networks and the like, and only allows automated driving limited to sections where fixed conditions of these are met, for example.

However, even in a case where high-speed traveling by automated driving is assumed, manual driving by the driver is required when an unexpected phenomenon such as an accident occurs. Moreover, with advancement of the automated driving function in the future, the number of the cases requiring a return to manual driving by the driver gradually decreases. As a result, the driver is highly likely to be absorbed in a secondary task other than driving and be delayed in returning to manual driving at the time of occurrence of an unexpected phenomenon.

In a case where the driver cannot return to manual driving, a measure such as an emergency stop of the vehicle on a road shoulder or the like is taken. However, this stopping process causes a traffic jam or the like, and stagnates social activities. As means for reducing occurrence of such circumstances, it is effective to offer the driving assistance service by the controller or the remote driving assistance operator of the control center 40.

FIG. 40 is a diagram explaining (A) processes performed by the control center 40 and (B) social needs for remote driving assistance.

As depicted in FIG. 40, the (A) processes performed by the control center 40 are roughly classified into the following two main processes and three sub processes.

(main process 1) offer of services by the controller or the remote driving assistance operator,

(main process 2) optimum arrangement of the controller and the remote driving assistance operator, and a notification process for notification of service offerability information,

(sub process 1) collection of information associated with a remote driving assistance request vehicle for each region,

(sub process 2) collection of information associated with a remote driving assistance necessary section for each region (use LDM), and

(sub process 3) analysis and a prediction process for entrance (reservation) of a vehicle into a controllable area.

Moreover, the (B) social needs for remote driving assistance includes a plurality of types as follows.

(type 1) remote driving assistance essential vehicle,

(type 2) complementary remote driving assistance necessary vehicle, and

(type 3) ordinary vehicle or commercial vehicle allowed to switch between automated driving and manual driving.

The remote driving assistance essential vehicle of the (type 1) is a vehicle boarded only by a user not allowed to drive, such as a patient and a kindergarten child.

The complementary remote driving assistance necessary vehicle of the (type 2) is a vehicle of a user having difficulty in perform safe driving, such as a patient and an aged person.

The ordinary vehicle or commercial vehicle allowed to switch between automated driving and manual driving of the (type 3) is assumed to be used when a return to manual driving is difficult.

The control center 40 is required to prepare a system capable of offering services corresponding to the social needs requiring remote driving assistance presented in (B) of FIG. 40, and executes the processes presented in (A) of FIG. 40 for this purpose.

FIG. 41 is a diagram explaining (A) input information acquired by the control center 40, (B) data processing executed by the control center 40, and (C) provided information provided by the control center 40 to the outside.

For example, the (A) input information acquired by the control center 40 includes the following types of information.

(a1) infrastructure information (information indicating a road situation, an accident, or the like),

(a2) meteorological or weather information,

(a3) calendar information,

(a4) service use statistical information (learning data),

(a5) prior reservation information for service use such as a school bus, and

(a6) allowable accommodation volume information associated with a vehicle evacuation area.

These items of information are acquired from an outside server, a service user (vehicle or driver), or the like.

Note that the (B) data processing executed by the control center 40 and presented herein is processing other than the main processes and the sub processes explained with reference to FIG. 40, and is executed mainly using the (A) input information in FIG. 41. For example, these processes include the following processes.

(b1) prediction processing of communication infrastructure margin that can secure time synchronization and redundancy,

(b2) prediction processing of margin for the service offered by the controller,

(b3) prediction processing of margin for the service offered by the remote driving assistance operator,

(b4) processing for work/standby scheduling of the controller,

(b5) processing for work/standby scheduling of the remote driving assistance operator, and

(b6) management process for a leading guidance vehicle.

Note that these processes may be either executed in response to a processing request from a service use vehicle, for example, or may be sequentially executed.

In addition, the (b6) managing process for the leading guide vehicle is executed by performing a communication process with the leading guidance vehicle.

The (C) provided information provided by the control center 40 to the outside includes the following types of information, for example.

(c1) information predicting communication band to be secured for each region and time slot,

(c2) information predicting availability of the controller service for each region and time slot,

(c3) information predicting availability of the remote driving assistance operator service for each region and time slot,

(c4) information predicting availability of the leading guidance vehicle for each region and time slot,

(c5) latest information updated as needed on the basis of information received from a route traveling vehicle, and

(c6) information received from an individual traveling vehicle (provided for other vehicles).

These items of information are provided for the vehicle or the driver desired to receive the service offered from the control center 40.

Note that the control center expressed by this one term in the present disclosure refers to a control center in a broad sense including duties allocated to a substantial person in a case where an actual controller performs duties, processing partially automated, such as automatic voice recognition and announcement creation, and prediction information calculations of data obtained on the basis of previous information, with use of artificial intelligence or the like. The availability prediction information associated with these services includes a range from a device use capacity and an information update status to a personnel suppliable distribution status.

[13. Process executed by vehicle or information processing device provided in vehicle and thinking and determination process by driver based on notification information]

Described next will be a process executed by the vehicle 10 or the information processing device provided in the vehicle 10 and a thinking and determination process by driver based on notification information.

FIG. 42 is a diagram explaining a process executed by the vehicle 10 or the information processing device provided in the vehicle 10.

The vehicle 10 or the information processing device in the vehicle 10 receives an input of provided information from the control center 40. (C. Provided information) in FIG. 42 is the (C. Provided information) provided from the control center 40 explained with reference to FIG. 41, and corresponds to the following information.

  (c1) information predicting communication band to be secured for each region and time slot,
  (c2) information predicting availability of the controller service for each region and time slot,
  (c3) information predicting availability of the remote driving assistance operator service for each region and time slot,
  (c4) information predicting availability of the leading guidance vehicle for each region and time slot,
  (c5) latest information updated as needed on the basis of information received from a route traveling vehicle, and
  (c6) information received from an individual traveling vehicle (provided for other vehicles).

Moreover, the vehicle 10 or the information processing device in the vehicle 10 receives a static map, a local dynamic map (LDM), or the like from the server 30.

The data processing unit 11 of the information processing device of the vehicle 10 receives inputs of the information acquired from the outside as described above and acquired information from the driver information acquisition unit 12 or the environmental information acquisition unit 13 provided inside the vehicle, and executes various types of data processing.

As depicted in FIG. 42, the acquired information acquired by the driver information acquisition unit 12 or the environmental information acquisition unit 13 provided inside the vehicle is external environment information and driver information (e.g., return possibility information (learning data use)).

The data processing unit 11 of the vehicle 10 executes data processing (d1) to (d6) depicted in FIG. 42, for example, using these items of information.

Specifically, the following processes are executed, for example.

  (d1) processing for predicting a passing speed for each traveling route section,
  (d2) processing for predicting an arrival time for each traveling route section,
  (d3) processing for acquiring supply availability state of the controller, the operator, and the leading vehicle at each arrival time for each traveling route section,
  (d4) processing for acquiring passage event (e.g., PA, construction section, bypass ordinary road exit, and school zone) information at each arrival time for each traveling route section,
  (d5) detection and analysis of an operation (touch, swipe, or the like on the display screen) by the user (driver) and processing based on an analysis result (e.g., transmission of service reception request based on user request), and
  (d6) notification, warning, actuation control processing of risk minimization vehicle controller (MRM: Minimum Risk Maneuver) based on characteristics of the driver concerning to a return to manual driving and return progress quality.

For example, the data processing unit 11 executes the processes described above. Information to be given to the driver 20 corresponding to the user is given as a notification via the notification unit 15 such as a display unit. Moreover, in a case of an issue of a request for an offer of the service to the control center 40, for example, this request for the service is given to the control center 40 via the communication unit 14.

Note that latest information indicating availability of the controller or the remote driving assistance operator of the control center 40 is given as a notification for each spot in the processing of the present disclosure as described above with reference to FIGS. 25 to 39.

According to the processing of the present disclosure, the following types of information are given to the driver 20 as a notification, for example.

  availability information associated with the controller,
  availability information associated with the remote driving assistance operator, and
  guidance information associated with detour (avoidance) routes.

The driver 20 notified the above-described information introduces these items of information into a working memory of the brain of the driver even during execution of a secondary task, for example, and can be urged to take an optimum behavior for avoiding a risk at an appropriate timing.

An important point herein is that a large volume of information to be referred to by a human for behavior determination is stored as pieces of information dispersed in different parts of the brain. Specifically, visual information and verbalized information are stored in different storing parts. Accordingly, information stored as storage information verbalized simply as a "danger" is not interpreted as a "danger" unless the information is interpreted in an intellectual manner.

FIG. 43 is a diagram explaining an example of a thinking and determination process of the driver based on notification information.

The data processing unit 11 of the information processing device of the vehicle 10 of the present disclosure generates display data including remote driving assistance service offerability information and the like added to traveling section display data, and displays the generated display data on the display unit. Specifically, this display data is the display data explained above with reference to FIGS. 32 to 39.

An example of the thinking and determination process of the driver viewing the display data generated by adding the remote driving assistance service offerability information and the like to the traveling section display data as described above will be described with reference to FIG. 43.

For example, each of parts (1) to (4) of FIG. 43 presents a thinking and determination process example of the driver viewing the display data depicted in FIG. 43.

The part (1) of FIG. 43 is a thinking example of the driver viewing a "lane limiting sign" displayed together with the traveling section display data.

The driver viewing this display data knows that a roadblock risk spot is present on the traveling route, and recognizes the spot as a manual driving transition request point. At this spot, the driver is allowed to perform a selection process for selecting an optimum choice from various choices, such as voluntary manual driving switching, an emergency stop using the MRM, and a request for remote driving assistance.

In addition, it is also recognized that the emergency stop using the MRM produces a roadblock risk and there is a risk of receiving a penalty.

The part (2) of FIG. 43 presents a thinking example of the driver viewing the "remote driving assistance service offerability information."

The driver viewing this display data recognizes that the service of the controller or the remote driving assistance operator is receivable during passage of a certain section, but that a warning of insufficiency of a band necessary for communication is predicted, and therefore determines that the remote driving assistance is difficult to receive.

Accordingly, the driver can start preparation for manual driving beforehand according to this determination.

The part (3) of FIG. 43 is a thinking example of the driver viewing the "detour road sign."

The driver viewing this display data is allowed to select reception of the remote driving assistance in an early stage and evacuation to the detour road in a case where a manual driving transition is difficult due to poor health of the driver, for example. A limiting point for receiving the remote driving assistance and achieving evacuation is also recognizable from the display data.

The part (4) of FIG. 43 presents a thinking example of the driver viewing the "leading vehicle service availability information in the remote driving assistance service offerability information."

The driver viewing this display data can determine whether or not it is allowed to pass through an automated driving prohibited section with guidance by the leading vehicle, and make prior reservation. However, in a case where the leading vehicle as reserved is not used, there is a risk of penalty such as a stop of reception of the remote driving assistance service in the future. Accurate determination is thus required.

Moreover, a lower right part of FIG. 43 presents an example of risk information acquirable by the driver from the display data.

A section (a) is a section that requires traveling under caution by the driver. Risk information indicating that no supply of the remote driving assistance operator is recognizable beforehand.

A section (b) is a section where a high possibility or a low possibility of traffic blocking caused by deceleration or an emergency stop using the MRM is recognizable beforehand.

As described above, display data is generated by adding remote driving assistance service offerability information and the like to the traveling section display data, and is visually provided for the driver as explicit visual information. In this manner, information necessary for various types of thinking and determination processes acts on the working memory of the driver as selected behavior determination information together with a sense of approaching time. Accordingly, the driver can make accurate determination on the basis of a weight of a risk.

The present disclosure is configured to present various types of information to the driver for recognizing a necessity of a return to manual driving together with a risk, and add effective information and risk information to the working memory in the brain of the driver having viewed presented data. As a result, the driver is allowed to take an optimum measure such as a return to manual driving. It is thus expected to produce an effect for raising a probability of a success of the return to manual driving.

Note that the information presented to the user (driver) in the configuration of the present disclosure includes the following types of information, for example.

(1) section setting information indicating sections of automated driving and manual driving, a transition point, and the like according to the traveling route,
(2) information indicating an accident or an event occurred after a start of traveling according to the traveling route, and
(3) information indicating a service area (SA), a parking area (PA), an interchange (IC), an exit (EXIT), and the like on the traveling route.

The driver can recognize a point of early abandonment of automated driving traveling, a rest point, or the like on the basis of these items of information, and can perform an optimum process such as a request for the remote driving assistance service.

Moreover, the information processing device of the vehicle 10 in the configuration of the present disclosure presents the following information to the user (driver).

(4) information (notification information) associated with a timing of a return to manual driving according to a target value of a manual driving transition success rate (RRR: Request for Recovery Ratio) in each of traveling sections on the traveling route,
(5) remote driving assistance service offerability information (controller, operator, wireless availability band, supply margin, and information associated with leading vehicle reservation) associated with the remote driving assistance service at each position of the traveling route,
(6) a spot at which an emergency stop is made using the risk minimization controller (MRM) in a case where a manual driving transition is not achieved according to a manual driving transition request,
(7) information indicating a section requiring manual driving or traveling under caution by the driver (e.g., appearance of animals, water-covered road, rockfall, avalanche warning), and
(8) penalty information in a case of a failure of a manual driving transition.

Various types of data are generated and presented to the driver in such a manner. Accordingly, the driver can take an optimum measure for achieving safe traveling, on the basis of accurate determination. In addition, the driver makes determination of various types of behavior selections such that an advantage of each possible behavior and a risk resulting from this behavior is well-balanced, and behaves while reducing the risk to a certain level or lower in a subjective view of the user. Accordingly, the method of information presentation given in the present disclosure by way of example plays an important role for preventing the user using the automated driving function from being excessively and proactively dependent on the automated driving function or the remote assistance function.

[14. Configuration example of mobile apparatus (vehicle)]

Next, a specific configuration example of a mobile apparatus 100 of the present disclosure corresponding to the vehicle 10 depicted in FIG. 1 will be described with reference to FIG. 44.
Note that a vehicle where the mobile apparatus 100 is provided will be hereinafter referred to as an own vehicle or an own car in a case where this vehicle is discriminated from other vehicles.
As depicted in FIG. 44, the mobile apparatus 100 includes an input unit 101, a data acquisition unit 102, a communication unit 103, an in-vehicle device 104, an output control unit 105, an output unit 106, a drive system control unit 107, a drive system 108, a body system control unit 109, a body system 110, a storage unit 111, and an automated driving control unit 112.
The input unit 101, the data acquisition unit 102, the communication unit 103, the output control unit 105, the drive system control unit 107, the body system control unit 109, the storage unit 111, and the automated driving control unit 112 are connected to each other via a communication network 121. For example, the communication network 121 is constituted by a CAN (Controller Area Network), a LIN (Local Interconnect Network), a LAN (local Area Network), or an in-vehicle communication network, a bus, or the like compliant with a given standard such as FlexRay (registered trademark). Note that the units of the mobile apparatus 100 are directly connected to each other without using the communication network 121 in some cases.
In addition, it is hereinafter assumed that description of the communication network 121 is omitted in a case where the units of the mobile apparatus 100 communicate with each other via the communication network 121. For example, in a case where the input unit 101 and the automated driving control unit 112 communicate with each other via the communication network 121, this situation is only expressed in such a manner that the input unit 101 and the automated driving control unit 112 communicate with each other.
The input unit 101 includes devices operated by an occupant to input various types of data, instructions, or the like. For example, the input unit 101 includes an operation device such as a touch panel, a button, a microphone, a switch, and a lever, an operation device achieving input by using a method other than manual operation, such as a voice and a gesture, and others. Moreover, for example, the input unit 101 may be a remote-control device using infrared light or other radio waves, or an external connection device such as a mobile device or a wearable device operable according to an operation given from the mobile apparatus 100. The input unit 101 generates an input signal on the basis of data, an instruction, or the like input from the occupant, and supplies the input signal to each of the units of the mobile apparatus 100.

The data acquisition unit 102 includes various types of sensors or the like for acquiring data used for processes performed by the mobile apparatus 100, and supplies acquired data to each of the units of the mobile apparatus 100.

For example, the data acquisition unit 102 includes various types of sensors for detecting a state or the like of the own vehicle. Specifically, for example, the data acquisition unit 102 includes a gyro sensor, an acceleration sensor, an inertial measurement unit (IMU), a sensor or the like for detecting an operation amount of an acceleration pedal, an operation amount of a brake pedal, a steering angle of a steering wheel, an engine speed, a motor speed, or a rotation speed of wheels and the like.

Moreover, for example, the data acquisition unit 102 includes various types of sensors for detecting information associated with the outside of the own vehicle. Specifically, for example, the data acquisition unit 102 includes an imaging device such as a ToF (Time Of Flight) camera, a stereo camera, a monocular camera, an infrared camera, and other types of cameras. Further, for example, the data acquisition unit 102 includes an environment sensor for detecting weather, meteorology, or the like, and an ambient information detection sensor for detecting an object around the own vehicle. The environment sensor is constituted by a raindrop sensor, a fog sensor, a sunlight sensor, a snow sensor, or the like, for example. The ambient information detection sensor is constituted by an ultrasonic sensor, a radar, a LiDAR (Light Detection and Ranging, Laser Imaging Detection and Ranging), a sonar, or the like, for example.

Installation examples of the various types of sensors as constituent elements of the data acquisition unit 102, the sensors being provided for detecting information associated with the outside of the own vehicle, are similar to the examples explained above with reference to FIG. 3.

Plural imaging devices and sensors are provided at various positions of the vehicle.

The data acquisition unit 102 further includes various types of sensors for detecting a current position of the own vehicle. Specifically, for example, the data acquisition unit 102 includes a GNSS (Global Navigation Satellite System) receiver or the like for receiving a GNSS signal from a GNSS satellite.

Moreover, for example, the data acquisition unit 102 includes various types of sensors for detecting information associated with the inside of the vehicle. Specifically, for example, the data acquisition unit 102 includes an imaging device for imaging the driver, a biosensor for detecting biological information associated with the driver, a microphone for collecting voices in the vehicle cabin, and others. The biosensor is provided on a seat surface, a steering wheel, or the like, for example, and detects a sitting state of an occupant sitting on a seat or biological information associated with the driver gripping the steering wheel. Various types of observable data are available as vital signals, such as a heart rate, a pulse rate, blood flow, breathing, mind-body connection, visual stimulation, electroencephalogram, a sweat state, a head posture and behavior, eyes, a gaze, a blink, saccade, microsaccade, a fixed gaze, drift, a stare, PERCLOS (percentage of eyelid closure), and pupil reaction by an iris. These items of vital activity observable information reflecting an observable driving state are used for calculation of a return notification timing by a safety discrimination unit 155 described below as unique characteristics associated with a return delay case of the corresponding driver and obtained from return delay time characteristics integrated as observable values estimated from observation and associated with logs of the evaluation values.

Examples of the various types of sensors included in the data acquisition unit 102 for obtaining information associated with the driver in the vehicle are similar to the examples explained above with reference to FIG. 2.

Specifically, the data acquisition unit 102 includes a camera, a stereo camera, a ToF sensor, a seat strain gauge, and others as detectors for detecting a position and a posture of the driver. Moreover, the data acquisition unit 102 includes a facial recognizer (Face (Head) Recognition), a driver eye tracker, a driver head tracker, and others as detectors for obtaining vital activity observable information associated with the driver.

Further, the data acquisition unit 102 includes a vital signal detector as a detector for obtaining vital activity observable information associated with the driver. In addition, the data acquisition unit 102 includes a driver identification unit. Note that an identification method considered to be adoptable can be vital identification using a face, a fingerprint, a pupil iris, a voiceprint, or the like, in addition to knowledge identification using a password, a personal identification number, or the like.

The communication unit 103 communicates with the in-vehicle device 104 and various types of devices, servers, base stations, or the like outside the vehicle to transmit data supplied from the units of the mobile apparatus 100 and supply received data to the units of the mobile apparatus 100. Note that a communication protocol supported by the communication unit 103 is not limited to any particular protocol. In addition, the communication unit 103 can support a plurality of types of communication protocols.

For example, the communication unit 103 communicates with the in-vehicle device 104 by wireless communication using a wireless LAN, Bluetooth (registered trademark), NFC (Near Field Communication), WUSB (Wireless USB), or the like. Moreover, for example, the communication unit 103 communicates with the in-vehicle device 104 by wired communication via a not-depicted connection terminal (and a cable if necessary) using a USB (Universal Serial Bus), an HDMI (registered trademark) (High-Definition Multimedia Interface), an MHL (Mobile High-definition Link), or the like.

Further, for example, the communication unit 103 communicates with a device (e.g., application server or control server) present on an external network (e.g., Internet, cloud network, or network specific to provider) via a base station or an access point. In addition, for example, the communication unit 103 communicates with a terminal present near the own vehicle (e.g., terminal of pedestrian or store, or MTC (Machine Type Communication) terminal) using a P2P (Peer To Peer) technology.

Moreover, for example, the communication unit 103 performs V2X communication such as vehicle to vehicle communication, vehicle to infrastructure communication, vehicle to home communication, and vehicle to pedestrian (Vehicle to Pedestrian) communication. Further, for example, the communication unit 103 includes a beacon reception unit to receive radio waves or electromagnetic waves generated from a radio station or the like provided on a road and acquire information indicating a current position, a traffic jam, a traffic regulation, a required time, or the like. Note that information may be acquired as prior traveling information from a data acquisition unit mounted on a front vehicle traveling on the front side and paired as a possible leading vehicle with use of the communication unit during traveling in a section to complement data of the data acquisition unit 102 of the own vehicle by using this information particularly as means for securing higher safety of a following convoy in convoy travel or the like achieved by the leading vehicle.

For example, the in-vehicle device 104 includes a mobile device (e.g., tablet, smartphone) or a wearable device carried by the occupant, an information device incorporated into or attached to the own vehicle, a navigation device searching for a path to a desired destination, and others. Note that extension use is applicable in the future to a device which is detachable from vehicle installation, such as a video reproducer and a game device, considering that the occupant is not necessarily fixed to a seating fixed position with the spread of automated driving. According to the description of the example given in the present embodiment, information indicating the spot requiring intervention of the driver is presented only to the driver. However, this information may be further provided for a following vehicle in convoy travel or the like, or may be further used in combination with remote traveling assistance as necessary by constantly giving information to an operation management center of passenger transport transit buses or long-distance distribution commercial vehicles.

The output control unit 105 controls output of various types of information to the occupant of the own vehicle or the outside of the vehicle. For example, the output control unit 105 generates an output signal including at least either one of visual information (e.g., image data) and auditory information (e.g., audio data), and supplies the output signal to the output unit 106 to control output of visual information and auditory information from the output unit 106. Specifically, for example, the output control unit 105 synthesizes image data captured by different imaging devices of the data acquisition unit 102 to generate a bird's eye view image, a panorama image, or the like, and supplies an output signal including the generated image to the output unit 106. Moreover, for example, the output control unit 105 generates audio data including a warning sound, a warning message, or the like for a danger such as a collision, a contact, entrance into a dangerous zone, or the like, and supplies an output signal including the generated audio data to the output unit 106.

The output unit 106 includes a device capable of outputting visual information or auditory information to the occupant of the own vehicle or the outside of the vehicle. For example, the output unit 106 includes a display device, an instrument panel, an audio speaker, a headphone, a wearable device such as a glass-type display worn by the occupant, a projector, a lamp, and others. The display device included in the output unit 106 may be a device which displays visual information within a visual field of the driver, such as a head-up display, a transmission type display, a device having an AR (Augmented Reality) display function, as well as a device including an ordinary display.

The drive system control unit 107 generates various types of control signals, and supplies the generated control signals to the drive system 108 to control the drive system 108. Moreover, the drive system control unit 107 supplies control signals to parts other than the drive system 108 as necessary to issue a notification of the control state of the drive system 108, for example.

The drive system 108 includes various types of devices associated with a drive system of the own vehicle. For example, the drive system 108 includes a driving force generating device for generating a driving force, such as an internal combustion engine and a driving motor, a driving force transmission mechanism for transmitting the driving force to wheels, a steering mechanism which adjusts a steering angle, a brake device which generates a braking force, an ABS (Antilock Brake System), an ESC (Electronic Stability Control), an electric power steering device, and others.

The body system control unit 109 generates various types of control signals, and supplies the generated control signals to the body system 110 to control the body system 110. Moreover, the body system control unit 109 supplies control signals to parts other than the body system 110 as necessary to issue a notification of the control state of the body system 110.

The body system 110 includes various types of devices associated with a body system equipped on a vehicle body. For example, the body system 110 includes a keyless entry system, a smart key system, a power window device, a power seat, a steering wheel, an air conditioning device, various types of lamps (e.g., headlamps, back lamps, brake lamps, direction indicators, fog lamps), and others.

For example, the storage unit 111 includes a magnetic storage device such as a ROM (Read Only Memory), a RAM (Random Access Memory), and an HDD (Hard Disk Drive), a semiconductor storage device, an optical storage device, an optical magnetic storage device, or the like. The storage unit 111 stores various types of programs, data, and the like used by the units of the mobile apparatus 100. For example, the storage unit 111 stores map data such as a three-dimensional highly accurate map such as a dynamic map, a global map having lower accuracy and covering a wider area than those of the highly accurate map, and a local map including information around the own vehicle.

The automated driving control unit 112 controls automated driving such as automated traveling and driving assistance. Specifically, for example, the automated driving control unit 112 performs cooperative control aimed at achievement of functions of an ADAS (Advanced Driver Assistance System) including collision avoidance or shock mitigation of the own vehicle, following traveling based on a distance between vehicle, constant speed traveling, collision warning to the own vehicle, lane departure warning to the own vehicle, and the like. Moreover, for example, the automated driving control unit 112 performs cooperative control aimed at automated driving and the like for automatedly traveling without requiring operation by the driver. The automated driving control unit 112 includes a detection unit 131, a self-position estimation unit 132, a status analysis unit 133, a planning unit 134, and an action control unit 135.

The detection unit 131 detects various types of information necessary for control of automated driving. The detection unit 131 includes an outside-vehicle information detection unit 141, an inside-vehicle information detection unit 142, and a vehicle state detection unit 143.

The outside-vehicle information detection unit 141 performs a detection process for detecting information associated with the outside of the own vehicle, on the basis of data or signals from the respective units of the mobile apparatus 100. For example, the outside-vehicle information detection unit 141 performs a detection process, a recognition process, and a tracking process for an object around the own vehicle and a detection process for detecting a distance to the object and a relative speed. Examples of the object corresponding to a detection target include a vehicle, a human, an obstacle, a structure, a road, a traffic light, a traffic sign, a road sign, and the like.

Moreover, for example, the outside-vehicle information detection unit 141 performs a detection process for detecting an ambient environment around the own vehicle. Examples of the ambient environment corresponding to a detection target include weather, temperature, humidity, brightness, a state of a road surface, and the like. The outside-vehicle information detection unit 141 supplies data indicating a result of the detection process to the self-position estimation unit 132, a map analysis unit 151, a traffic rule recognition unit 152, and a status recognition unit 153 of the status analysis unit 133, an emergency condition avoidance unit 171 of the action control unit 135, and others.

Supply of the information acquired by the outside-vehicle information detection unit 141 is receivable mainly from an infrastructure in a traveling section where a local dynamic map (LDM) constantly updated is supplied from the infrastructure as a section where automated driving travelling is intensively allowed. Alternatively, traveling may be allowed with constant information update received from a vehicle or a vehicle group traveling ahead in this section before entrance of the own vehicle to the section. Moreover, road environment information obtained from a leading vehicle entering the section may be further used in a complementary manner so as to obtain safer road information immediately before entrance into the section particularly during convoy travel or the like in a case where a latest local dynamic map is not constantly updated from the infrastructure, for example. In many cases, whether or not automated driving is allowed in a section is determined on the basis of presence or absence of these items of prior information provided from the infrastructure. New local dynamic map (LDM) which is updated and constitutes automated traveling enabled/disabled information on the route provided from the infrastructure is equivalent to an offer of an invisible track as what is generally called "information." Note that the depiction in FIG. 44 is given on an assumption that the outside-vehicle information detection unit 141 is mounted on the own vehicle for convenience. However, prior predictability during traveling may further be raised by using information obtained by a vehicle traveling ahead as "information."

The inside-vehicle information detection unit 142 performs a detection process for detecting information inside the vehicle, on the basis of data or signals from the units of the mobile apparatus 100. For example, the inside-vehicle information detection unit 142 performs an identification process and a recognition process for identifying and recognizing the driver, a detection process for detecting a state of the driver, a detection process for detecting the occupant, a detection process for detecting an environment inside the vehicle, and others. Examples of the state of the driver corresponding to a detection target include a physical condition, a wakefulness level, a concentration level, a fatigue level, a visual line direction, an eyeball detailed behavior, and others.

Moreover, it is necessary for the system to recognize a stage of progress of a return to consciousness wakefulness necessary for a return to driving by the driver temporarily dozing or has started other work, on an assumption that, in the future, automated driving allows the driver to be completely separated from steering work for driving. Specifically, a driver monitoring system conventionally considered mainly uses detection means for monitoring a drop of consciousness such as sleepiness. However, it is expected that the driver will not be required to intervene in steering for driving at all in the future, and therefore the means of the system for directly observing the level of intervention by the driver on the basis of steering stability of a steering device or the like is eliminated. It is thus necessary to promote transfer of intervention from automated driving to manual driving of steering after an accurate internal wakefulness state of the driver is recognized on the basis of observation of a transition of the consciousness return necessary for driving from an unknown state concerning an accurate consciousness status of the driver.

Accordingly, the inside-vehicle information detection unit 142 mainly has two-stage major roles. One of the roles is a role of passive monitoring of a state of the driver during automated driving, while the other role is a role of detection and determination of peripheral recognition, perception, determination of the driver, and further, an operation capability of a steering device until a level where manual driving is allowed by an arrival at a section of cautious driving from an issue of a request for a return from the system. Moreover, control to be performed may include automatic fault diagnosis of the entire vehicle to urge the driver to similarly return to manual driving in an early stage even in a case where a function drop of automated driving is caused by a partial function failure of the automated driving. The passive monitoring herein refers to detection means of a type not requiring a responsive reaction in consciousness of the driver, and does not exclude monitoring which generates physical radio waves, light, or the like from a device and detects a response signal. Specifically, the passive monitoring refers to monitoring of a state of the driver in an unconscious state such as dozing. A classification of the driver other than a recognition responsive reaction is defined as a passive system. An active response device which analyzes and evaluates reflection or a diffusion signal obtained by irradiation of radio waves, infrared light, or the like is not excluded. On the other hand, monitoring which requires a conscious response as a responsive reaction of the driver is defined as active monitoring.

Examples of the environment inside the vehicle corresponding to a detection target include temperature, humidity, brightness, a smell, and the like. The inside-vehicle information detection unit 142 supplies data indicating a result of the detection process to the status recognition unit 153 of the status analysis unit 133 and the action control unit 135. In addition, in a case where a transition is determined to be impossible to achieve in time even under deceleration control during automated driving and with an extension of time on the basis of a determination that manual driving is impossible to achieve within an accurate limit of time after an issue of a return to driving to the driver from the system, a procedure for deceleration and evacuation/stop is started for evacuation of the vehicle by issuing an instruction to the emergency condition avoidance unit 171 and others of the system. In other words, a reaching time for reaching a transition limit can be prolonged by decelerating the vehicle in an early stage even in a situation similarly not in time as an initial state. By prolonging the reaching time for reaching the transition limit, a time for taking a measure for a phenomenon by the system is produced. Accordingly, a measure for securing safety can be taken. However, thoughtless deceleration or slow traveling causes a traffic jam or raise a collision risk as described below. Accordingly, application of these is limited.

The vehicle state detection unit 143 performs a detection process for detecting a state of the own vehicle, on the basis of data or signals from the units of the mobile apparatus 100. Examples of the state of the own vehicle as a detection target include a speed, an acceleration, a steering angle, presence or absence and contents of abnormality, a state of driving operation, a position and an inclination of a power seat, a state of door lock, states of other in-vehicle devices, and others. The vehicle state detection unit 143 supplies data indicating a result of the detection process to the status recognition unit 153 of the status analysis unit 133, the emergency condition avoidance unit 171 of the action control unit 135, and others.

The self-position estimation unit 132 performs an estimation process for estimating a position, a posture, or the like of the own vehicle, on the basis of data or signals received from the units of the mobile apparatus 100, such as the outside-vehicle information detection unit 141, and the status recognition unit 153 of the status analysis unit 133. Moreover, the self-position estimation unit 132 generates a local map used for estimation of the self-position as necessary (hereinafter referred to as a self-position estimation map).

For example, the self-position estimation map is a highly accurate map using a technology such as SLAM (Simultaneous Localization and Mapping). The self-position estimation unit 132 supplies data indicating a result of the estimation process to the map analysis unit 151, the traffic rule recognition unit 152, the status recognition unit 153, and others of the status analysis unit 133. Moreover, the self-position estimation unit 132 stores the self-position estimation map in the storage unit 111.

The status analysis unit 133 performs an analysis process for analyzing statuses of the own vehicle and an ambient status. The status analysis unit 133 includes the map analysis unit 151, the traffic rule recognition unit 152, the status recognition unit 153, a status prediction unit 154, and the safety discrimination unit 155.

The map analysis unit 151 performs an analysis process for analyzing various types of maps stored in the storage unit 111 with use of data or signals received from the units of the mobile apparatus 100, such as the self-position estimation unit 132 and the outside-vehicle information detection unit 141, as necessary, to construct a map including information necessary for processing of automated driving. The map analysis unit 151 supplies the constructed map to the traffic rule recognition unit 152, the status recognition unit 153, and the status prediction unit 154, and further, to a route planning unit 161, a behavior planning unit 162, and an action planning unit 163 of the planning unit 134 and others.

The traffic rule recognition unit 152 performs a recognition process for recognizing traffic rules around the own vehicle, on the basis of data or signals received from the units of the mobile apparatus 100, such as the self-position estimation unit 132, the outside-vehicle information detection unit 141, and the map analysis unit 151. For example, a position and a state of a traffic light around the own vehicle, contents of traffic regulations around the own vehicle, travelable lanes, and the like are recognized by this recognition process. The traffic rule recognition unit 152 supplies data indicating a result of the recognition process to the status prediction unit 154 and others.

The status recognition unit 153 performs a recognition process for recognizing a status associated with the own vehicle, on the basis of data or signals received from the units of the mobile apparatus 100, such as the self-position estimation unit 132, the outside-vehicle information detection unit 141, the inside-vehicle information detection unit 142, the vehicle state detection unit 143, and the map analysis unit 151. For example, the status recognition unit 153 performs a recognition process for recognizing a status of the own vehicle, a status around the own vehicle, a status of the driver of the own vehicle, and others. Moreover, the status recognition unit 153 generates a local map (hereinafter referred to as a status recognition map) used for recognizing the status around the own vehicle, as necessary. For example, the status recognition map is an occupancy grid map.

A return start timing required for control differs depending on characteristics of the vehicle itself and a load or the like, even in completely the same road environment of the status of the own vehicle as a recognition target, such as a position, a posture, and movement (e.g., speed, acceleration, moving direction) of the own vehicle, conditions unique to the vehicle and unique to loading freight such as a freight load determining a motion characteristic of the own vehicle and a shift in center of gravity of a vehicle body caused by freight loading, a tire pressure, a brake distance shift caused by a brake pad wear condition, an allowable maximum deceleration braking for preventing a load shift caused by load braking, a relaxation limit speed of centrifugal force caused by liquid load during traveling at a curve, and further, a friction coefficient of a road surface, a road curve, and a slope. Accordingly, it is necessary to collect and learn various types of these conditions and reflect these conditions in the optimum timing for control. It is not sufficient to simply observe and monitor the presence or absence, the contents, and the like of abnormality of the own vehicle in determining a control timing according to the type or the load of the vehicle. In carrying and delivery companies, for example, fixed values may be set beforehand to parameters for determining addition of a desirable extension time for a return for securing a certain level of safety according to characteristics unique to each load. It is not necessarily required to adopt a method which uniformly determines all notification timing determination conditions on the basis of self-accumulated learning.

Examples of the status around the own vehicle corresponding to a recognition target include a type and a position of a surrounding stationary object, a type, a position, and movement of a moving object (e.g., speed, acceleration, and moving direction), a configuration and a road surface state of a surrounding road, surrounding weather, temperature, humidity, and brightness, and others. Examples of the state of the driver corresponding to a recognition target include a physical condition, a wakefulness level, a concentration level, a fatigue level, a visual line direction, a driving operation, and others. For safe traveling of the vehicle, a control start point requiring a measure considerably varies according to a load amount carried in a state unique to the vehicle, a chassis fixed state of a loading portion, a biased state of center of gravity, a maximum decelerative acceleration value, a maximum loadable centrifugal force, and a state of the driver, and also according to a return response delay amount.

The status recognition unit 153 supplies data indicating a result of the recognition process (including status recognition map as necessary) to the self-position estimation unit 132, the status prediction unit 154, and others. Moreover, the status recognition unit 153 stores the status recognition map in the storage unit 111.

The status prediction unit 154 performs a prediction process for predicting a status of the own vehicle, on the basis of data or signals received from the units of the mobile apparatus 100, such as the map analysis unit 151, the traffic rule recognition unit 152, and the status recognition unit 153. For example, the status prediction unit 154 performs a prediction process for predicting a status of the own vehicle, a status around the own vehicle, a status of the driver, and others.

Examples of the status of the vehicle corresponding to a prediction target include a behavior of the own vehicle, occurrence of abnormality, a travelable distance, and others. Examples of the status around the own vehicle corresponding to a prediction target include a behavior of a moving body around the own vehicle, a condition change of a traffic light, an environmental change such as a weather change, and others. Examples of the status of the driver as a prediction target include a behavior and a physical condition of the driver and others.

The status prediction unit 154 supplies data indicating a result of the prediction process to the route planning unit 161, the behavior planning unit 162, and the action planning unit 163 of the planning unit 134, and others together with data received from the traffic rule recognition unit 152 and the status recognition unit 153.

The safety discrimination unit 155 learns the optimum return timing corresponding to a return behavior pattern of the driver, vehicle characteristics, or the like, and provides learning information thus obtained for the status recognition unit 153 and others. In this manner, for example, it is enabled to present to the driver the optimum timing statistically obtained and required for returning to manual driving from automated driving by the driver in a normal condition at a rate equal to or higher than an established fixed rate.

The route planning unit 161 plans a route to a destination on the basis of data or signals received from the units of the mobile apparatus 100, such as the map analysis unit 151 and the status prediction unit 154. For example, the route planning unit 161 sets a route from a current position to a designated destination, on the basis of a global map. Moreover, for example, the route planning unit 161 changes the route as necessary on the basis of a situation such as a traffic jam, an accident, a traffic regulation, and construction, a physical condition of a driver, or the like. The traffic route planning unit 161 supplies data indicating the planned route to the behavior planning unit 162 and others.

The behavior planning unit 162 plans a behavior of the own vehicle for safe traveling in a planned in the route planned by the route planning unit 161 time, on the basis of data or signals received from the units of the mobile apparatus 100 such as the map analysis unit 151 and the status prediction unit 154. For example, the behavior planning unit 162 plans a departure, a stop, a traveling direction (e.g., forward, backward, left turn, right turn, and direction change), a traveling lane, a traveling speed, passing, and others. The behavior planning unit 162 supplies data indicating a planned behavior of the own vehicle to the action planning unit 163 and others.

The action planning unit 163 plans an action of the own vehicle for achieving the behavior planned by the behavior planning unit 162, on the basis of data or signals received from the units of the mobile apparatus 100, such as the map analysis unit 151 and the status prediction unit 154. For example, the action planning unit 163 plans acceleration, deceleration, a traveling track, and others. The action planning unit 163 supplies data indicating the planned action of the own vehicle to an acceleration/deceleration control unit 172 and a direction control unit 173 of the action control unit 135 and others.

The action control unit 135 controls an action of the own vehicle. The action control unit 135 includes the emergency condition avoidance unit 171, the acceleration/deceleration control unit 172, and a direction control unit 173.

The emergency condition avoidance unit 171 performs a detection process for detecting an emergency condition such as a collision, a contact, entrance into a dangerous zone, abnormality of the driver, and abnormality of the vehicle, on the basis of a detection result obtained by the outside-vehicle information detection unit 141, the inside-vehicle information detection unit 142, and the vehicle state detection unit 143. The emergency condition avoidance unit 171 plans an action of the own vehicle for avoiding an emergency condition, such as a sudden stop and a sudden turn, in a case of detection of occurrence of an emergency condition. The emergency condition avoidance unit 171 supplies data indicating the planned action of the own vehicle to the acceleration/deceleration control unit 172, the direction control unit 173, and others.

The acceleration/deceleration control unit 172 performs acceleration/deceleration control for achieving the action of the own vehicle planned by the action planning unit 163 or the emergency condition avoidance unit 171. For example, the acceleration/deceleration control unit 172 calculates a control target value of a driving force generation device or a braking device for achieving planned acceleration, deceleration, or sudden stop, and supplies a control command indicating the calculated control targe value to the drive system control unit 107. Note that an emergency condition may be caused mainly in each of two types of cases. Specifically, one of the two cases is such a case where an urgent return by the driver is not achieved in time at the time of occurrence of an unexpected accident for an anticipated reason during automated driving on a road originally defined as a safe road on the basis of a local dynamic map acquired from an infrastructure in a traveling route of automated driving. The other case is such a case where an accurate return from automated driving to manual driving is difficult for the driver.

The direction control unit 173 performs direction control for achieving the action of the own vehicle planned by the action planning unit 163 or the emergency condition avoidance unit 171. For example, the direction control unit 173 calculates a control target value of a steering mechanism for achieving a traveling track or a sudden return planned by the action planning unit 163 or the emergency condition avoidance unit 171, and supplies a control command indicating the calculated control targe value to the drive system control unit 107.

[15. Configuration example of information processing device]

The processes described above can be executed by applying the configuration of the mobile apparatus described with reference to FIG. 44. However, some of the processes can be executed by an information processing device detachable from the mobile apparatus, for example.

A hardware configuration example of such an information processing device will be described with reference to FIG. 45.

Note that the configuration described with reference to FIG. 45 is also applicable to a hardware configuration of an information processing device within the server 30 or the control center 40 depicted in FIG. 1.

A hardware configuration of these devices will be described with reference to FIG. 45.

A CPU (Central Processing Unit) 301 functions as a data processing unit which executes various types of processes under a program stored in a ROM (Read Only Memory) 302 or a storage unit 308. For example, the processes are executed according to a sequence described in the above embodiment.

A RAM (Random Access Memory) 303 stores a program, data, and the like executed by the CPU 301. The CPU 301, the ROM 302, and the RAM 303 described above are connected to each other via a bus 304.

The CPU 301 is connected to an input/output interface 305 via the bus 304. An input unit 306 constituted by various types of switches, a keyboard, a touch panel, a mouse, a microphone, and an information acquisition unit such as a sensor, a camera, and a GPS, and others, and an output unit 307 constituted by a display, a speaker, and the like are connected to the input/output interface 305.

Note that input information received from a sensor 321 is also input to the input unit 306.

Moreover, the output unit 307 also outputs driving information to a driving unit 322 of the mobile apparatus.

The CPU 301 receives inputs of commands, status data, or the like input from the input unit 306, executes various types of processes, and outputs a processing result to the output unit 307, for example.

The storage unit 308 connected to the input/output interface 305 is constituted by a hard disk or the like, for example, and stores the program executed by the CPU 301 and various types of data. The communication unit 309 functions as a transmission/reception unit for data communication via a network such as the Internet and a local area network, and communicates with an external device.

The drive 310 connected to the input/output interface 305 drives a removable medium 311 constituted by a semiconductor memory or the like, such as a magnetic disk, an optical disk, a magneto-optical disk, and a memory card, and executes recording or reading of data.

[16. Configuration summary of present disclosure]

The embodiment of the present disclosure has been described in detail with reference to the specific embodiment. However, it is obvious that those skilled in the art may make corrections or substitutions for the embodiment without departing from the subject matters of the present disclosure. In other words, the present invention has been disclosed by way of example. Accordingly, it is not intended that the present invention should be interpreted as an invention limited to this example. For determining the subject matters of the present disclosure, the claims should be taken into consideration.

Note that the technology disclosed in the present description can have the following configurations.

(1) An information processing device including:

a data processing unit that generates traveling section display data that has section information indicating an automated driving section and a manual driving section on a traveling route of a vehicle and further generates display data that has information set to indicate offerability of a remote driving assistance service of a control center as additional information associated with a traveling position included in the traveling section display data.

(2) The information processing device according to (1), in which the data processing unit generates display data that has an icon which indicates offerability of the remote driving assistance service and which is set in association with a traveling position according to the traveling section display data.

(3) The information processing device according to (1) or (2), in which the data processing unit generates display data that has a plurality of icons including a first icon indicating that the remote driving assistance service is offerable and a second icon indicating that the remote driving assistance service is not offerable, the plurality of icons being set in association with a traveling position according to the traveling section display data.

(4) The information processing device according to any one of (1) to (3),

in which the control center has a controller that issues an instruction to a driver and a remote driving assistance operator that remotely controls a vehicle, and
the data processing unit generates display data for allowing identification of the following service offerability information (a) and (b).

(a) information indicating offerability of a service of the controller, and
(b) information indicating offerability of a service of the remote driving assistance operator.

(5) The information processing device according to any one of (1) to (4), in which the data processing unit further generates display data for allowing identification of information that indicates whether or not traveling with guide by a leading vehicle is allowed.

(6) The information processing device according to any one of (1) to (5), in which the data processing unit further generates display data for allowing identification of information that indicates a communication congestion status of the control center.

(7) The information processing device according to any one of (1) to (6), in which the data processing unit generates traveling section display data that has a short-distance section where the vehicle is scheduled to travel in an early time slot and a long-distance section where the vehicle is scheduled to travel in a late time slot, the short-distance section and the long-distance section being set such that a display width (W) of the short-distance section becomes larger than a display width of the long-distance section.

(8) The information processing device according to any one of (1) to (7), in which the data processing unit generates traveling section display data configured such that a distance per unit display length of display data of a long-distance section becomes larger than a distance per unit display length of display data of a short-distance section.

(9) The information processing device according to any one of (1) to (8), in which the data processing unit performs automated traveling of the vehicle on the basis of remote driving assistance control from the control center.

(10) The information processing device according to any one of (1) to (9), in which the data processing unit acquires user operation information for the display data that has the information set to indicate offerability of the remote driving assistance service of the control center, and transmits the user operation information to the control center.

(11) The information processing device according to (10), in which the user operation information includes operation information that includes information for designating an icon that indicates offerability of the remote driving assistance service.

(12) The information processing device according to (11), in which the user operation information includes operation information that includes a traveling position on the traveling section display data.

(13) The information processing device according to any one of (10) to (12), in which the data processing unit performs automated traveling of the vehicle on the basis of remote driving assistance control information corresponding to the user operation information received from the control center.

(14) A mobile apparatus that is a mobile apparatus capable of switching between automated driving and manual driving, the mobile apparatus including:

a driver information acquisition unit that acquires driver information associated with a driver of the mobile apparatus;
an environmental information acquisition unit that acquires ambient information around the mobile apparatus; and
a data processing unit that generates traveling section display data for allowing identification of at least an automated driving allowed section and a manual driving section on a traveling route of a vehicle,
in which the data processing unit generates display data that has information set to indicate offerability of a remote driving assistance service of a control center as additional information associated with a traveling position included in the traveling section display data.

(15) An information processing system including:

a mobile apparatus; and
a control center,
in which the control center transmits information indicating offerability of a remote driving assistance service to the mobile apparatus, and
the mobile apparatus includes a data processing unit that generates traveling section display data that has section information indicating an automated driving section and a manual driving section on a traveling route of a vehicle and further generates display data that has information set to indicate offerability of the remote driving assistance service of the control center as additional information associated with a traveling position included in the traveling section display data.

(16) The information processing system according to (15),

in which the control center transmits, to the mobile apparatus, information indicating offerability of a service of a controller that issues an instruction to a driver and information indicating offerability of a service of a remote driving assistance operator that remotely controls a vehicle, and
the data processing unit of the mobile apparatus generates display data for allowing identification of the following service offerability information (a) and (b).

(a) information indicating offerability of the service of the controller, and
(b) information indicating offerability of the service of the remote driving assistance operator.

(17) An information processing method executed by an information processing device, the method including:

by a data processing unit of the information processing device,
generating traveling section display data that has section information indicating an automated driving section and a manual driving section on a traveling route of a vehicle and further generating display data that has information set to indicate offerability of a remote driving assistance service of a control center as additional information associated with a traveling position included in the traveling section display data.

(18) A program that causes an information processing device to execute information processing, the program including:

causing a data processing unit of the information processing device to generate traveling section display data that has section information indicating an automated driving section and a manual driving section on a traveling route of a vehicle and further generate display data that has information set to indicate offerability of a remote driving assistance service of a control center as additional information associated with a traveling position included in the traveling section display data.

Moreover, a series of processes described in the description can be executed by hardware, software, or a composite configuration of both. In a case where the processes are executed by software, the program where the process sequence has been recorded can be installed in a memory of a computer incorporated in dedicated hardware and executed, or can be installed in a general-purpose computer capable of executing various types of processes and executed. For example, the program can be recorded in a recording medium beforehand. The program can be installed in the computer from the recording medium, or can be received via a network such as a LAN (Local Area Network) and the Internet and installed in a recording medium such as a built-in hard disk.

Note that the various types of processes described in the description may be executed not only in a time series according to the description, but also in parallel or individually according to a processing ability of the device executing the processes or as necessary. Moreover, the system in the present description refers to a logical set configuration constituted by a plurality of devices. The devices of the respective configurations are not necessarily limited to devices accommodated in the same housing.

[Industrial Applicability]

As described above, provided according to an embodiment of the present disclosure is a configuration for generating display data which has information that is set on a traveling route of a vehicle and that indicates offerability of a remote driving assistance service of a control center.

Specifically, for example, the configuration includes a data processing unit that generates traveling section display data that has section information indicating an automated driving section and a manual driving section on a traveling route of a vehicle and that further generates display data that has information set to indicate offerability of a remote driving assistance service of a control center as additional information associated with a traveling position included in the traveling section display data. The data processing unit generates display data that has an icon which indicates offerability of the remote driving assistance service and which is set in association with a traveling position according to the traveling section display data.

This configuration provides such a configuration which generates and displays display data that is set on a traveling route of a vehicle and that indicates offerability of a remote driving assistance service of a control center.

[Reference Signs List]

| | |
|---|---|
| 10: | Vehicle |
| 11: | Data processing unit |
| 12: | Driver information acquisition unit |
| 13: | Environmental information acquisition unit |
| 14: | Communication unit |
| 15: | Notification unit |
| 16: | Storage unit |
| 20: | Driver |
| 30: | Server |
| 40: | Control center |
| 51: | Controller icon |
| 52: | Remote driving assistance operator icon |
| 53: | Leading vehicle icon |
| 54: | Control center icon |
| 100: | Mobile apparatus |
| 101: | Input unit |
| 102: | Data acquisition unit |
| 103: | Communication unit |
| 104: | In-vehicle device |
| 105: | Output control unit |
| 106: | Output unit |
| 107: | Drive system control unit |
| 108: | Drive system |
| 109: | Body system control unit |
| 110: | Body system |
| 111: | Storage unit |
| 112: | Automated driving control unit |
| 121: | Communication network |
| 131: | Detection unit |
| 132: | Self-position estimation unit |
| 133: | Status analysis unit |
| 134: | Planning unit |
| 135: | Action control unit |
| 141: | Outside-vehicle information detection unit |
| 142: | Inside-vehicle information detection unit |
| 143: | Vehicle state detection unit |
| 151: | Map analysis unit |
| 152: | Traffic rule recognition unit |
| 153: | Status recognition unit |
| 154: | Status prediction unit |
| 155: | Safety discrimination unit |
| 161: | Route planning unit |
| 162: | Behavior planning unit |
| 163: | Action planning unit |
| 171: | Emergency condition avoidance unit |

172: Acceleration/deceleration control unit
173: Direction control unit
301: CPU
302: ROM
303: RAM
304: Bus
305: Input/output interface
306: Input unit
307: Output unit
308: Storage unit
309: Communication unit
310: Drive
311: Removable medium
321: Sensor
322: Driving unit

**Claims**

1. An information processing device comprising:
a data processing unit that generates traveling section display data that has section information indicating an automated driving section and a manual driving section on a traveling route of a vehicle and further generates display data that has information set to indicate offerability of a remote driving assistance service of a control center as additional information associated with a traveling position included in the traveling section display data.

2. The information processing device according to claim 1, wherein the data processing unit generates display data that has an icon which indicates offerability of the remote driving assistance service and which is set in association with a traveling position according to the traveling section display data.

3. The information processing device according to claim 1, wherein the data processing unit generates display data that has a plurality of icons including a first icon indicating that the remote driving assistance service is offerable and a second icon indicating that the remote driving assistance service is not offerable, the plurality of icons being set in association with a traveling position according to the traveling section display data.

4. The information processing device according to claim 1, wherein

the control center has a controller that issues an instruction to a driver and a remote driving assistance operator that remotely controls a vehicle, and
the data processing unit generates display data for allowing identification of the following service offerability information (a) and (b).

(a) information indicating offerability of a service of the controller, and
(b) information indicating offerability of a service of the remote driving assistance operator.

5. The information processing device according to claim 1, wherein the data processing unit further generates display data for allowing identification of information that indicates whether or not traveling with guide by a leading vehicle is allowed.

6. The information processing device according to claim 1, wherein the data processing unit further generates display data for allowing identification of information that indicates a communication congestion status of the control center.

7. The information processing device according to claim 1, wherein the data processing unit generates traveling section display data that has a short-distance section where the vehicle is scheduled to travel in an early time slot and a long-distance section where the vehicle is scheduled to travel in a late time slot, the short-distance section and the long-distance section being set such that a display width (W) of the short-distance section becomes larger than a display width of the long-distance section.

8. The information processing device according to claim 1, wherein the data processing unit generates traveling section display data configured such that a distance per unit display length of display data of a long-distance section becomes larger than a distance per unit display length of display data of a short-distance section.

9. The information processing device according to claim 1, wherein the data processing unit performs automated traveling of the vehicle on a basis of remote driving assistance control from the control center.

10. The information processing device according to claim 1, wherein the data processing unit acquires user operation information for the display data that has the information set to indicate offerability of the remote driving assistance service of the control center, and transmits the user operation information to the control center.

11. The information processing device according to claim 10, wherein the user operation information includes operation information that includes information for designating an icon that indicates offerability of the remote driving assistance service.

12. The information processing device according to claim 10, wherein the user operation information includes operation information that includes a traveling position on the traveling section display data.

13. The information processing device according to claim 10, wherein the data processing unit performs automated traveling of the vehicle on a basis of remote driving assistance control information corresponding to the user operation information received from the control center.

14. A mobile apparatus that is a mobile apparatus capable of switching between automated driving and manual driving, the mobile apparatus comprising:

a driver information acquisition unit that acquires driver information associated with a driver of the mobile apparatus;
an environmental information acquisition unit that acquires ambient information around the mobile apparatus; and
a data processing unit that generates traveling section display data for allowing identification of at least an automated driving allowed section and a manual driving section on a traveling route of a vehicle,
wherein the data processing unit generates display data that has information set to indicate offerability of a remote driving assistance service of a control center as additional information associated with a traveling position included in the traveling section display data.

15. An information processing system comprising:

a mobile apparatus; and
a control center,
wherein the control center transmits information indicating offerability of a remote driving assistance service to the mobile apparatus, and
the mobile apparatus includes a data processing unit that generates traveling section display data that has section information indicating an automated driving section and a manual driving section on a traveling route of a vehicle and further generates display data that has information set to indicate offerability of the remote driving assistance service of the control center as additional information associated with a traveling position included in the traveling section display data.

16. The information processing system according to claim 15,

wherein the control center transmits, to the mobile apparatus, information indicating offerability of a service of a controller that issues an instruction to a driver and information indicating offerability of a service of a remote driving assistance operator that remotely controls a vehicle, and
the data processing unit of the mobile apparatus generates display data for allowing identification of the following service offerability information (a) and (b).

(a) information indicating offerability of the service of the controller, and
(b) information indicating offerability of the service of the remote driving assistance operator.

17. An information processing method executed by an information processing device, the method comprising:

by a data processing unit of the information processing device,
generating traveling section display data that has section information indicating an automated driving section and a manual driving section on a traveling route of a vehicle and further generating display data that has information set to indicate offerability of a remote driving assistance service of a control center as additional information associated with a traveling position included in the traveling section display data.

18. A program that causes an information processing device to execute information processing, the program comprising:
causing a data processing unit of the information processing device to generate traveling section display data that has section information indicating an automated driving section and a manual driving section on a traveling route of a vehicle and further generate display data that has information set to indicate offerability of a remote driving assistance service of a control center as additional information associated with a traveling position included in the traveling section display data.

# FIG.1

30 SERVER

40 CONTROL CENTER

10 VEHICLE (CAR)

15 NOTIFICATION UNIT
(DISPLAY UNIT, AUDIO OUTPUT
UNIT, VIBRATOR, ETC.)

12

20 DRIVER

DRIVER INFORMATION
ACQUISITION UNIT

13

ENVIRONMENTAL
INFORMATION
ACQUISITION UNIT

11

14

DATA
PROCESSING
UNIT

COMMUNICATION
UNIT

STORAGE
UNIT

16

EP 4 083 960 A1

# FIG.2

| | |
|---|---|
| **POSITION/POSTURE OF DRIVER**<br><br>Driver Position &<br>Posture Tracker<br><br>**VEHICLE INTERIOR DRIVER POSITION AND POSTURE DETECTOR**<br><br>ToF /Stereo Camera/<br>Seat Strain Gauge etc | |

| Face (Head) Recognition | Driver Eye Tracker | Driver Head Tracker |
|---|---|---|

LIGHT CONTROL FOR Head and Eye Tracker

DRIVER IDENTIFICATION UNIT
Driver Identification

VITAL SIGNAL
Vital Signal

EP 4 083 960 A1

FIG.3

FIG.4

DISPLAY INFORMATION EXAMPLE

AUTOMATED DRIVING

SWITCH TO MANUAL DRIVING

10 VEHICLE

15 NOTIFICATION UNIT (DISPLAY UNIT)

# FIG.5

## (a) NOTIFICATION PROCESS FOR HIGH WAKEFULNESS OF DRIVER DURING EXECUTION OF AUTOMATED DRIVING

TIME FROM NOTIFICATION TO MANUAL DRIVING START IS ALLOWED TO BE SHORT

NOTIFICATION OF SWITCHING TO MANUAL DRIVING

MANUAL DRIVING START

TIME tp

TIME T

## (b) NOTIFICATION PROCESS FOR LOW WAKEFULNESS OF DRIVER DURING EXECUTION OF AUTOMATED DRIVING

NOTIFICATION OF SWITCHING TO MANUAL DRIVING

TIME FROM NOTIFICATION TO MANUAL DRIVING START IS REQUIRED TO BE LONG

MANUAL DRIVING START

TIME tq

TIME T

# F I G . 6

(a) NOTIFICATION PROCESS FOR HIGH WAKEFULNESS OF DRIVER DURING EXECUTION OF AUTOMATED DRIVING

10 VEHICLE

TIME FROM NOTIFICATION TO MANUAL DRIVING START IS ALLOWED TO BE SHORT

NOTIFICATION OF SWITCHING TO MANUAL DRIVING

MANUAL DRIVING START

TIME tp

TIME T

(b) NOTIFICATION PROCESS FOR LOW WAKEFULNESS OF DRIVER DURING EXECUTION OF AUTOMATED DRIVING

NOTIFICATION OF SWITCHING TO MANUAL DRIVING

TIME FROM NOTIFICATION TO MANUAL DRIVING START IS REQUIRED TO BE LONG

MANUAL DRIVING START

TIME tq

TIME T

(c) NOTIFICATION PROCESS FOR DRIVER AWAY FROM DRIVER'S SEAT DURING EXECUTION OF AUTOMATED DRIVING

NOTIFICATION OF SWITCHING TO MANUAL DRIVING

TIME FROM NOTIFICATION TO MANUAL DRIVING START IS REQUIRED TO BE LONG

MANUAL DRIVING START

TIME tr

TIME T

EP 4 083 960 A1

# FIG.7

S1
COMPLETELY SEPARATED STATE FROM STEERING FOR DRIVING (PASSIVE MONITORING)

S2
DETERMINE RETURN NOTIFICATION TIMING

S3
CHECK RETURN TO SITTING

S4
CHECK INTERNAL WAKEFULNESS LEVEL STATE WITH USE OF SACCADE, ETC.

S5
MONITOR STABILIZATION LEVEL OF DRIVER ACTUAL STEERING CONDITION

S6
COMPLETE TRANSITION TO MANUAL DRIVING

EP 4 083 960 A1

# FIG.8

```
        ┌─────────────┐
        │    START    │
        └──────┬──────┘
               │  S11
    ┌──────────▼──────────┐
    │   IDENTIFY DRIVER   │
    └──────────┬──────────┘
               │  S12
    ┌──────────▼──────────┐
    │   SET DESTINATION   │
    └──────────┬──────────┘
               │  S13
    ┌──────────▼──────────┐
    │   START DISPLAY OF  │
    │      TRAVELING      │
    │   SECTION IN ROUTE  │
    └──────────┬──────────┘
               │  S14
    ┌──────────▼──────────┐
    │  START ACQUISITION  │
    │  OF LDM INFORMATION │
    └──────────┬──────────┘
               │  S15
    ┌──────────▼──────────┐
    │   START TRAVELING   │
    └──────────┬──────────┘
```

S16

START PROCESSES FOR ACQUISITION,
ANALYSIS, CONVERSION, AND
RECORDING OF DRIVER INFORMATION
AND ENVIRONMENTAL INFORMATION

S17

UPDATE TRAVELING SECTION DISPLAY
ON BASIS OF POSITION
INFORMATION AND LDM INFORMATION

S18

PHENOMENON CHANGE HANDLING PROCESS

EP 4 083 960 A1

# F I G . 9

Sb

Sc

Sa

Sb

Sc

Sa

Sd

Sa

Sc

Sb

Sa

Sd

Sa

GREEN  YELLOW  RED

# FIG.10

GREEN YELLOW RED

(a) Sa Sc Sb Sa Sd Sc Sb Sc Sb

(b) v(t) 0 TRAVEL DISTANCE

(c) Sa Sc Sb Sa Sd Sc Sb Sc Sb 0 TIME

TIME LINEAR DISPLAY NEAREST SECTION

TIME RECIPROCAL DISPLAY SECTION 1/Δt

TIME LINEAR DISPLAY FAR SECTION REDUCTION RATE hs/h0

Sc

(d)

h0

h

hs

CURRENT SPOT

t0

t ( t = t0 * h0/h )

t1

t2

FIG.11

(a)

(b)

(c)

Sb, SaSc, Sb, SaSc, Sb, Sc

Min.10, Min.30, PA/SA

Sb, Sd Sb, Sa, Sc Sb Sa Sd, Sa

CURRENT SPOT, FIRST SECTION, SECOND SECTION, THIRD SECTION

t0, t1, t2

TIME

FIG.12

(a)

(b)

(c)

(d)

CURRENT
SPOT

FIRST SECTION

t0

SECOND SECTION

t1

THIRD SECTION

t2

TIME

EP 4 083 960 A1

# FIG.13

ADDITIONAL INFORMATION a

SECTION PROVIDING LOW-SPEED DETOUR ROAD WHEN RETURN TO MANUAL DRIVING IS NOT ALLOWED (ORDINARY ROAD PARALLEL TO HIGHWAY, ETC.)

ADDITIONAL INFORMATION b

SECTION EXHIBITING RUSH-OUT RISK, SECTION REQUIRING MANUAL TRAVELING UNDER CAUTION

ADDITIONAL INFORMATION c

MANUAL DRIVING RETURN ABANDON PROHIBITION REGION (SECTION SUBJECT TO PUNISHMENT) (FOR EXAMPLE, SECTION WHICH CAN HAVE TRAFFIC JAM OR ROADBLOCK BY LANE REDUCTION, ETC.)

ADDITIONAL INFORMATION d

SECTION WHICH CAN CONSIDERABLY CHANGE SECTION LENGTH SUCH AS TRAFFIC JAM SECTION

EP 4 083 960 A1

# FIG.14

ADDITIONAL INFORMATION e3

ADDITIONAL INFORMATION e1

ADDITIONAL INFORMATION f

DETOUR ROAD POSITION GUIDE INFORMATION

ADDITIONAL INFORMATION e4

ADDITIONAL INFORMATION e2

ADDITIONAL INFORMATION e5

# FIG.15

ADDITIONAL
INFORMATION g

60min

40min

20min

10min

3min

ADDITIONAL
INFORMATION h

1:25

1:t

1:1

EP 4 083 960 A1

FIG.16

MANUAL DRIVING RETURN ABANDON PROHIBITION REGION (SECTION SUBJECT TO PUNISHMENT) (FOR EXAMPLE, SECTION WHICH CAN HAVE TRAFFIC JAM OR ROADBLOCK BY LANE REDUCTION, ETC.)

ADDITIONAL INFORMATION m

MRM (Minimum Risk Maneuver) START POINT (TIMING FOR STARTING URGENT DECELERATION, STOP, AND EVACUATION IN CASE WHERE START DETECTION OF MANUAL DRIVING RETURN PROCEDURE IS IMPOSSIBLE)

ADDITIONAL INFORMATION n2

INITIAL WARNING POINT

NOTIFICATION POINT

ADDITIONAL INFORMATION n1

32sec.

ADDITIONAL INFORMATION p

REMAINING TIME UNTIL NOTIFICATION POINT

EP 4 083 960 A1

FIG.17

MANUAL DRIVING RETURN
ABANDON PROHIBITION REGION
(SECTION SUBJECT TO
PUNISHMENT)
(FOR EXAMPLE, SECTION WHICH
CAN HAVE TRAFFIC JAM OR
ROADBLOCK BY LANE
REDUCTION, ETC.)

ADDITIONAL INFORMATION m

MRM (Minimum Risk Maneuver) START POINT
(TIMING FOR STARTING URGENT DECELERATION, STOP,
AND EVACUATION IN CASE WHERE START DETECTION OF
MANUAL DRIVING RETURN PROCEDURE IS IMPOSSIBLE)

ADDITIONAL INFORMATION n2

INITIAL WARNING POINT

NOTIFICATION POINT

ADDITIONAL
INFORMATION
n1

13sec.

ADDITIONAL INFORMATION p

REMAINING TIME UNTIL
NOTIFICATION POINT

EP 4 083 960 A1

FIG. 18

# FIG.19

AUTOMATED DRIVING SECTION

MANUAL DRIVING SECTION

10 VEHICLE

t1    t2    t3    tc

TIME AXIS (t)

MONITORING FOR DETERMINATION OF NOTIFICATION TIMING

NOTIFICATION FOR SWITCHING TO MANUAL DRIVING

FINAL EXIT ALLOWING EVACUATION FROM AUTOMATED DRIVING

LIMITING POINT OF EMERGENCY STOP BY MRM

MANUAL DRIVING SECTION START POINT

EP 4 083 960 A1

# FIG.20

(a)

OBSERVATION PLOT BETWEEN OBSERVABLE
EVALUATION VALUE AND RETURN DELAY TIME

RETURN DELAY TIME

c

OBSERVABLE EVALUATION VALUE

HIGH ←           → LOW

(b)

0.95

RETURN RELAY TIME

a

15

t1

10

b

5

0

1.2  1  0.8 0.6 0.4 0.2  0

RETURN SUCCESS RATE

EP 4 083 960 A1

# F I G . 2 1

1: DRIVER STEERING
INTERACTIVE EVALUATION

2: SITTING
MEASUREMENT EVALUATION OF DRIVING VISUAL
LINE OR POSTURE, Saccade EYEBALL, ETC.

3: SITTING DRIVING POSTURE
TERMINAL USE

4: NON-DRIVING POSTURE
IRREGULAR ROTATIONAL SITTING

5: SITTING
DRIVING POSTURE EVALUATION

6: IN CASE OF TAKING NAP
RETURN TIME DELAY DISTRIBUTION

$\Delta T$

$\Delta T - Ta$

$\Delta T - (Ta+Tb)$

$\Delta T - (Ta+Tb+Tc)$

Ta

Tb

Tc

# FIG. 22

MONITORING FOR DETERMINATION OF NOTIFICATION TIMING

PROVIDE REMOTE DRIVING ASSISTANCE SERVICE SUPPLY AVAILABILITY INFORMATION AND RISK INFORMATION

AUTOMATED DRIVING SECTION

MANUAL DRIVING SECTION

10 VEHICLE

t1  t2  tx  t3  tc

TIME AXIS (t)

NOTIFICATION FOR SWITCHING TO MANUAL DRIVING

FINAL EXIT ALLOWING EVACUATION FROM AUTOMATED DRIVING

REMOTE DRIVING ASSISTANCE SERVICE REQUEST FINAL ALLOWABLE POINT

LIMITING POINT OF EMERGENCY STOP BY MRM

MANUAL DRIVING SECTION START POINT

EP 4 083 960 A1

# FIG.23

10 VEHICLE

TRAVELING START POINT A

JUNCTION TO HIGHWAY

EXIT1

AUTOMATED DRIVING SECTION

TOWN LOW-SPEED TRAVELING DETOUR ROAD ALLOWING PARKING OR STOPPING ON ROAD SHOULDER

SA1

HAVING EXIT CHOICE

IC Junction1

SA2

EXIT2

TOWN LOW-SPEED TRAVELING DETOUR ROAD ALLOWING PARKING OR STOPPING ON ROAD SHOULDER

SA3

IC Junction2

EXIT3

SA4

MANUAL DRIVING TRANSITION FAILURE VEHICLE EVACUATION PA

TRAVELING END POINT B

MANUAL DRIVING SECTION

EP 4 083 960 A1

# FIG.24

| | ICON | ICON NAME | MEANING OF ICON |
|---|---|---|---|
| (1) | | CONTROLLER AVAILABLE STATE DISPLAY ICON | CONTROLLER PROVIDING SERVICE SUCH AS INSTRUCTION AND ADVICE FROM CONTROLLER IS AVAILABLE |
| (2) | | CONTROLLER UNAVAILABLE STATE DISPLAY ICON | CONTROLLER PROVIDING SERVICE SUCH AS INSTRUCTION AND ADVICE FROM CONTROLLER IS UNAVAILABLE |
| (3) | | REMOTE DRIVING ASSISTANCE OPERATOR AVAILABLE STATE DISPLAY ICON | REMOTE DRIVING ASSISTANCE SERVICE BY REMOTE DRIVING ASSISTANCE OPERATOR IS AVAILABLE |
| (4) | | REMOTE DRIVING ASSISTANCE OPERATOR UNAVAILABLE STATE DISPLAY ICON | REMOTE DRIVING ASSISTANCE SERVICE BY REMOTE DRIVING ASSISTANCE OPERATOR IS AVAILABLE |

F I G . 2 5

# FIG.26

TRAVELING START POINT A

JUNCTION TO HIGHWAY

EXIT1

P01

AUTOMATED DRIVING SECTION

P03

10 VEHICLE

P02

P04

SA1

HAVING EXIT CHOICE

IC Junction1

SA2

Px    Py

EXIT2

P05

SECTION Px TO Py IS CHANGED TO MANUAL DRIVING SECTION DUE TO OCCURRENCE OF ACCIDENT

SA3

IC Junction2

EXIT3

SA4

MANUAL DRIVING TRANSITION FAILURE VEHICLE EVACUATION PA

TRAVELING END POINT B

MANUAL DRIVING SECTION

EP 4 083 960 A1

# FIG.27

| | ICON | | ICON NAME | MEANING OF ICON |
|---|---|---|---|---|
| | (DISPLAY EXAMPLE 1) | (DISPLAY EXAMPLE 2) | | |
| (1) | (COLOR DISPLAY) | (GREEN DISPLAY) | CONTROLLER AVAILABLE STATE DISPLAY ICON | CONTROLLER PROVIDING SERVICE SUCH AS INSTRUCTION AND ADVICE FROM CONTROLLER IS AVAILABLE |
| (2) | (GRAY DISPLAY) | (RED DISPLAY) | CONTROLLER UNAVAILABLE STATE DISPLAY ICON | CONTROLLER PROVIDING SERVICE SUCH AS INSTRUCTION AND ADVICE FROM CONTROLLER IS UNAVAILABLE |
| (3) | (COLOR DISPLAY) | (GREEN DISPLAY) | REMOTE DRIVING ASSISTANCE OPERATOR AVAILABLE STATE DISPLAY ICON | REMOTE DRIVING ASSISTANCE SERVICE BY REMOTE DRIVING ASSISTANCE OPERATOR IS AVAILABLE |
| (4) | (GRAY DISPLAY) | (RED DISPLAY) | REMOTE DRIVING ASSISTANCE OPERATOR UNAVAILABLE STATE DISPLAY ICON | REMOTE DRIVING ASSISTANCE SERVICE BY REMOTE DRIVING ASSISTANCE OPERATOR IS AVAILABLE |

EP 4 083 960 A1

# FIG.28

| | ICON | | ICON NAME | MEANING OF ICON |
|---|---|---|---|---|
| | (DISPLAY EXAMPLE 3) | (DISPLAY EXAMPLE 4) | | |
| (3) | <br>(OPERATOR DISPLAY) | <br>(DISPLAY OF OPERATOR VIEWED FROM SIDE) | REMOTE DRIVING ASSISTANCE OPERATOR AVAILABLE STATE DISPLAY ICON | REMOTE DRIVING ASSISTANCE SERVICE BY REMOTE DRIVING ASSISTANCE OPERATOR IS AVAILABLE |
| (4) | <br>(OPERATOR NON-DISPLAY) | <br>(NON-DISPLAY OF OPERATOR VIEWED FROM SIDE ) | REMOTE DRIVING ASSISTANCE OPERATOR UNAVAILABLE STATE DISPLAY ICON | REMOTE DRIVING ASSISTANCE SERVICE BY REMOTE DRIVING ASSISTANCE OPERATOR IS AVAILABLE |

EP 4 083 960 A1

# FIG.29

| | ICON | | ICON NAME | MEANING OF ICON |
|---|---|---|---|---|
| | (DISPLAY EXAMPLE 1) | (DISPLAY EXAMPLE 2) | | |
| (5) | (COLOR DISPLAY) | (COLOR DISPLAY) | LEADING VEHICLE AVAILABLE STATE DISPLAY ICON | AUTOMATED DRIVING ASSISTANCE SERVICE USING LEADING VEHICLE IS AVAILABLE |
| (6) | (GRAY DISPLAY) | (BACKGROUND GRAY DISPLAY) | LEADING VEHICLE UNAVAILABLE STATE DISPLAY ICON | AUTOMATED DRIVING ASSISTANCE SERVICE USING LEADING VEHICLE IS UNAVAILABLE |

# FIG.30

| | ICON | | ICON NAME | MEANING OF ICON |
|---|---|---|---|---|
| | (DISPLAY EXAMPLE 1) | (DISPLAY EXAMPLE 2) | | |
| (7) | (COLOR DISPLAY) | (COLOR DISPLAY) | CONTROL CENTER COMMUNICATION FAVORABLE STATE DISPLAY ICON | INDICATING FAVORABLE COMMUNICATION STATE WITH CONTROL CENTER |
| (8) | (GRAY DISPLAY) | (BACKGROUND GRAY DISPLAY) | CONTROL CENTER COMMUNICATION CONGESTION STATE DISPLAY ICON | INDICATING CONGESTION OF COMMUNICATION WITH CONTROL CENTER |

EP 4 083 960 A1

# FIG.31

ADDITIONAL INFORMATION

ADDITIONAL INFORMATION

ADDITIONAL INFORMATION

ADDITIONAL INFORMATION

P ☕
1Km

TRAVELING SECTION
DISPLAY DATA

EP 4 083 960 A1

# FIG.32

TRAVELING SECTION
DISPLAY DATA

51 CONTROLLER
ICON

52 REMOTE DRIVING
ASSISTANCE
OPERATOR ICON

53 LEADING
VEHICLE ICON

54 CONTROL
CENTER ICON

EP 4 083 960 A1

# FIG.33

TRAVELING SECTION
DISPLAY DATA

# FIG.34

TRAVELING SECTION DISPLAY DATA

SERVICE AVAILABILITY DETAILED DATA DISPLAY POSITION LINE

SERVICE AVAILABILITY DETAILED DATA

MIN — SERVICE AVAILABILITY → MAX

COMMUNICATION

CONTROLLER

OPERATOR

LEADING VEHICLE

EP 4 083 960 A1

# FIG.35

SECTION REQUIRING USE OF REMOTE ASSISTANCE OPERATOR

RESERVATION IS NECESSARY THROUGH COMMUNICATION WITH CONTROLLER BY THIS SPOT P1 IN CASE OF USE OF REMOTE ASSISTANCE OPERATOR IN SECTION FROM P2 TO P3

P3
P2
P1

51 CONTROLLER ICON

52 REMOTE DRIVING ASSISTANCE OPERATOR ICON

EP 4 083 960 A1

# F I G . 3 6

INDIVIDUAL DETAILED DATA DISPLAY EXAMPLE FOR EACH RESOURCE

SIMPLE REPRESENTATIVE DATA (OR INTEGRATED DATA) DISPLAY EXAMPLE

4G

5G

54 CONTROL CENTER ICON

53 LEADING VEHICLE ICON

52 REMOTE DRIVING ASSISTANCE OPERATOR ICON

51 CONTROLLER ICON

51 CONTROLLER ICON

FIG.37

FIG.38

FIG.39

51 CONTROLLER ICON

52 REMOTE DRIVING ASSISTANCE OPERATOR ICON

53 LEADING VEHICLE ICON

54 CONTROL CENTER ICON

EP 4 083 960 A1

# F I G . 4 0

## (A) PROCESS BY CONTROL CENTER

(MAIN PROCESS 1)

OFFERING SERVICE BY CONTROLLER OR REMOTE DRIVING ASSISTANCE OPERATOR

(MAIN PROCESS 2)

OPTIMUM ARRANGEMENT OF CONTROLLER AND REMOTE DRIVING ASSISTANCE OPERATOR, NOTIFICATION PROCESS FOR NOTIFICATION OF SERVICE OFFERABILITY INFORMATION

(SUB PROCESS 1)

COLLECTION OF INFORMATION ASSOCIATED WITH REMOTE DRIVING ASSISTANCE REQUEST VEHICLE FOR EACH REGION

(SUB PROCESS 2)

COLLECTION OF INFORMATION ASSOCIATED WITH REMOTE DRIVING ASSISTANCE NECESSARY SECTION FOR EACH REGION (USE LDM)

(SUB PROCESS 3)

ANALYSIS AND PREDICTION PROCESS FOR ENTRANCE (RESERVATION) VEHICLE INTO CONTROLLABLE AREA

## (B) SOCIAL NEEDS FOR REMOTE TRAVELING ASSISTANCE

(TYPE 1)

REMOTE DRIVING ASSISTANCE ESSENTIAL VEHICLE

(EXAMPLE) VEHICLE BOARDED BY ONLY USER NOT ALLOWED TO DRIVE SUCH AS PATIENT AND KINDERGARTEN CHILD

(TYPE 2)

COMPLEMENTARY REMOTE DRIVING ASSISTANCE NECESSARY VEHICLE

(EXAMPLE) VEHICLE BOARD BY USER UNABLE TO PERFORM SAFE DRIVING SUCH AS PATIENT AND AGED PERSON

(TYPE 3)

ORDINARY VEHICLE OR COMMERCIAL VEHICLE ALLOWED TO SWITCH BETWEEN AUTOMATED DRIVING AND MANUAL DRIVING

(EXAMPLE) USE WHEN RETURN TO MANUAL DRIVING IS DIFFICULT

EP 4 083 960 A1

# FIG.41

## (A. INPUT INFORMATION)

(a1) INFRASTRUCTURE INFORMATION (INFORMATION INDICATING ROAD SITUATION, ACCIDENT, ETC.)

(a2) METEOROLOGICAL/WEATHER INFORMATION

(a3) CALENDAR INFORMATION

(a4) SERVICE USE STATISTICAL INFORMATION (LEARNING DATA)

(a5) PRIOR RESERVATION INFORMATION FOR SERVICE USE SUCH AS SCHOOL BUS

(a6) ALLOWABLE ACCOMMODATION VOLUME INFORMATION ASSOCIATED WITH OF VEHICLE EVACUATION AREA

## (B. DATA PROCESSING)

(b1) PREDICTION OF COMMUNICATION INFRASTRUCTURE MARGIN THAT CAN SECURE TIME SYNCHRONIZATION AND REDUNDANCY

(b2) PREDICTION OF MARGIN FOR SERVICE OFFERED BY CONTROLLER

(b3) PREDICTION OF MARGIN FOR SERVICE OFFERED BY REMOTE DRIVING ASSISTANCE OPERATOR

(b4) WORK/STANDBY SCHEDULING OF CONTROLLER

(b5) WORK/STANDBY SCHEDULING OF REMOTE DRIVING ASSISTANCE OPERATOR

(b6) MANAGEMENT PROCESS FOR LEADING GUIDANCE VEHICLE

## (C. PROVIDED INFORMATION)

(c1) INFORMATION PREDICTING COMMUNICATION BAND TO BE SECURED FOR EACH REGION AND TIME SLOT

(c2) INFORMATION PREDICTING AVAILABILITY OF CONTROLLER SERVICE FOR EACH REGION AND TIME SLOT

(c3) INFORMATION PREDICTING AVAILABILITY OF REMOTE DRIVING ASSISTANCE OPERATOR SERVICE FOR EACH REGION AND TIME SLOT

(c4) INFORMATION PREDICTING AVAILABILITY OF LEADING GUIDANCE VEHICLE FOR EACH REGION AND TIME SLOT

(c5) LATEST INFORMATION UPDATED AS NEEDED ON BASIS OF INFORMATION RECEIVED FROM ROUTE TRAVELING VEHICLE

(c6) INFORMATION RECEIVED FROM INDIVIDUAL TRAVELING VEHICLE (PROVIDED FOR OTHER VEHICLE)

ON-DEMAND ASSISTANCE REQUEST FROM INDIVIDUAL VEHICLE

LEADING GUIDANCE VEHICLE

# F I G . 4 2

**30 SERVER**

STATIC MAP, LDM

**10 VEHICLE**

**40 CONTROL CENTER**

**(C. PROVIDED INFORMATION)**

(c1) INFORMATION PREDICTING COMMUNICATION BAND TO BE SECURED FOR EACH REGION AND TIME SLOT

(c2) INFORMATION PREDICTING AVAILABILITY OF CONTROLLER SERVICE FOR EACH REGION AND TIME SLOT

(c3) INFORMATION PREDICTING AVAILABILITY OF REMOTE DRIVING ASSISTANCE OPERATOR SERVICE FOR EACH REGION AND TIME SLOT

(c4) INFORMATION PREDICTING AVAILABILITY OF LEADING GUIDANCE VEHICLE FOR EACH REGION AND TIME SLOT

(c5) LATEST INFORMATION UPDATED AS NEEDED ON BASIS OF INFORMATION RECEIVED FROM ROUTE TRAVELING VEHICLE

(c6) INFORMATION RECEIVED FROM INDIVIDUAL TRAVELING VEHICLE (PROVIDED FOR OTHER VEHICLES)

11

**DATA PROCESSING UNIT**

(d1) PREDICTION OF PASSING SPEED FOR EACH TRAVELING ROUTE SECTION

(d2) PREDICTION OF ARRIVAL TIME FOR EACH TRAVELING ROUTE SECTION

(d3) ACQUISITION OF SUPPLY AVAILABILITY OF CONTROLLER, OPERATOR, LEADING VEHICLE AT EACH ARRIVAL TIME FOR EACH TRAVELING ROUTE SECTION

(d4) ACQUISITION OF PASSAGE EVENT (PA, CONSTRUCTION SECTION, BYPASS ORDINARY ROAD EXIT, SCHOOL ZONE) INFORMATION AT EACH ARRIVAL TIME FOR EACH TRAVELING ROUTE SECTION

(d5) DETECTION AND ANALYSIS OF OPERATION (TOUCH, SWIPE, ETC. ON DISPLAY SCREEN) BY OPERATION OF USER (DRIVER), PROCESS BASED ON ANALYSIS RESULT (TRANSMISSION OF SERVICE RECEPTION REQUEST BASED ON USER REQUEST, ETC.)

(d6) NOTIFICATION, WARNING, MRM ACTUATION CONTROL BASED ON CHARACTERISTIC OF DRIVER CONCERNING RETURN TO MANUAL DRIVING AND RETURN PROGRESS QUALITY

14 COMMUNICATION UNIT

12 DRIVER INFORMATION ACQUISITION UNIT

13 ENVIRONMENT INFORMATION ACQUISITION UNIT

EXTERNAL ENVIRONMENT INFORMATION, DRIVER INFORMATION (RETURN POSSIBILITY INFORMATION, ETC. (LEARNING DATA USE))

**20 DRIVER**

**15 NOTIFICATION UNIT**

USER INTERACTIVE INFORMATION HMI

EP 4 083 960 A1

# FIG.43

(1) MANUAL DRIVING TRANSITION REQUEST POINT IS PRESENT AT ROADBLOCK RISK SPOT ON TRAVELING ROUTE. MEASURE TO BE TAKEN AT THIS SPOT IS VOLUNTARY MANUAL DRIVING SWITCHING BY DRIVER, OR EMERGENCY STOP BY MRM (WITH ROADBLOCK RISK AND PENALTY RISK)

(2) CONTROLLER OR OPERATOR IS SUPPLIED DURING PASSAGE OF SECTION, BUT WARNING OF INSUFFICIENCY OF BAND NECESSARY FOR COMMUNICATION IS PREDICTED. ACCORDINGLY, IT IS DIFFICULT TO RECEIVE REMOTE DRIVING STEERING ASSISTANCE.

(3) IN CASE WHERE MANUAL DRIVING TRANSITIONBY DRIVER IS DIFFICULT DUE TO POOR HEALTH, RISK OF ABOVE SITUATION (1) OR (2) IS PRESENT. RECEPTION OF REMOTE DRIVING ASSISTANCE IN EARLY STAGE AND EVACUATION TO DETOUR ROAD, ETC. IS SELECTABLE. LIMITING POINT FOR EVACUATION UNDER REMOTE DRIVING ASSISTANCE

(4) IT IS ALLOWED TO DETERMINE WHETHER OR NOT PASSAGE THROUGH AUTOMATED DRIVING PROHIBITED SECTION WITH GUIDANCE BY LEADING VEHICLE IS ALLOWED AND MAKE PRIOR RESERVATION. HOWEVER, IN CASE WHERE LEADING VEHICLE AS RESERVED IS NOT USED, THERE IS RISK OF PENALTY SUCH AS STOP OF RECEPTION OF REMOTE DRIVING ASSISTANCE SERVICE IN FUTURE. ACCURATE DETERMINATION IS THUS REQUIRED.

RISK IN DETERMINATION AND THINKING
(a) REMOTE DRIVING ASSISTANCE OPERATOR IS NOT SUPPLIED IN SECTION REQUIRING TRAVELING UNDER CAUTION BY DRIVER
(b) HIGH POSSIBILITY OR LOW POSSIBILITY OF TRAFFIC BLOCKING CAUSED BY DECELERATION OR EMERGENCY STOP BY MRM IS RECOGNIZABLE.

51 CONTROLLER ICON
52 REMOTE DRIVING ASSISTANCE OPERATOR ICON
53 LEADING VEHICLE ICON
54 CONTROL CENTER ICON

EP 4 083 960 A1

F I G . 4 4

FIG.45

EP 4 083 960 A1

<table>
<tr><td colspan="2" align="center">**INTERNATIONAL SEARCH REPORT**</td><td colspan="2">International application No.<br>PCT/JP2020/043962</td></tr>
</table>

**A. CLASSIFICATION OF SUBJECT MATTER**
Int. Cl. G08G1/09(2006.01)i, G08G1/16(2006.01)i, G01C21/36(2006.01)i
FI: G08G1/16 A, G08G1/09 V, G01C21/36

According to International Patent Classification (IPC) or to both national classification and IPC

**B. FIELDS SEARCHED**

Minimum documentation searched (classification system followed by classification symbols)
Int. Cl. G08G1/09, G08G1/16, G01G21/36

Documentation searched other than minimum documentation to the extent that such documents are included in the fields searched
Published examined utility model applications of Japan    1922-1996
Published unexamined utility model applications of Japan  1971-2021
Registered utility model specifications of Japan         1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-190835 A (SOKEN INC.) 31 October 2019, paragraphs [0009], [0023], [0029], [0032], [0037]– | 1-3, 6-15, 17-18 |
| A | [0041], fig. 5, 6, paragraphs [0009], [0023], [0029], [0032], [0037]–[0041], fig. 5, 6 | 4-5, 16 |
| Y | WO 2019/082774 A1 (SONY SEMICONDUCTOR SOLUTIONS CORPORATION) 02 May 2019, paragraphs [0100]–[0102], fig. 6 | 1-3, 6-15, 17-18 |
| Y | JP 2015-141050 A (AISIN AW CO., LTD.) 03 August 2015, paragraph [0057], fig. 4, 5 | 1-3, 6-15, 17-18 |
| Y | JP 8-292715 A (HITACHI, LTD.) 05 November 1996, paragraph [0031] | 7-8 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>22.01.2021 | Date of mailing of the international search report<br>02.02.2021 |
|---|---|
| Name and mailing address of the ISA/<br>　　　Japan Patent Office<br>　　　3-4-3, Kasumigaseki, Chiyoda-ku,<br>　　　Tokyo 100-8915, Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2020/043962 |

C (Continuation).   DOCUMENTS CONSIDERED TO BE RELEVANT

| Category* | Citation of document, with indication, where appropriate, of the relevant passages | Relevant to claim No. |
|---|---|---|
| P, X | WO 2020/031370 A1 (MITSUBISHI ELECTRIC CORP.) 13 February 2020, paragraph [0020], [0038], [0045]-[0056], fig. 5-10 | 1-3, 14-15, 17-18 |

Form PCT/ISA/210 (continuation of second sheet) (January 2015)

INTERNATIONAL SEARCH REPORT

Information on patent family members

International application No.

PCT/JP2020/043962

| Patent Documents referred to in the Report | Publication Date | Patent Family | Publication Date |
|---|---|---|---|
| JP 2019-190835 A | 31.10.2019 | (Family: none) | |
| WO 2019/082774 A1 | 02.05.2019 | (Family: none) | |
| JP 2015-141050 A | 03.08.2015 | US 2016/0305787 A1 paragraph [0068], fig. 4, 5 | |
| JP 8-292715 A | 05.11.1996 | US 5917436 A column 7, line 11 to line 47 EP 738876 A2 | |
| WO 2020/031370 A1 | 13.02.2020 | (Family: none) | |

Form PCT/ISA/210 (patent family annex) (January 2015)

**REFERENCES CITED IN THE DESCRIPTION**

**Patent documents cited in the description**

- JP 2015141051 A
- WO 2019097944 A
- JP 2018038740 W
- WO 2019082774 A
- JP 2018000095 W
- WO 2018135318 A
- JP 2018171586 A
- JP 2019034078 W
- JP 2019079644 A